# EUROPEAN PATENT APPLICATION

(11) **EP 4 311 842 A2**
(43) Date of publication of application: **31.01.2024**
(21) Application number: 23216349.3
(22) Date of filing: 06.08.2021
(51) Int. Cl.: C08J 11/08

(54) **METHOD FOR PLASTIC PRE-TREATMENT AND SOLVENT-BASED PLASTIC RECYCLING**

(30) Priority: 07.08.2020 EP 20190051
(62) Divisional of application: 21755787.5
(71) Applicant: APK AG, 06217 Merseburg (DE)
(72) Inventor: HANEL, Hagen, 04103 Leipzig (DE); WOHNIG, Klaus, 14052 Berlin (DE)
(74) Representative: Kilger, Ute

(57) **Abstract**

The present invention relates to a method for downsizing, in particular shredding, of plastic material and removing dust from said downsized plastic material. The invention also relates to a method for solvent-based recycling a plastic material with an integrated step of addition of functional solid auxiliaries to the solution comprising the thermoplastic target polymer.

## Description

### Technical Field

The present invention relates to a method for downsizing, in particular shredding, plastic material comprising at least one target polymer, and removing dust from said downsized plastic material comprising at least one target polymer. The invention also relates to a method for solvent-based recycling a plastic material comprising at least one thermoplastic target polymer with an integrated step of addition of functional solid or liquid auxiliaries to the solution comprising the thermoplastic target polymer. The present invention also relates to a method for plastic recycling with an integrated extraction step. The present invention also relates to a method for removing solvents from suspensions or solutions comprising a dissolved thermoplastic target polymer. The present invention also relates to a method for removing additives and/or impurities from a fluidized form comprising a thermoplastic target polymer while being processed in an extruder, wherein the fluidized form comprising a thermoplastic target polymer is subjected to a counter-stream of at least one extractant. It also relates to a plastic waste recycling system for recycling a target polymer. Furthermore, the invention also relates to a polymer material obtained by the method of the invention.

### Background of the Invention

It is well known that plastic has a huge impact on the environment largely because it is in general not biodegradable. Each year several millions tons of plastic objects, such as plastic bags, pellets and plastic bottles, end up in the oceans and accumulate over time. Said plastic objects decompose very slowly and eventually form microplastics representing a huge environmental problem. Toxins such as DDT and BPA have been found to adhere to microplastics and aggravate said problem. Also onshore plastic waste can be found even in remote regions. Plastic waste, in particular microplastics, represents a danger to animal life and potentially to humans when meat or fish is consumed.

Plastic recycling offers a sustainable way of reducing the amount of plastic waste that is effectively produced and released into the environment. For this purpose various mechanisms of recycling plastic waste have been developed over time.

EP 0 359 106 A2 discloses a method of cleaning and recycling polluted plastics. In a closed system chips of plastic are washed in a washing solution and different types of plastic are separated. Then, the chips to be recycled are dried in a downstream stage. The discharge of harmful fumes is avoided and the solvent is treated and returned to the cycle.

DE 44 14 750 A1 relates to a process and an apparatus for cleaning viscose polymer melts possibly contaminated with paper, the impurities being segregated from the polymer melt by centrifuging.

DE 198 18 183 C2 relates to a method for separating the components of a product containing at least two plastic substances or a plastic substance and a metal substance. The product is heated to a softening temperature of a plastic substance, centrifuged at that temperature in the rotor of a centrifuge and then the plastic substance is disposed of separately.

EP 0 894 818 A discloses a process for the reclamation of soluble polymer or polymer mixtures from waste materials wherein (i) the polymer or polymer mixture is selectively dissolved from the polymeric material; (ii) unwanted insoluble components are optionally removed from the resulting solution; (iii) unwanted soluble components are optionally removed from solution; (iv) the polymer or polymer mixture is selectively precipitated by means of turbulent mixing with a precipitating agent in the presence of a gas or gas mixture; (v) separation of the precipitated polymer or polymer mixture from the liquid phase; and (vi) optionally drying the polymer or polymer mixture. Preferably further soluble polymer or mixture is dissolved from the separated insoluble components after separation from the resulting suspension and/or the insoluble components undergo a final water washing step. The polymer solution undergoes a chromatographic, preferably a gel permeation chromatography and/or solid phase extraction, preferably with carbon and/or a liquid-liquid extraction step.

DE 40 33 604 A1 relates to a recovery of soluble plastics from waste, wherein the plastic to be recovered is selectively dissolved out of the plastic-containing waste by suitable solvents. The thus obtained solution is injected into a container filled with a medium which is a non-solvent for the plastic. The temperature of this medium must in this case be above the boiling point of the solvent in which the plastic was dissolved. As a result, the solvent evaporates and the plastic to be recovered is released. The evaporated solvent is recovered. The precipitation of the plastic shall be quantitative in that one injects the plastic solution in a very high excess of a non-solvent for this plastic.

WO 2018/114046 A1 discloses a centrifuge for separating at least one solid from a waste material suspension the suspension comprising the solid and a polymer solution with at least one solvent and at least one plastic dissolved therein.

US 5,728,741 A discloses a process for recycling waste polymeric material comprising a mixture of waste polymeric material and includes the steps of granulating the chopped mixture into fragments at least about 100 times smaller than the size of the waste polymeric material; and extruding the ground mixture at a temperature of less than about the *T*_{g} of the lowest melting waste aliphatic polyamide polymeric material.

US 2007/0265361 A1 relates to a method for recycling polyesters or polyester mixtures from polyester-containing waste, in which the polyester or the polyester mixture is dissolved in a solvent and subsequently free-flowing particles are precipitated therefrom with a precipitant. The precipitant is chosen such that subsequent separation of precipitant and solvent is made possible in a simple manner. US 2008/0281002 A1 relates to a method for recycling plastic materials which contain at least two polymers, copolymers or blends thereof based on polystyrene. The plastic material is thereby mixed with a solvent for the polymers, copolymers or blends. Subsequently a precipitation is effected by addition of a corresponding precipitant so that then the gelatinous precipitation product can be separated from the further components of the plastic material. The method is used for recycling of any plastic materials, in particular of plastic materials from electronic scrap processing and from shredder light fractions.

US 4,968,463 A discloses a process for making molded or extruded objects from waste containing plastic materials comprising preliminary physical processing of said waste, drying said waste, preheating to a temperature of from 80°C to 160°C, kneading at a temperature of from 120°C to 250°C, and injection molding or extrusion.

WO 2011/082802 A1 relates to a method of recycling waste material comprising at least one polymer and at least one material to be separated, in which a) at least one swelling agent is added to form a polymer gel, and b) at least one impurity which is not soluble in the is separated from the polymer gel by means of filtration or sedimentation.

WO 2017/013457 A1 discloses a processing apparatus for processing waste material comprising thermoplastic material, particularly for processing crushed waste material, the processing apparatus comprising a drying apparatus - adapted for drying the waste material by means of an air flow, a melting apparatus adapted for melting the waste material being subjected to drying by the drying apparatus, a sterilizing apparatus adapted for applying sterilizing heat treatment of the waste material subjected to melting by the melting apparatus, a heat recovery channel extending between the drying apparatus and the melting apparatus, and a draining channel adapted for draining of fluid generated in the drying apparatus during drying, connected to the drying apparatus and to a flue of the melting apparatus.

WO 1993/001036 A1 discloses a method of processing polyolefin waste material, wherein extraction is used to remove the foil ingredients and polyethylene waxes without dissolving the plastic material.

WO 2017/003804 A1 discloses a process for purifying polyethylene, wherein impurities from the polymer matrix are removed via extraction without dissolving the plastic matrial.

Some of the recycling techniques described above shred particles and immediately melt them for extrusion. However, this requires waste material of a high purity or results in polymer pellets and polymer products of low quality.

Other recycling techniques are solvent-based methods, wherein the target polymer is transferred to a solution. An advantage of this method is that isolation of a target polymer is mostly easier if plastic waste is transferred into a solution or suspension. However, in addition to the target polymer numerous undesired impurities are transferred to the solution as well. When the polymer solution is concentrated and the solvent is removed, e. g. through evaporation and/or extrusion, the impurities still remain in the mixture together with the target polymer. Consequently, the resulting recycled polymer material, e.g. obtained in a form of pellets or granulates, will contain these impurities. The quality of such contaminated material is subsequently lower compared to a virgin polymer, what restricts its further applications. For example, recycled polymeric materials containing toxic impurities cannot be used for packaging food.

Some of the methods of the prior art try to solve the issue by means of washing the plastic material with a liquid or solid-liquid extraction in order to reduce the content of impurities prior to the dissolution step. However, with these methods it is hardly achievable to obtain a polymer essentially free of undesired impurities. An extractant used to remove undesired components needs to penetrate into a polymer matrix what can be easily achieved for the surface regions, but is quite complicated for the inner area. As a result, mainly the surface area impurities are removed, whereas the inner parts of the polymer matrix still contain a significant amount of impurities.

Other recycling techniques dissolve polymers, but the recovery of polymers from a solution represents a challenge. If plastic waste is transferred into a solution or suspension this can help in isolation a polymer that is dissolved. Some polymers float in water and non-floating objects can be separated. Other polymers dissolve in suitable solutions. In the latter case solvent may be removed by evaporation or precipitation. However, said processes require a lot of energy and considering the worldwide production of several hundred million tons of plastic each year even small energy reductions in the recycling process may have a huge impact. Also often small molecule impurities are not removed if said small molecules have a high boiling point. Also when new polymers are produced by polymerization reactions the removal of solvent can be a challenge in view of the above problems associated with prior art.

Pure polymers often demonstrate poor resistance to external factors (such as extreme temperatures or mechanical stress) during their processing or end-use application. In order to improve stability, process-ability of polymers, enhance the service life of the polymer product certain additives are commonly added to polymer matrix.

Polymer additives can be classified as polymer stabilizers or functional agents. Polymer stabilizers are essential to practical use, because they help to maintain the inherent properties and other characteristics of plastic material by suppressing the oxidative degradation promoted by high temperature and ultraviolet exposure during use. Functional additives are added to enhance the mechanical strength of plastics or impart new functional properties, such as flexibility or flame retardancy, hence expanding the scope of application of plastics and increasing their commercial value. Further classes of additives include lubricants, antistatic agents, biocides.

Post-consumer plastic is often unusable in the form in which it arises or is collected. One of the main problems in post-consumer plastics recycling is degradation of polymers during their lifetime. In order to ensure that a recycled material may possess the necessary quality to guarantee long-term stability for the intended application, addition of certain chemicals is often necessary. There is a variety of additives available for this purpose, e.g., antioxidants, light stabilizers, color hold agents, thermostabilizers, etc.

The recycling techniques of the prior art attempt to diminish negative effects of polymer degradation by addition of stabilizers. However, these re-stabilization techniques lack to achieve perfect distribution of additives, in particular solid additives, in the polymer matrix.

Therefore, the final recycled product contains the regions with different concentrations of the additives. There are some regions which are over-saturated with the stabilizers, whereas certain regions contain the additives in insufficient quantities. Consequently, some parts of the recycled plastic material are more exposed to oxidative degradation promoted by high temperatures and UV-irradiation. The problem may be solved by adding the additives in higher quantities so that every region of the recycled product contains a sufficient quantity to ensure long-term stability for the intended application. However, this approach inevitably increases the costs of the recycling process. In addition, on the one hand, presence of stabilizers in polymer matrix in higher quantities improves stability of the recycled product, but on the other hand it may have negative impact on mechanical properties of polymers, if the additives interfere with the polymer matrix so much that alignment of the molecular chains to build a regular structure is hindered to some extent. Also, some additives are hazardous compounds and adding those in higher quantities may be impossible at all. At present the methods of the prior art do not provide plastic waste recycling techniques which would allow optimal dosage and distribution of solid functional auxiliaries.

Downsizing plastic material derived from plastic waste, due to cutting or shredding processes prior to solution-based recycling process of polymers, creates a lot of fine dust that is not dissolved, and thus are not only not included into the solvent-based recycling process, but also compromise the quality of the recycling end product. It is therefore also an object of the present invention to improve the efficiency of incorporation of plastic waste into solvent-based recycling processes, as well as improve the quality of the recycling end product, wherein essentially all of the polymer provided to the downstream recycling process, comprising dissolving polymers in solvents, is included, and wherein the quality of the recycling end product is improved.

Prior art in the field of plastic shredding and sorting is as follows.

DE3932366 (A1) discloses a process for removing dust from shredded solid waste material, comprising plastic material, by air classification.

DE19651571A1 discloses a recycling method of waste comprising plastic material, wherein the waste is classified by air classification, or a combination of air classification and sieving for the purpose of providing a more homogenous plastic material, for subsequent wet processing with water, and extraction.CN108359130A discloses a plastic recycling process, comprising classifying plastic and removing impurities contained in the plastic, crushing the plastic through a crusher to obtain plastic granules, followed by alkalization treatment, acidification treatment and water rinsing, wherein rinsing the granulated plastic granules is conducted at a high temperature.

WO2019024950A1 discloses a waste processing method of components that make up used beverage cartons, comprising plastic and non-plastic components, wherein shredders and air separators are used in multiple steps to provide an enrichment of plastic material for downstream purposes.

### Detailed Description of the Invention

The subject-matter of the present invention relates to a method for pre-treatment and solvent-based recycling of plastic material, comprising at least one thermoplastic target polymer, wherein the method comprises the following stages:
i) optionally sorting said plastic material;
ii) optionally pre-treating said plastic material;
iii) fluidizing said plastic material, wherein said fluidizing preferably comprises the following steps
   a. dissolving said plastic material to obtain a solution,
   b. optionally purifying said solution by means of solid-liquid or liquid-liquid purification,
   c. optionally separating said thermoplastic target polymer from the solution obtained in step b;
iv) optionally post-treatment of the plastic material obtained in step iii).

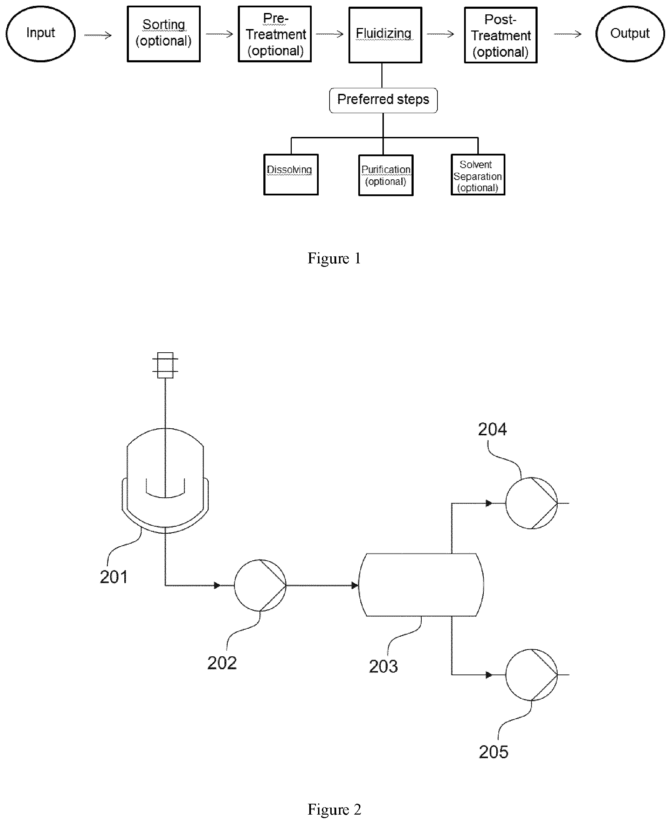

Said method is schematically depicted in Figure 1.

In one embodiment the subject matter of the present invention relates to a method for downsizing, in particular shredding, of plastic material comprising at least one target polymer, and removing dust from said downsized plastic material comprising at least one target polymer, or de-dusting, wherein the plastic material, once downsized and de-dusted, is subsequently dissolved in an organic solvent or group of solvents comprising at least one organic solvent in order to form a suspension or solution comprising at least one dissolved target polymer, thereby allowing more efficient recycling of target polymers, in particular thermoplastic target polymers. The present invention further relates to the dissolution of said downsized and de-dusted plastic material comprising at least one target polymer in an organic solvent, or group of solvents comprising at least one organic solvent, wherein the downsizing or shredding step, the de-dusting step and the dissolution step of said de-dusted plastic material comprising at least one target polymer, are integrated in a plastic recycling process that comprises a plastic waste recycling system for recycling plastic material comprising at least one target polymer, in particular a thermoplastic target polymer, further comprising a solvent removal system that comprises (but is not limited to) the use of a cross-flow filtration system for the removal of solvent from the target polymer, in particular a thermoplastic target polymer.

It is also an object of the present invention to provide an improved method for providing plastic material comprising at least one target polymer, in particular a thermoplastic target polymer, in a form that is suitable for efficient plastic recycling, in particular solvent-based plastic recycling.

It is further an object of the present invention to provide an improved method for recycling plastic material, in particular plastic waste, comprising at least one target polymer, in particular a thermoplastic target polymer, wherein the provision of said plastic material comprising at least one target polymer is suitable for recycling processes comprising solvent-based recycling processes, particularly solid-liquid separation (SLS) processes, comprising the production of a dissolved thermoplastic target polymer that is essentially free of insoluble dust and thus overcomes the problems associated with insoluble dust in said recycling methods and/or requires less energy than solvent-based recycling techniques known in the prior art.

Because every SLS process is selective for a range of particle sizes, not all sizes of cut plastic material are suitable for subsequent recycling processes, particularly solvent-based recycling processes. Typical particle size selectivity, for example when applying centrifugation, is about 4-10 µm in aqueous solutions, using a decanter (Zogg *et al*.). In polymer suspensions or solutions, the particle selectivity shifts to larger particle sizes, depending on the viscosity of the solvent, wherein the higher the viscosity, the higher the particle size towards which the SLS process is selective (Zogg *et al*.). Consequently, during a plastic material downsizing process, particularly if dust is formed during a cutting or shredding process, said dust may have physical properties that impedes its dissolution in a solvent, e.g. the dust may float at the surface of the solvent, which means that the dust is not susceptible to downstream solvent-based recycling steps in a solvent-based recycling process, thus compromising the efficiency of the recycling process and the quality of the recycling product.

If no de-dusting step is implemented prior to the provision of downsized or shredded plastic material to the solvent-based recycling process, then the plastic suspension or solution that is provided to subsequent steps of solvent-based recycling will also contain plastic particles that are not at all susceptible to solvent-based recycling processes, which may have the consequence that plastic recycling by use of particular solvent-based recycling methods, such as film applications, would be compromised or not possible at all.

Therefore, in order to improve the feasibility, efficiency and/or the quality of the recycling product and/or process, it is necessary to reduce, or ideally eliminate dust before bringing the plastic waste in suspension or solution for solvent-based recycling processes.

It is therefore an object of the present invention to use a method that provides downsized plastic material of limited size distribution that is suitable for downstream recycling processes comprising solvent-based recycling processes, wherein downsizing occurs by a cutting or shredding process, comprising the use of a cutting or shredding device that cuts or shreds the plastic material into small pieces, wherein the cut or shredded pieces of plastic material cover a range of sizes, and wherein the fraction of dust not susceptible to dissolution in a solvent and subsequent recycling steps is essentially eliminated by the implementation of a de-dusting process comprising a dust-free size reduction system and a dust removal system.

It is also an object of the present invention to provide a plastic waste recycling system for recycling plastic waste comprising a thermoplastic target polymer, wherein the plastic material is provided by a dust-free downsizing process herein claimed.

It is therefore object of the present invention to provide a multistep method, comprising downsizing and/or size classification, that provides downsized plastic material of limited size distribution suitable for downstream recycling processes comprising solvent-based recycling processes in a more-than-1-component recycling system.

It was surprisingly found that with the herein described combination of steps of downsizing and size classification, particles with a particular range of sizes can be removed from plastic waste in a controlled, adjustable and particularly energy efficient manner, thus allowing the integration of the herein described downsizing process into a particularly efficient plastic recycling process comprising a solvent-based recycling process.

Specifically provided herein is a method for recycling plastic material comprising at least one target polymer, wherein the method comprises the following dedusting steps:
i-1) providing said plastic material, in particular plastic waste;
ii-1) downsizing said plastic material;
iii-1) classification of the downsized material obtained after step ii-1) by particle size and/or particle weight, in particular by sieving, or contacting of said downsized plastic material with airstream, preferably by means of passing said downsized plastic material through air counter-flow, or a combination thereof;
wherein the downsized plastic material obtained after step iii-1) is essentially free of particulate matter, and wherein essentially free of particulate matter means that at least 99 weight% of particles < 300µm, in particular < 100 µm have been removed from the downsized plastic material.

In one embodiment, successful dedusting can be checked by applying sieve analysis as described in German DIN norm 66165.

In one embodiment, subsequent steps are plastic recycling processes. In another embodiment, said subsequent steps are plastic recycling processes, in particular solvent-based recycling processes.

The above mentioned steps i-1) to iii-1) do not necessarily signify a specific sequence or number of steps. However, preferably the steps of the method are implemented with ascending numbers, i.e. in the order as shown above, and with the proviso that the provision of the plastic material or waste requiring downsizing for further processing precedes the downsizing process of step ii-1), and that the plastic material provided to downstream steps comprises dissolution of downsized plastic waste that is dust-free.

In one embodiment, the material obtained by the claimed method has particle size distribution from 1 mm to 25 mm, preferably 100 µm to 25 mm. In another embodiment the material obtained by the claimed method has particle size ≥ 100 µm.

In one embodiment, the method for recycling plastic material comprising at least one target polymer comprises the following additional steps:
iv-1) adding a solvent or a mixture of solvents to the material obtained after step iii-1) to obtain a solution or suspension comprising said target polymer, preferably using a heating system, wherein said target polymer is essentially soluble in said solvent or mixture of solvents.

In one embodiment, the method for recycling plastic material comprising at least one target polymer comprises the following additional steps:
v-1) preferably purifying said solution or suspension obtained after step iv-1), in particular by means of mechanical solid-liquid separation;
vi-1) optionally, if the solution comprises at least one polymer originating from post-consumer plastic waste, adding a solution cleaning step for decolorization and an additional odor treatment step;
vii-1) separating of said target polymer from said solution or suspension;
viii-1) preferably degassing and/or extrusion of said target polymer.

In one embodiment, the method for recycling plastic material comprising at least one target polymer comprises the following steps:
i-1) providing said plastic material, in particular plastic waste;
ii-1) downsizing said plastic material;
iii-1) classification of the downsized material obtained after step ii-1) by particle size and/or particle weight, in particular by sieving, or contacting of said downsized plastic material with airstream, preferably by means of passing said downsized plastic material through air counter-flow, or a combination thereof;
   wherein the downsized plastic material obtained after step iii-1) is essentially free of particulate matter, and wherein essentially free of particulate matter means that at least 99 weight% of particles < 300µm, in particular < 100 µm have been removed from the downsized plastic material;
iv-1) adding a solvent or a mixture of solvents to the material obtained in step iii-1) to obtain solution or suspension comprising said target polymer, preferably using an agitator and/or a heating system, wherein said target polymer is essentially soluble, wherein essentially soluble means that the target polymer is at least 99% soluble in said solvent or said mixture of solvents, and wherein the saturation of said polymer solution in said solvent or mixture of solvents is reached above 1 weight%, more preferably above 2 weight%, even more preferably above 5 weight%, and most preferably at or above 10 weight%;
v-1) preferably purifying said solution or suspension, in particular by means of mechanical solid-liquid separation;
vi-1) optionally, if the solution comprises at least one polymer originating from post-consumer plastic waste, adding a solution cleaning step for decolorization and an additional odor treatment step;
vii-1) separating of said target polymer from said solution or suspension;
viii-1) preferably degassing and/or extrusion of said target polymer.

In one embodiment, the target polymer is a thermoplastic target polymer.

In one embodiment, the target polymer is selected from the group comprising polyolefins, polyamides and combinations thereof. In one embodiment, the target polymer is low-density polyethylene (LDPE). In one embodiment, the plastic waste comprises more than one target polymer. In one embodiment, the plastic waste comprises at least one target polymer.

In one embodiment, the at least one target polymer is a polyolefin. In one embodiment, said at least one polymer is selected from multilayer plastics comprising multilayer films, wherein said multilayer plastics comprise polyethylene (PE), in particular polyethylene and polyamides (PE and PA), more in particular polyethylene and polyethyleneterephtalate (PE and PET), or more in particular polyethylene and polypropylene (PE and PP). In one embodiment, said multilayer plastics comprise polyolefins and are selected from post-industrial waste.

The plastic waste preferably comprises one or more thermoplastic target polymers selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). Polyethylene (PE) is preferably selected from high-density polyethylene (HDPE) and low-density polyethylene (LDPE) or contains both. The method was found to be particularly suitable for recycling polyethylene (PE), in particular low-density polyethylene (LDPE).

In one embodiment, polyamides are either PA6, PA66, or PA6.66. In one embodiment, the polyolefins are either LDPE, HDPE, or PP.

The plastic waste can be two-dimensional or three-dimensional plastic waste, wherein two-dimensional plastic waste comprises flexible packaging, such as plastic foils that may be single-layer plastic foils, or multilayer plastic foils. Three-dimensional plastic waste comprises rigid packaging, wherein said rigid packaging is differentiated by wall thickness. In on embodiment, the wall thickness of rigid packaging is >300 µm and the wall thickness of non-rigid or flexible packaging is ≤300 µm.

In one embodiment, the plastic waste is only rigid packaging, comprising PS, PET, HDPE, and/or PP products, or polyamide that may be fiber-reinforced, or a combination thereof, particularly comprising plastic bottles that were used for storing food and non-food articles, e.g. fruit juice, milk, shampoo, soap, or cleaning agents

In another embodiment, the plastic waste is only flexible packaging, comprising PE/PA compound packaging, particularly PE/PA multilayer packaging. Said only flexible packaging may have been used for non-food or food packaging, e.g. cheese, meat, fish, or bakery product packaging.

In one embodiment, the plastic waste is both rigid and flexible plastic packing.

In one embodiment, said rigid or flexible plastic waste is post-industrial waste. In another embodiment, said rigid or flexible plastic waste is post-consumer waste.

In one embodiment downsizing said plastic material comprises at least one of shredding, cutting, slicing, ripping, shaving, tearing, slashing, carving, cleaving, dissevering, hacking, incising, bsevering, shearing, fragmenting, fraying, lacerating and grinding of said plastic material.

In one embodiment, step ii-1) is performed by a downsizing device selected from shredders, grinders, chippers, granulators, hammer mills, shear shredders and all-purpose shredders.

In another embodiment, step ii-1) is performed in a shredder, particularly a single-shaft shredder, more particularly in a cooled single-shaft shredder. Single-shaft shredders or cooled single-shaft shredders, in particular single-shaft shredders or cooled single-shaft shredders that are single-wave shredders, are known in the prior art. In another embodiment, the single-shaft shredder is a dust-free size reduction system.

Size classification refers to the sorting of material objects according to their size, wherein size is defined by dimensional parameters comprising average or non-average object diameter, or radius, length and/or width and/or depth, or a combination thereof, or any other geometric measure that defines the object by its physical appearance. Size may also be expressed by parameters comprising density and/or shape, or a combination thereof.

Within the context of the present invention, size may be defined by parameters comprising shape, density and/or object diameter, or radius, and/or length and/or width and/or depth, or combinations thereof. Further, within the context of the present invention, size of the plastic material may be defined by operation of the size classification unit on the downsized or shredded plastic material, wherein the size classification unit classifies the downsized or shredded plastic material into different size groups. In one embodiment of the present invention, the size classification unit generates at least two size groups, one that comprises the plastic material that is < 300 µm, preferably < 100 µm, and one that comprises the plastic material that is > 100 µm, preferably > 300 µm, wherein the former class is removed from further processing and the latter class provided to step iv-1) of the present invention.

In one embodiment, the downsized plastic material maybe classified by weight. In another embodiment, the downsized plastic material maybe classified by weight, wherein higher weight correlates with higher size. In yet another embodiment, the downsized plastic material maybe classified by weight, wherein higher weight correlates with higher density, but not with higher size. In yet another embodiment, the downsized plastic material maybe classified by weight, wherein higher weight correlates with higher density, but not with necessarily with higher size, wherein the downsized plastic material may not be removed by the classification unit due to high density and weight. For example, a plastic material may be < 300 µm or < 100 µm, but may not be removed by air classification due to its reduced size-to-weight ratio. In one embodiment the size classification unit may be adjusted, comprising increasing the airflow velocity if the classification unit is an air classification unit, or reducing the size cut-off of the sieve if the classification unit is a sieve. In another embodiment, size classification units may be combined, comprising combining air classification units with sieves.

Size classification that is subject matter of the present invention refers to the use of any size classification unit, or a size classifier known in the prior art, comprising air classification units or air classifiers, sieves.

Sieves for size classification of downsized plastic material may be selected from any sieves known in the prior art suitable for obtaining dust-free shredded plastic material that is subject matter of the present invention. Sieves for size classification of downsized plastic material may be selected from bow screen sieves, shaking screen sieves, vibrating screen sieves, drum screen sieves, spreading screen sieves, resonance screen sieves, or any other known sieves known in the prior art suitable for obtaining dust-free shredded plastic material that is subject matter of the present invention, or combinations thereof. Sieves for size classification of downsized plastic material may be motorized sieves or non-motorized sieves,

In one embodiment, size classification by particle size and/or particle weight of the downsized material obtained after step ii-1), is conducted in particular by sieving, or contacting of said downsized plastic material with airstream, preferably by means of passing said downsized plastic material through air counter-flow, or a combination thereof.

In one embodiment, the downsized plastic material obtained after step iii-1) is essentially free of particulate matter, wherein essentially free of particulate matter means that at least 99 weight% of particles < 300µm, in particular < 100 µm have been removed from the downsized plastic material.

In one embodiment, step iii-1) is performed with an air classifier. In one embodiment, the air classifier is a counter-flow separator. In another embodiment, the air classifier is a zigzag air classifier. Counter-flow separators or zigzag air classifiers are known to the person skilled in the art. In one embodiment, the zigzag air classifier is a zigzag wind sifter.

In some embodiments, the shredder used in the above-mentioned step ii-1) is combined in one step with an air classifier of step iii-1), wherein said shredder and air classifier are used in combination to achieve shredding and de-dusting in one step. In some embodiments, the shredder of the above-mentioned step ii-1) is combined with an air classifier of step iii-1), wherein said shredder and air classifier are utilized in combination to achieve shredding and de-dusting for plastic recycling that is subject matter of the present invention.

In some embodiments, downsized plastic material of the above-mentioned step ii-1) is contacted with the particle classifier in the above-mentioned step iii-1), wherein the particle classifier comprises an airstream, and wherein the particles are classified or essentially removed, in particular by means of passing said downsized material through air counter-flow.

In some embodiments, if size classification of downsized material obtained after step ii-1) comprises contacting said downsized plastic material obtained after step ii-1) with airstream that is air counter-flow, the airflow of the air counter-flow is adjustable, wherein adjustable parameters comprise airflow velocity, duration, direction and multiplicity. Adjusting airflow velocity means that the airflow can be adjusted to a range of different airflow velocities or intensities. Adjusting airflow duration means setting the amount of time the airflow is being applied to the downsized plastic waste that is de-dusted in the dust removal system. Adjusting airflow direction means that the mean direction of the airflow relative to the mean direction of the downsized plastic waste flow, before the airflow contacts the downsized plastic waste, is changed. Adjusting airflow multiplicity means that the number or the amount of airflow sources actively used in the de-dusting step in the air classifier or air classification system, is changed.

In one embodiment, airflow velocity is < 10 m/s, particularly < 5 m/s. In another embodiment, airflow velocity is > 10 m/s. In another embodiment, airflow velocity is > 10 m/s, then reduced to < 10 m/s, particularly< 5m/s. In another embodiment, airflow velocity is < 5m/s, particularly < 10 m/s, then increased to > 10 m/s.

In one embodiment, airflow duration is <30 s, particularly < 15s. In another embodiment, airflow duration is continuous. In another embodiment, airflow duration is synchronized with the operation of the plastic shredder, wherein in particular the airflow is active if downsized plastic waste is inserted in the air classifier system. In another embodiment, the duration of the airflow is continuous, or optionally determined by the person skilled in the art in function of the amount of time the input downsized plastic material requires in order to pass through the air classifier or recycling system.

In one embodiment, there is no airflow periodicity or frequency and the airflow is continuous. In another embodiment, the airflow follows a periodicity or frequency pattern.

In another embodiment, the airflow is a counter-airflow, wherein the direction the counter-airflow is in counter-current to the direction of the flow of the downsized plastic material that is provided to the air classifier. In another embodiment, the airflow is a counter-airflow the direction of which is in counter-current to the direction of the flow of the downsized plastic material that is provided to the air classifier, wherein the direction of the airflow and the direction of the flow of the downsized plastic material are not collinear, and wherein the direction of the airflow or downsized plastic waste flow means the mean flow direction, respectively. In another embodiment, said direction of the airflow and said direction of the flow of the downsized plastic material are in opposite directions. In one embodiment, the direction of the airflow is such that when the airflow impinges on the plastic waste that flows through the air classifier, the dust is diverted or removed from the bulk flow of the downsized plastic waste.

In some embodiments, the airflow is a cross-flow that is transversal to the flow of the downsized plastic material. In one particular embodiment, the airflow is a cross-flow that is perpendicular to the flow of the downsized plastic material.

In one embodiment, the number of airflow sources is 1, or 2, or >2, or particularly >4. In another embodiment, the airflow comprises 1, or 2, or >2, or particularly >4 stages of separation. In one embodiment, a stage of separation corresponds to a particular velocity of the airflow.

In some embodiments, the velocity of the airflow is in a range of from 1 to 10 m/s, preferably of from 3 to 5 m/s.

In some embodiments the duration of the airflow is up to 60 seconds, preferably up to 30 seconds.

In some embodiments the air classification is performed more than once. In some embodiments the air classification is performed from 2 to 6 times, preferably 3 times.

In some embodiments, certain combinations of velocity, duration, direction and multiplicity as outlined above may be used that will occur to the person skilled in the art based on the best de-dusting results for a particular plastic material comprising a one or more target polymers.

In some embodiments, the air flow may have a defined temperature. In another embodiment said temperature may be regulated using a heating or cooling device. In yet another embodiment, said temperature is equivalent to ambient or room temperature.

In some embodiments, the above-mentioned step iii-1) comprises a plastic material size classifier that is not an air classifier.

In some embodiments, said size classifier that is not an air classifier is a sieve, wherein the downsized plastic material is filtered with the sieve, in particular by means of passing said dust through said sieve, and wherein the particle size permeability of the sieve is adjustable. In some embodiments, the sieve retains plastic material sized at or above 300 µm, preferably at or above 100 µm.

In one embodiment, size classification in step iii-1) is conducted by a size classifier comprising a sieve or an air classifier, or a combination thereof.

It is clear to the person skilled in the art that any of the above mentioned adjustments are subject to optimization and depend on the specific material used and on the particular size range of particles to be filtered or classified.

In another embodiment, polymer material is obtained by a method comprising any one of the previous embodiments.

According to some embodiments, obtaining the suspension or solution in accordance with the above-mentioned step iv-1) comprises dissolving said thermoplastic target polymer at least partially in said solvent in a vessel, in particular closed and/or gastight vessel comprising the solvent, wherein an agitator for stirring the suspension or solution is provided. The agitator may be connected to said vessel and/or it may be disposed in said vessel. It is in some embodiments possible to dispose the agitator within the vessel without connection to the vessel, e.g. by hanging the agitator into the vessel from above. However, often the agitator is connected to the vessel, in particular closed and/or gastight vessel. The suspension or solution is preferably stirred for at least 15 min, in particular for at least 30 min. Preferably, the suspension or solution is stirred for less than 6 h, in particular for less than 2 h (120 min). It was found that stirring expedites dissolving the thermoplastic target polymer in the solvent.

In one embodiment of step vi-1), if the solution comprises at least one polymer originating from post-consumer plastic waste, a solution cleaning step for decolorization is added, and an additional odor treatment step is added. In one embodiment, the decolorization step is an adsorption process based on mixtures of activated carbon, Fuller's earth, and/or quartz sand, and the odor treatment step is a diffusion process, based on continuous air exchange in a silo to generate a concentration gradient of odor-causing components that are in pellet form, and the atmosphere. In one embodiment, the decolorization step is an adsorption process based on mixtures of activated carbon, Fuller's earth, and/or quartz sand. In another embodiment, the odor treatment step is a diffusion process, based on continuous air exchange in a silo to generate a concentration gradient of odor-causing components that are in pellet form, and the atmosphere.

In some embodiments the thermoplastic target polymer has an average molecular mass of 50 to 20.000 kDa, in particular of 100 to 4.000 kDa, in particular preferred of 200 to 2.000 kDa. In some embodiments the thermoplastic target polymer has a number average molecular weight of 50 to 20.000 kDa, in particular of 100 to 4.000 kDa, in particular preferred of 200 to 2.000 kDa.

Besides the thermoplastic target polymer other non-target polymers may be present. Preferably non-target polymers do not dissolve in the solvent under the conditions of step iv-1) or have a lower solubility under said conditions than the thermoplastic target molecule. If for example plastic waste is recycled the non-target polymers are preferably present to a lesser degree than the thermoplastic target polymer. Preferably in the suspension or solution non-target polymers are dissolved in an amount of less than 5 wt%, in particular less than 3 wt%, in particular preferred less than 1 wt%, with respect to the total amount of polymer that is dissolved.

It is preferred if the suspension or solution is heated in the above-mentioned step iv-1) to an average temperature above 20°C, in particular to an average temperature above room temperature of 25°C, in particular preferred to an average temperature of more than 40°C. In some embodiments the suspension or solution has an average temperature of at least 50°C, in particular of at least 80°C. In some embodiments during dissolving of the thermoplastic target polymer in the solvent, the solvent is heated in step iv-1) to an average temperature of 20 to 160°C, in particular of 40 to 140°C, preferably of 50 to 100°C. In some embodiments the suspension or solution is heated to an average temperature of 60 to 180°C. For low-density polyethylene (LDPE) as a thermoplastic target polymer an average temperature of 80 to 120°C was found to be particularly suitable for dissolving said polymer. For high-density polyethylene (HDPE) as a thermoplastic target polymer an average temperature of 100 to 140°C was found to be particularly suitable for dissolving said polymer. For polypropylene (PP) as a thermoplastic target polymer an average temperature of 120 to 160°C was found to be particularly suitable for dissolving said polymer. In some embodiments the average temperature in the above described vessel of the suspension or solution during step iv-1), in particular when dissolving the thermoplastic target polymer, is above 20°C, preferably above 40°C, in particular above 60°C, in particular preferred above 80°C. This may also be the average temperature of the suspension or solution in said vessel comprising said solvent or suspension.

In some embodiments the peak temperature of the suspension or solution during the above-mentioned step iv-1), in particular when dissolving the thermoplastic target polymer, is above 20°C, preferably above 40°C, in particular above 60°C, in particular preferred above 80°C. This may also be the peak temperature of the solvent and/or suspension or solution in said vessel comprising said solvent or suspension. It is to be understood that the average temperature is preferably selected in such a way that a most - if not all - of the thermoplastic target polymer is dissolved and/or remains dissolved in said solvent.

In some embodiments purifying said suspension or solution comprises removing undissolved components of said suspension or solution by mechanical solid-liquid separation. In some embodiments the mechanical solid-liquid separation is achieved by a centrifuge. In some embodiments a sieve, in particular a metal sieve, may be used alternatively or additionally for mechanical solid-liquid separation.

In some embodiments said solid-liquid separation removes any particles that weigh more than 1000 mg, in particular more than 100 mg, preferably more than 10 mg. In some embodiments the solid-liquid separation removes any particles that have a size of more than 50 mg, in particular more than 5 mg, preferably more than 1 µm. After solid-liquid separation the suspension preferably separates into a solution comprising the thermoplastic target polymer and solid particles.

In some embodiments the above-mentioned step v-1) comprises removing at least 50 % by weight, in particular at least 90 % by weight, preferably 99 % by weight, of any substances that have not been dissolved, preferably by centrifugation.

The suspension or solution provided in the above-mentioned step iii-1) preferably comprises one or more at least partially dissolved thermoplastic target polymers selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). Polyethylene (PE) is preferably selected from high-density polyethylene (HDPE) and low-density polyethylene (LDPE) or contains both. The method was found to be particularly suitable for recycling polyethylene (PE), in particular low-density polyethylene (LDPE).

In some embodiments the above-mentioned step iv-1) is conducted at a pressure of 0,5 bar to 5 bar, in particular 0,8 bar to 2 bar. In some embodiments step iv-1) is conducted at a pressure of 1 bar to 1.2 bar, in particular at atmospheric pressure (no extra pressure has to be applied in this case).

In some embodiments, the above mentioned steps i-1) and/or ii-1) and/or iii-1) and/or iv-1) and/or v-1) and/or vi-1) and/or vii-1) and/or viii-1) are conducted in an environment containing less than 15 % by weight of oxygen, in particular less than 5 % by weight of oxygen, preferably less than 1 % by weight of oxygen, in particular within the liquid and/or gaseous phase. Not all steps have to contain a gaseous and a liquid phase environment.

In some embodiments the solvent is at least partially recycled for dissolving thermoplastic target polymer to provide more suspension or solution comprising the dissolved thermoplastic target polymer in accordance with the above mentioned step iv-1). In some embodiments the solvent for reuse is purified by evaporation of the solvent and condensation and/or by distillation, wherein impurities are removed by evaporation and the solvent remains. Often the best approach depends on the boiling point of the solvent.

On some embodiments the concentrated thermoplastic target polymer obtained in the above mentioned step v-1) has the consistency of a gel. It may be then called a thermoplastic target polymer gel.

In some embodiments polymer pellets are formed in the above-mentioned step viii-1). In some embodiments products such as foils, pipes, bottles, pallets, lawn grids or building materials for houses are formed from said pellets or directly from concentrated thermoplastic target polymer obtained in step vii-1) by blow molding, extrusion, pressing and/or injection moulding. In some embodiments said polymer pellets are received from the outlet opening of an extruder.

In some embodiments the above mentioned step vii-1) comprises forming a polymer melt prior to extrusion and/or forming pellets or products using a pellet cutter after extrusion. Residual solvent is more efficiently removed from such a polymer melt.

Preferably providing the suspension or solution comprising the dissolved thermoplastic target polymer is achieved by dissolving a thermoplastic target polymer that is comprised in plastic waste. According to some embodiments obtaining the suspension or solution comprising the dissolved thermoplastic target polymer in accordance with the above mentioned step iv-1) is achieved by downsizing, in particular, shredding plastic waste comprising the thermoplastic target polymer prior to insertion of said plastic waste into the solvent. Shredding improves speed and/or completeness of dissolving of the thermoplastic target polymer, if the thermoplastic target polymer is obtained from plastic waste.

The invention also relates to a plastic waste recycling system comprising the following items:
1) a station that comprises a downsizing device for plastic waste, in particular a shredder, in particular for implementing step ii-1) as described above;
2) a station that comprises an air classifier, in particular for implementing step iii-1) as described above;
3) preferably a station for washing the downsized plastic waste;
4) a station that comprises a vessel, wherein the vessel comprises an agitator and/or a heating system, in particular for implementing step iv-1) as described above;
5) preferably a station that comprises a centrifuge for solid-liquid separation, in particular for implementing step v-1) as described above;
6) a station that comprises a filtration unit or evaporation unit, in particular for implementing step vii-1) as described above;
7) preferably a station that comprises a plastic extruder for the production of polymer pellets, in particular wherein the plastic extruder has a heating unit or is connected to a heating unit, for heating the thermoplastic target polymer, in particular for implementing step viii-1) as described above,
wherein the plastic waste recycling system has a transfer system that transfers materials from each station to the next in the above listed order.

Optional stations are not implemented in some embodiments and if it is not the transfer system transfers to the next station that is implemented. Also additional stations that are not described explicitly may be implemented.

The vessel comprises a solvent and/or an agitator for stirring the waste. The agitator may be connected to said vessel and/or it may be disposed in said vessel. The vessel may in some embodiments be a tank, in particular a closed tank. The vessel may be a tank with a volume of 1 m³ to 100 m³, in particular of 5 m³ to 50 m³, in particular preferred of 20 m³ to 40 m³.

Preferably, the plastic waste recycling system is adapted for implementing the method as described above.

Preferably, the vessel comprises an organic solvent for dissolving plastic waste at least partially.

Any devices that are used for the method as described above may preferably be also part of the plastic waste recycling system.

The invention also relates to the use of the above described plastic waste recycling system for for implementing the method as described above.

With the above context, the following consecutively numbered embodiments provide other specific aspects of the invention:
1. Method for recycling plastic material comprising at least one target polymer, wherein the method comprises the following dedusting steps:
   i-1) providing said plastic material, in particular plastic waste;
   ii-1) downsizing said plastic material;
   iii-1) classification of the downsized material obtained after step ii-1) by particle size and/or particle weight, in particular by sieving, or contacting of said downsized plastic material with airstream, preferably by means of passing said downsized plastic material through air counter-flow, or a combination thereof;
   wherein the downsized plastic material obtained after step iii-1) is essentially free of particulate matter, and wherein essentially free of particulate matter means that at least 99 weight% of particles < 300µm, in particular < 100 µm have been removed from the downsized plastic material.
2. Method according to embodiment 1 further comprising steps of plastic recycling processes, in particular, solvent-based recycling processes.
3. Method according to any one of embodiments 1 or 2, wherein said obtained material has particle size distribution from 1 mm to 25 mm, preferably 100 µm to 25 mm, in particular 10 µm to 25 mm.
4. Method according to any one of embodiments 1 to 3 further comprising the following additional steps:
   iv-1) adding a solvent or a mixture of solvents to the material obtained after step iii-1) to obtain a solution or suspension comprising said target polymer, preferably using a heating system, wherein said target polymer is essentially soluble in said solvent or mixture of solvents.
5. Method according to embodiment 4 further comprising the following additional steps:
   v-1) preferably purifying said solution or suspension obtained after step iv-1), in particular by means of mechanical solid-liquid separation;
   vi-1) optionally, if the solution comprises at least one polymer originating from post-consumer plastic waste, adding a solution cleaning step for decolorization and an additional odor treatment step;
   vii-1) separating of said target polymer from said solution or suspension;
   viii-1) preferably degassing and/or extrusion of said target polymer.
6. Method according to any one of embodiments 1 to 5, wherein said target polymer is a thermoplastic polymer.
7. Method according to any one of embodiments 1 to 6, wherein said target polymer is selected from the group comprising polyolefins, polyamides and combinations thereof.
8. Method according to any one of embodiments 1 to 7, wherein said target polymer is low-density polyethylene (LDPE).
9. Method according to any one of embodiments 1 to 8, wherein step ii-1) is performed by a downsizing device selected from shredders, grinders, chippers, granulators, hammer mills, shear shredders and all-purpose shredders.
10. Method according to embodiment 9, wherein step ii-1) is performed in a single-shaft shredder, in particular in a cooled single-shaft shredder.
11. Method according to any one of embodiments 1 to 10, wherein step iii-1) is performed in an air classifier, in particular in a zigzag air classifier.
12. Polymer material obtained by a method as defined in any one of embodiments 1 to 11.
13. Plastic waste recycling system, in particular for implementing the method according to any one of embodiments 1 to 11, comprising the following items:
   1) a station that comprises a downsizing device for plastic waste, in particular a shredder, in particular for implementing step ii-1) as described above;
   2) a station that comprises an air classifier, in particular for implementing step iii-1) as described above;
   3) preferably a station for washing the downsized plastic waste;
   4) a station that comprises a vessel, wherein the vessel comprises an agitator and/or a heating system, in particular for implementing step iv-1) as described above;
   5) preferably a station that comprises a centrifuge for solid-liquid separation, in particular for implementing step v-1) as described above;
   6) a station that comprises a filtration unit or evaporation unit, in particular for implementing step vii-1) as described above;
   7) preferably a station that comprises a plastic extruder for the production of polymer pellets, in particular wherein the plastic extruder has a heating unit or is connected to a heating unit, for heating the thermoplastic target polymer, in particular for implementing step viii-1) as described above,
   wherein the plastic waste recycling system has a transfer system that transfers materials from each station to the next in the above listed order.

It is an object of the present invention to provide an improved method for recycling a plastic material, in particular plastic waste, based on a dissolving of a target polymer, in particular a thermoplastic target polymer, with a subsequent liquid-liquid extraction. This method enables to eliminate those impurities which are caged between the polymer chains, what is possible only in the case when the polymeric is dissolved. While being dissolved, the distance between polymer chains is increasing, what helps to release the impurities into the solution. The undesired components are removed by means of liquid-liquid extraction. As a result, a polymeric material essentially free of impurities is obtained. The quality of the material processed in such a way is comparable to virgin polymers. Consequently, the resulting recycled polymer material can be reused without substantial restrictions. Furthermore, this method is less demanding to the quality of a feed material, what enables recycling more complex multi-component structures, e.g. colored plastics. Dyed and pigmented plastics are commonly troubling for materials recovery facilities as they have a much lower market value and are more difficult to recycle. Clear plastics are always preferred in the recycled materials market, mainly since transparent plastic can typically be dyed with greater flexibility. The problem can be solved by introduction of an additional pre-sorting step, what however, significantly increases the costs of recycling process. With said method undesired colorants can be efficiently removed by means of liquid-liquid extraction. With said method also other undesired impurities, e.g. odor causing substances or thermal stabilizers, can be efficiently removed. For example, degradation products of fatty acids may be responsible for unpleasant odor of a plastic material, what limits its further using in food packaging. Ultimately reducing the amount of impurities has positive impact on mechanical properties and processability of the recycled material. It is also an object of the present invention to provide a plastic waste recycling system for recycling plastic waste comprising a thermoplastic target polymer.

Hence, in one embodiment the invention relates to a method for recycling plastic material comprising at least one thermoplastic target polymer, wherein the method comprises the following steps:
i-2) providing a suspension or a solution comprising said thermoplastic target polymer, in particular by adding a solvent or a mixture of solvents to said plastic material, in particular plastic waste or pre-treated plastic waste,preferably using a heating system, wherein said thermoplastic target polymer is essentially soluble in said solvent or said mixture of solvents;
ii-2) preferably purifying said solution or suspension, preferably by means of mechanical solid-liquid separation;
iii-2) mixing a liquid extractant with said solution or suspension, preferably using a heating system, to produce a multiphasic system, preferably biphasic system, wherein said extractant is a non-solvent for the target polymer, wherein said solvent or said mixture of solvents is essentially immiscible with said extractant, and wherein said exctractant and said solvent or said mixture of solvents have essentially different densities;
iv-2) separating the fraction comprising the thermoplastic target polymer from the fraction comprising the extractant.

In one embodiment the method for recycling plastic material comprising at least one target polymer comprises the following additional steps:
v-2) separating said thermoplastic target polymer from the solution obtained after step iv-2);
vi-2) preferably degassing and/or extrusion of said thermoplastic target polymer.

In one embodiment said pre-treated plastic waste is obtained by a method which comprises the following steps:
i-2-a) contacting of said material with a liquid to produce a suspension;
ii-2-b) purifying the suspension obtained in step i-2-a), in particular by means of mechanical solid-liquid separation.

It was surprisingly discovered that integration of a liquid-liquid extraction step into a solvent-based recycling of plastics enables efficient removal of undesired impurities, in particular pigments, what delivers a target polymer with virgin-like quality.

The above steps i-2) to vi-2) do not necessarily signify a specific sequence or number of steps. However, preferably the steps of the method are implemented with ascending numbers, i.e. in the order as shown above. Some of said steps may be optional and in some embodiments optional steps are not implemented. For example in one embodiment step i-2) may directly be followed by step iii-2) without implementation of step ii-2). Also the above shown steps do not exclude additional steps that are not explicitly mentioned. For example, plastic waste comprising the thermoplastic target polymer may in some embodiments be sorted prior to step i-2).

According to some embodiments adding a solvent or a mixture of solvents to said material to obtain solution or suspension comprising said thermoplastic target polymer in accordance with step i-2) is achieved by dissolving the thermoplastic target polymer at an elevated temperature.

According to some embodiments adding a solvent or a mixture of solvents to said material to obtain solution or suspension comprising said thermoplastic target polymer in accordance with step i-2) comprises dissolving said thermoplastic target polymer at least partially in said solvent or said mixture of solvents in a, in particular closed and/or gastight, vessel comprising the solvent, wherein an agitator for stirring the suspension or solution is provided. The agitator may be connected to said vessel and/or it may be disposed in said vessel. It is in some embodiments possible to dispose the agitator within the vessel without connection to the vessel, e.g. by hanging the agitator into the vessel from above. However, often the agitator is connected to the, in particular closed and/or gastight, vessel. The suspension or solution is preferably stirred for at least 15 min, in particular for at least 30 min. Preferably, the suspension or solution is stirred for less than 6 h, in particular for less than 2 h (120 min). It was found that stirring expedites dissolving the thermoplastic target polymer in the solvent.

In some embodiments the target polymer is a thermoplastic polymer. In some embodiments said thermoplastic polymer is selected from the group comprising polyolefins, polyamide (PA) and combinations thereof.

In some embodiments the thermoplastic target polymer is selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). A particularly suitable thermoplastic target polymer is polyethylene (PE), in particular low-density polyethylene (LDPE) and/or high-density polyethylene (HDPE).

In some embodiments the thermoplastic target polymer has an average molecular mass of 50 to 20.000 kDa, in particular of 100 to 4.000 kDa, in particular preferred of 200 to 2.000 kDa. In some embodiments the thermoplastic target polymer has a number average molecular weight of 50 to 20.000 kDa, in particular of 100 to 4.000 kDa, in particular preferred of 200 to 2.000 kDa.

In some embodiments the thermoplastic target polymer is dissolved in said solvent or said mixture of solvents in an amount not less than 5 wt%, more preferably not less than 7 wt%, in particular not less than 10 wt%, with respect to the total weight of said solvent or mixture of solvents and the polymer that is dissolved.

Besides the target polymer other non-target polymers may be present. Preferably non-target polymers do not dissolve in the solvent under the conditions of step i-2) or have a lower solubility under said conditions than the target polymer. If for example plastic waste is recycled the non-target polymers are preferably present to a lesser degree than the target polymer. Preferably non-target polymers are dissolved in an amount of less than 1 wt%, in particular less than 0.5 wt%, with respect to the total weight of the solvent and the polymer that is dissolved.

It is preferred if the suspension or solution is heated in step i-2) to an average temperature above 20°C, in particular to an average temperature above room temperature of 25°C, in particular preferred to an average temperature of more than 40°C. In some embodiments the suspension or solution has an average temperature of at least 50°C, in particular of at least 80°C. In some embodiments during dissolving of the thermoplastic target polymer in the solvent, the solvent is heated in step i-2) to an average temperature of 20 to 160°C, in particular of 40 to 140°C, preferably of 50 to 100°C. In some embodiments the suspension or solution is heated to an average temperature of 60 to 180°C. For low-density polyethylene (LDPE) as a thermoplastic target polymer an average temperature of 80 to 120°C was found to be particularly suitable for dissolving said polymer. For high-density polyethylene (HDPE) as a thermoplastic target polymer an average temperature of 100 to 140°C was found to be particularly suitable for dissolving said polymer. For polypropylene (PP) as a thermoplastic target polymer an average temperature of 120 to 160°C was found to be particularly suitable for dissolving said polymer. In some embodiments the average temperature in the above described vessel of the suspension or solution during step i-2), in particular when dissolving the thermoplastic target polymer, is above 20°C, preferably above 40°C, in particular above 60°C, in particular preferred above 80°C. This may also be the average temperature of the suspension or solution in said vessel comprising said solvent or suspension. In some embodiments step i-2) is conducted under temperature which is lower by more than 5 K, in particular by more than 10 K than the boiling point of said solvent.

In some embodiments the peak temperature of the suspension or solution during step i-2), in particular when dissolving the thermoplastic target polymer, is above 20°C, preferably above 40°C, in particular above 60°C, in particular preferred above 80°C. This may also be the peak temperature of the solvent and/or suspension or solution in said vessel comprising said solvent or suspension. It is to be understood that the average temperature is preferably selected in such a way that a most - if not all - of the thermoplastic target polymer is dissolved and/or remains dissolved in said solvent.

In some embodiments purifying said suspension or solution comprises removing undissolved components of said suspension or solution by mechanical solid-liquid separation. In some embodiments the mechanical solid-liquid separation is achieved by a centrifuge. In some embodiments a sieve, in particular a metal sieve, may be used alternatively or additionally for mechanical solid-liquid separation.

In some embodiments said solid-liquid separation removes any particles that weigh more than 1000 mg, in particular more than 100 mg, preferably more than 10 mg. In some embodiments the solid-liquid separation removes any particles that weigh more than 50 mg, in particular more than 5 mg, preferably more than 1 mg. After solid-liquid separation the suspension preferably separates into a solution comprising the thermoplastic target polymer and solid particles.

In some embodiments step ii-2) comprises removing at least 50 % by weight, in particular at least 90 % by weight, preferably 99 % by weight, of any substances that have not been dissolved, preferably by centrifugation.

In some embodiments the centrifuge is a gastight centrifuge, in particular wherein the suspension may be centrifuged under gastight conditions.

In some embodiments the oxygen content within the centrifuge is below 15% by weight, in particular below 10% by weight, preferably below 7% by weight, in particular preferred with respect to the total weight of the suspension within the centrifuge and/or with respect to the gas composition within the centrifuge.

The suspension or solution obtained in step i-2) preferably comprises one or more at least partially dissolved target polymers selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). Polyethylene (PE) is preferably selected from high-density polyethylene (HDPE) and low-density polyethylene (LDPE) or contains both. The method was found to be particularly suitable for recycling polyethylene (PE), in particular low-density polyethylene (LDPE).

In some embodiments the solvent used to dissolve the thermoplastic target polymer is a single organic solvent or a mixture comprising at least one organic solvent, preferably a mixture of two or more organic solvents. In some embodiments said organic solvents are aliphatic or aromatic hydrocarbons. They may be saturated or unsaturated. In some embodiments they comprise cyclic organic compounds. Also formic acid, acetic acid, ketones such as acetone or propanone and alcohols such as methanol or ethanol or polyols such as glycol or 2-propanol or mixtures thereof may be suitable. The solvent is selected in such a way that the thermoplastic target polymer is dissolved. For polyethylene (PE), in particular low-density polyethylene (LDPE), heptane was found to be a particularly suitable solvent, in particular at 85 to 95°C and/or at a pressure of 0,8 to 1,2 bar. For polyethylene (PE), in particular high-density polyethylene (HDPE), heptane was found to be a particularly suitable solvent, in particular at 105 to 115°C and/or at a pressure of 1 to 2 bar. For polypropylene (PP) octane was found to be particularly suitable solvent, in particular at an average temperature of 125 to 135°C. For PVC acetone was found to be a particularly suitable solvent, in particular at an average temperature of 80 to 160°C. For polyamide (PA), in particular polyamide-6, propylene glycol was found to be a particularly suitable solvent, preferably at an average temperature of 80 to 160°C.

In some embodiments the solution or suspension in step i-2) contains 10 or more weight per cent of said thermoplastic target polymer with respect to the total weight of said solvent or mixture of solvents and the polymer that is dissolved.

In some embodiments step i-2) is conducted at a pressure which is lower than 6 bar, in particular less than 2 bar. In some embodiments step i-2) is conducted at a pressure of 1 bar to 1.2 bar, in particular at atmospheric pressure (no extra pressure has to be applied in this case).

In some embodiments only a single thermoplastic target polymer is present. In other embodiments a blend of target polymers is produced and may be used for production of pellets.

In some embodiments said thermoplastic target polymer is low-density polyethylene (LDPE) and said solvent is selected from the group comprising alkanes, iso-alkanes and cyclic alkanes.

In some embodiments said thermoplastic target polymer is is low-density polyethylene (LDPE) or polypropylene (PP) and said solvent is n-heptane or n-nonane.

In some embodiments said thermoplastic target polymer is low-density polyethylene (LDPE) and said solvent is n-heptane.

In some embodiments said thermoplastic target polymer is polypropylene (PP) and said solvent is n-nonane

In some embodiments said thermoplastic target polymer is polyamide (PA) and said solvent is propylene glycol.

Preferably the solvent for the thermoplastic target polymer comprises at least 80 % by weight of organic solvent, in particular at least 90% by weight of organic solvent, in particular preferred at least 95% by weight of organic solvent. The content of water in said solvent - if any - is preferably below 20% by weight, in particular below 10% by weight. In some embodiments the suspension or solution may also comprise a solvent with the above described composition.

Preferably the solvent for the thermoplastic target polymer comprises at least 60 % by weight of organic solvent, in particular at least 80% by weight of organic solvent, in particular preferred at least 90% by weight of organic solvent. The content of water in said solvent - if any - is preferably below 40% by weight, in particular below 20% by weight, better below 10% by weight. In some embodiments the suspension or solution may also comprise a solvent with the above described composition.

According to some embodiments mixing a liquid extractant according to step iii-2) is conducted in a, in particular closed and/or gastight, vessel comprising an agitator for stirring the mixture. The agitator may be connected to said vessel and/or it may be disposed in said vessel. It is in some embodiments possible to dispose the agitator within the vessel without connection to the vessel, e.g. by hanging the agitator into the vessel from above. However, often the agitator is connected to the, in particular closed and/or gastight, vessel. The mixture is preferably stirred for at least 15 minutes, in particular for at least 30 minutes. Preferably, the suspension or solution is stirred for less than 2 hours, in particular for less than 1 hour.

In some embodiments, said extractant is selected from the group comprising ketones such as acetone, butanone, esters such as ethyl acetate, benzyl acetate, organic acids such as formic acid or acetic acid, and water.

In some embodiments said thermoplastic target polymer is dissolved in said extractant in an amount of less than 1 wt%, in particular less than 0.5 wt%, with respect to the total weight of the extractant and the polymer that is dissolved.

In some embodiments undesired impurities, in particular, colorants, pigments, degradation products, have at least 5 times, more preferably at least 10 times better solubility in said extractant than in said solvent.

In some embodiments the densities of said solvent and said extractant differ by more than 0,05 g/cm³, in particular by more than 0,10 g/cm³.

In some embodiments the boiling point of said solvent does not differ from the boiling point of said extractant by more than 10 K, in particular by more than 5 K.

According to some embodiments mixing a liquid extractant in accordance with step iii-2) is performed at an elevated temperature.

In some embodiments separating the fraction comprising the thermoplastic target polymer from the fraction comprising the extractant according to step iv-2) is performed in a settler (Figure 2). The mixture obtained in step iii-2) is transferred to the settler in the form of emulsion via a pumping turbine. The heavy phase and light phase liquids are separated by gravity. At the end of the settler two individual weirs are located to separately collect the fraction comprising the thermoplastic target polymer and the fraction comprising the extractant.

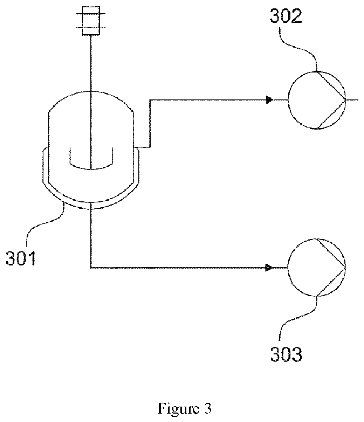

In some embodiments the above mentioned steps iii-2) and iv-2) are conducted in continuous made in a mixer-settler extractor (Figure 3). The vessel in which the mixture according to step iii-2) is obtained and the settler are integrated to act as one system.

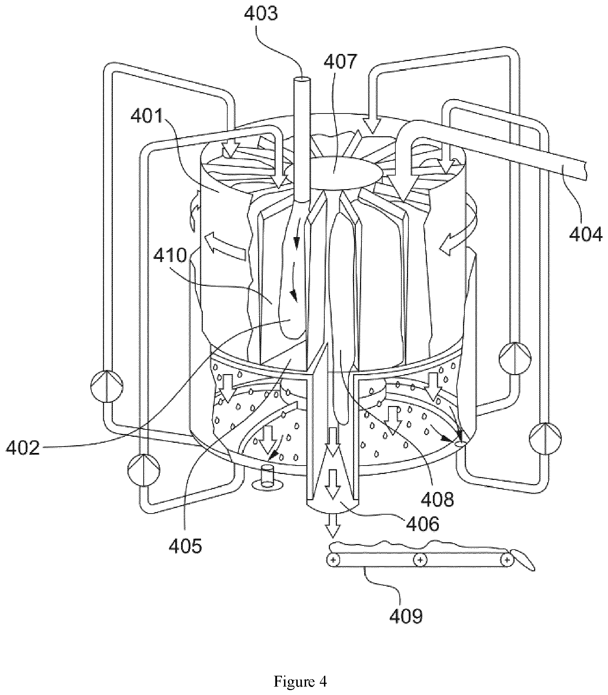

In some embodiments the above mentioned steps iii-2) and iv-2) are performed in a carrousel extractor (Figure 4). The carousel extractor consists of a rotating sectioned cylinder. The solution comprising thermoplastic target polymer is placed into chambers and an extractant is admitted from above into a chamber at one or several locations. The material is transported continuously and the extractant flows through the chambers. The extractant passes through the material in the chamber removing impurities from the material and then runs off through the bottom wall underneath the rotor into a collecting chamber from where it is removed.

In some embodiments separating said thermoplastic target polymer from the solution obtained in step iv-2) is performed by filtration.

In some embodiments separating said thermoplastic target polymer from the solution obtained in step iv-2) is performed by evaporation.

In some embodiments separating said thermoplastic target polymer from the solution obtained in the above mentioned step iv-2) is performed by flash-evaporation.

In some embodiments the average temperature in the above mentioned step i-2-a) the average temperature is lower by more than 5 K, in particular by more than 10 K than in step i-2).

In some embodiments the above mentioned steps i-2) and/or ii-2) and/or iii-2) and/or iv-2) and/or v-2) and/or vi-2) are conducted in an environment containing less than 15 % by weight of oxygen, in particular less than 5 % by weight of oxygen, preferably less than 1 % by weight of oxygen, in particular within the liquid and/or gaseous phase. Not all steps have to contain a gaseous and a liquid phase environment.

In some embodiments the solvent is at least partially recycled for dissolving the thermoplastic target polymer to provide more suspension or solution comprising the dissolved thermoplastic target polymer in accordance with step i-2). In some embodiments the solvent for reuse is purified by evaporation of the solvent and condensation and/or by distillation, wherein impurities are removed by evaporation and the solvent remains. Often the best approach depends on the boiling point of the solvent. However, in some embodiments purification is not necessary and the solvent may be reused directly.

On some embodiments the concentrated thermoplastic target polymer obtained in the above mentioned step v-2) has the consistency of a gel. It may be then called a target polymer gel.

In some embodiments polymer pellets are formed in the above mentioned step vi-2). In some embodiments products such as foils, pipes, bottels, pallets, lawn grids or building materials for houses are formed from said pellets or directly from concentrated thermoplastic target polymer obtained in step v-2) by blow moulding, extrusion, pressing and/or injection moulding. In some embodiments said polymer pellets are received from the outlet opening of an extruder.

In some embodiments step vi-2) comprises forming a polymer melt prior to extrusion and/or forming pellets or products using a pellet cutter after extrusion. Residual solvent is more efficiently removed from such a polymer melt.

In some embodiments separating said thermoplastic target polymer from the solution according to step v-2) means that at least 50 % by weight, in particular at least 75 % by weight, preferably at least 90 % by weight of the solvent is removed. In some embodiments at least 99 % by weight of the solvent is removed.

In some embodiments said plastic material is selected from the group comprising post-consumer use polymers, post-industrial use polymers and combinations thereof.

In some embodiments of the method for recycling plastic waste at least 50 % by weight, preferably at least 80 %, by weight in particular 90 % by weight, of the plastic waste is plastic, wherein said plastic also includes the thermoplastic target polymer. In some embodiments at least 50 % by weight, preferably at least 80 %, by weight in particular 90 % by weight, of the plastic waste is the thermoplastic target polymer. In some embodiments at least 10 % by weight, preferably at least 20 % by weight, in particular 50 % by weight, of the plastic waste is non-plastic.

In a preferred embodiment the plastic waste is made to at least 80 % by weight, preferably to at least 90% by weight, of said thermoplastic target polymer, in particular a single polymer or a mixture of two or three polymers.

Pre-treatment of said plastic waste may comprise sorting said plastic material. However, in some embodiments mixed plastic waste is used and little or no sorting is done.

Alternatively pre-treatment of said plastic waste may comprise washing of plastic waste prior to insertion of the plastic waste into the solvent, e.g. washing with water. Washing removes some impurities. In some embodiments washing is performed by means of contacting of said material with a liquid to produce a suspension with subsequent purifying the obtained suspension, in particular by means of mechanical solid-liquid separation. In some embodiments said liquid is water. In some embodiments washing may comprise washing with water at an average temperature of more than 40°C, in particular more than 80°C. Also washing with water may be a conducted using a friction washer, in particular wherein a rotor transports plastic waste and/or water is transported in opposite direction to the plastic waste. Friction by rotors and water remove impurities. In some embodiments there is no such step with a friction washer and the shredded plastic waste is used directly. This may be the case if plastic waste from post-industrial residues is recycled. With plastic waste from consumer products often said washing step is advantageous.

According to some embodiments said plastic waste is pre-treated in the way of shredding plastic waste comprising the target polymer prior to insertion of said plastic material into said solvent or said mixture of solvents. Shredding improves speed and/or completeness of dissolving of the target polymer, if the target polymer is obtained from plastic waste.

In some embodiments said plastic waste contains polyethylene (PE) and aluminium, preferably polyethylene, aluminium and paper. In some embodiments at least 60 % by weight, in particular at least 80 % by weight, preferably at least 90 % by weight, of the plastic waste consists of said materials.

In some embodiments the plastic waste is at least partially obtained from packaging materials and/or foils. In some embodiments at least 60 % by weight, in particular at least 80 % by weight, preferably at least 90 % by weight, of the plastic waste consists of packaging materials and/or foils.

In some embodiments said plastic waste is at least partially obtained from car parts. In some of said embodiments at least 60 % by weight, in particular at least 80 % by weight, preferably at least 90 % by weight, of the plastic waste consists of car parts.

In some further embodiments the plastic waste comprises at least one type of object selected from a group consisting of cans, cups, foils, collapsible tubes, plastic bags. In some embodiments the plastic waste is mixed waste comprising at least two or three types of objects selected from a group consisting of cans, cups, foils, collapsible tubes, plastic bags. Said types of objects preferably constitute at least 20% by weight, in particular at least 40% by weight, preferably at least 60% by weight, of the total weight of said plastic waste.

The invention also relates to the polymer material obtained in a method for solvent-based recycling plastic material comprising at least one thermoplastic target polymer with an integrated extraction step.

The invention also relates to the use of a method for solvent-based recycling plastic material comprising at least one thermoplastic target polymer with an integrated extraction step, preferably for recycling of plastic waste, in particular municipal solid waste, preferably for the type and/or composition of plastic waste that is described in this disclosure.

The invention also relates to a plastic waste recycling system comprising the following items:
1) preferably a station that comprises a downsizing device for plastic waste, in particular a shredder;
2) preferably a station for washing the downsized plastic waste;
3) a station that comprises a vessel, wherein the vessel comprises an agitator and/or a heating system, in particular for implementing step i-2) as described above;
4) preferably a station that comprises a centrifuge for solid-liquid separation, in particular for implementing step ii-2) as described above;
5) a station that comprises a mixer-settler unit or a carousel extractor, in particular for implementing steps iii-2) and iv-2) as described above;
6) a station that comprises a filtration unit or evaporation unit, in particular for implementing step v-2) as described above;
7) preferably a station that comprises a plastic extruder for the production of polymer pellets, in particular wherein the plastic extruder has a heating unit or is connected to a heating unit, for heating the thermoplastic target polymer, in particular for implementing step vi-2) as described above;
wherein the plastic waste recycling system has a transfer system that transfers materials from each station to the next in the above listed order.

Optional stations are not implemented in some embodiments and if it is not the transfer system transfers to the next station that is implemented. Also additional stations that are not described explicitly may be implemented.

The vessel comprises a solvent and/or an agitator for stirring the waste. The agitator may be connected to said vessel and/or it may be disposed in said vessel. The vessel may in some embodiments be a tank, in particular a closed tank. The vessel may be a tank with a volume of 1 m³ to 100 m³, in particular of 5 m³ to 50 m³, in particular preferred of 20 m³ to 40 m³.

Preferably, the plastic waste recycling system is adapted for implementing the method as described above.

Preferably, the vessel comprises an organic solvent for dissolving plastic waste at least partially.

Any devices that are used for the method as described above may preferably be also part of the plastic waste recycling system.

The invention also relates to the use of the above described plastic waste recycling system for for implementing the method as described above.

With the above context, the following consecutively numbered embodiments provide further specific aspects of the invention:
1. Method for recycling plastic material comprising at least one thermoplastic target polymer, wherein the method comprises the following steps:
   i-2) providing a suspension or a solution comprising said thermoplastic target polymer, in particular by adding a solvent or a mixture of solvents to said plastic material, in particular plastic waste or pre-treated plastic waste,
      preferably using a heating system, wherein said thermoplastic target polymer is essentially soluble in said solvent or said mixture of solvents;
   ii-2) preferably purifying said solution or suspension, preferably by means of mechanical solid-liquid separation;
   iii-2) mixing a liquid extractant with said solution or suspension, preferably using a heating system, to produce a multiphasic system, preferably biphasic system, wherein said extractant is a non-solvent for the target polymer, wherein said solvent or said mixture of solvents is essentially immiscible with said extractant, and wherein said exctractant and said solvent or said mixture of solvents have essentially different densities;
   iv-2) separating the fraction comprising the thermoplastic target polymer from the fraction comprising the extractant.
2. Method according to embodiment 1 further comprising the following steps:
   v-2) separating said thermoplastic target polymer from the solution obtained after step iv-2);
   vi-2) preferably degassing and/or extrusion of said thermoplastic target polymer.
3. Method according to any one of embodiments 1 or 2, wherein said pre-treated plastic waste is obtained by a method which comprises the following steps:
   i-2-a) contacting of said material with a liquid to produce a suspension;
   i-2-b) purifying the suspension obtained in step i-2-a), in particular by means of mechanical solid-liquid separation.
4. Method according to any one of embodiments 1 to 3, wherein said thermoplastic target polymer is dissolved in said extractant in an amount of less than 1 wt%, in particular less than 0.5 wt%, with respect to the total weight of the extractant and the polymer that is dissolved.
5. Method according to any one of embodiments 1 to 4, wherein the densities of said solvent and said extractant differ by more than 0,05 g/cm³, in particular by more than 0,10 g/cm³.
6. Method according to any one of embodiments 1 to 5, wherein the boiling point of said solvent does not differ from the boiling point of said extractant by more than 10 K, in particular by more than 5 K.
7. Method according to any one of embodiments 1 to 6, wherein steps iii-2) and iv-2) are performed in a carrousel extractor.
8. Method according to any one of embodiments 1 to 6, wherein steps iii-2) and iv-2) are performed in a mixer-settler extractor
9. Method according to any one of embodiments 1 to 8, wherein said plastic material is selected from the group comprising post-consumer use polymers, post-industrial use polymers and combinations thereof.
10. Method according to any one of embodiments 1 to 9, wherein said thermoplastic target polymer is selected from the group comprising polyolefins, polyamide (PA) and combinations thereof.
11. Method according to any one of embodiments 1 to 10, wherein said thermoplastic target polymer is low-density polyethylene (LDPE).
12. Method according to any one of embodiments 1 to 11, wherein said thermoplastic target polymer is low-density polyethylene (LDPE) and said solvent is selected from the group comprising alkanes, iso-alkanes and cyclic alkanes.
13. Method according to any one of embodiments 1 to 12, wherein said thermoplastic target polymer is low-density polyethylene (LDPE) and said solvent is n-heptane.
14. Method according to any one of embodiments 1 to 10, wherein said thermoplastic target polymer is polypropylene (PP) and said solvent is n-nonane.
15. Method according to any one of embodiments 1 to 10, wherein said thermoplastic target polymer is polyamide (PA) and said solvent is propylene glycol.
16. Method according to any one of embodiments 1 to 15, wherein said extractant is selected from the group comprising ketones, esters, organic acids and water.
17. Method according to any one of embodiments 1 to 16, wherein said solution or suspension in step i-2) contains 10 or more weight per cent of said thermoplastic target polymer with respect to the total weight of said solvent or mixture of solvents and the polymer that is dissolved.
18. Method according to any one of embodiments 1 to 17, wherein step i-2) is conducted under temperature which is lower by more than 5 K, in particular by more than 10 K than the boiling point of said solvent.
19. Method according to any one of embodiments 1 to 18, wherein step i-2) is conducted under pressure which is lower than 6 bar, more preferably less than 2 bar, in particular at atmospheric pressure.
20. Method according to any one of embodiments 1 to 19, wherein in step i-2-a) the average temperature is lower by more than 5 K, in particular by more than 10 K than in step i-2).
21. Polymer material obtained by a method as defined in any one of embodiments 1 to 20.
22. Plastic waste recycling system, in particular for implementing the method according to any one of embodiments 1 to 20, comprising the following items:
   1) preferably a station that comprises a downsizing device for plastic waste, in particular a shredder;
   2) preferably a station for washing the downsized plastic waste;
   3) a station that comprises a vessel, wherein the vessel comprises an agitator and/or a heating system, in particular for implementing step i-2) as described above;
   4) preferably a station that comprises a centrifuge for solid-liquid separation, in particular for implementing step ii-2) as described above;
   5) a station that comprises a mixer-settler unit or a carousel extractor, in particular for implementing steps iii-2) and iv-2) as described above;
   6) a station that comprises a filtration unit or evaporation unit, in particular for implementing step v-2) as described above;
   7) preferably a station that comprises a plastic extruder for the production of polymer pellets, in particular wherein the plastic extruder has a heating unit or is connected to a heating unit, for heating the thermoplastic target polymer, in particular for implementing step vi-2) as described above;
   wherein the plastic waste recycling system has a transfer system that transfers materials from each station to the next in the above listed order.

In one embodiment the subject-matter of the invention also relates to a method for solvent-based recycling a plastic material comprising at least one thermoplastic target polymer with an integrated step of addition of functional solid auxiliaries to the solution comprising the thermoplastic target polymer. It also relates to a polymer material obtained by this recycling method.

It is also an object of the present invention to provide an improved method for recycling a plastic material, which allows a perfect distribution of additives in a polymer matrix. Consequently, the method enables selecting an optimal dosage of additives in order to keep the balance between improving stability and eluding negative impact on functional properties of the final recycled product. The effect is achieved by means of dissolving the thermoplastic target polymer with subsequent adding of an insoluble solid additive to the obtained solution under vigorous agitation. While being dissolved, the distance between polymer chains is significantly increasing. This, in turn, makes the additives easier to penetrate into the area between the molecular chains and contributes to a uniform statistical distribution of the additives within the solution of the thermoplastic target polymer regardless of the concentration of the dissolved polymers. The process is performed under stirring, in particular, vigorous agitation what maintains the stability of the mixture. When the solvent is quickly removed, in particular via flash-evaporation, the additives remain are nearly equally distributed within the polymer matrix. Consequently, the method enables obtaining a product with desired properties consuming a lower amount of the additive in comparison with the methods of the prior art.

Hence a method for recycling plastic material comprising at least one thermoplastic target polymer, wherein the method comprises the following steps:
i-3) providing a suspension or a solution comprising said thermoplastic target polymer, in particular by adding a solvent or a mixture of solvents to said plastic material, in particular plastic waste or pre-treated plastic waste, preferably using a heating system, wherein said thermoplastic target polymer is essentially soluble in said solvent or said mixture of solvents;
ii-3) preferably purifying said solution or suspension, preferably by means of mechanical solid-liquid separation;
iii-3) adding a solid additive to said solution or suspension under stirring, in particular using an agitator, preferably using a heating system, wherein said solid additive is essentially insoluble in said solvent or said mixture of solvents.

In one embodiment the method for recycling plastic material comprising at least one thermoplastic target polymer comprises the following additional steps:
iv-3) separating said thermoplastic target polymer comprising said additive by flash evaporation of the mixture obtained in step iii-3);
v-3) preferably degassing and/or extrusion of said thermoplastic target polymer.

In some embodiments said suspension or solution comprising said dissolved thermoplastic target polymer is obtained by adding a solvent or a mixture of solvents to said plastic material, in particular plastic waste or pre-treated plastic waste, preferably using a heating system, wherein said thermoplastic target polymer is essentially soluble in said solvent or said mixture of solvents.

It was surprisingly discovered that a method for recycling plastic material comprising steps i-3)-v-3) enables obtaining a recycled polymer with nearly equal distribution of functional auxiliaries in the polymer matrix.

The above mentioned steps i-3) to v-3) do not necessarily signify a specific sequence or number of steps. However, preferably the steps of the method are implemented with ascending numbers, i.e. in the order as shown above. Some of said steps may be optional and in some embodiments optional steps are not implemented. For example in one embodiment step i-3) may directly be followed by step iii-3) without implementation of step ii-3). Also the above shown steps do not exclude additional steps that are not explicitly mentioned. For example, plastic waste comprising the thermoplastic target polymer may in some embodiments be sorted prior to step i-3).

According to some embodiments adding a solvent or a mixture of solvents to said material to obtain solution or suspension comprising said thermoplastic target polymer in accordance with step i-3) is achieved by dissolving the thermoplastic target polymer at an elevated temperature.

According to some embodiments adding a solvent or a mixture of solvents to said material to obtain solution or suspension comprising said thermoplastic target polymer in accordance with step i-3) comprises dissolving said thermoplastic target polymer at least partially in said solvent or said mixture of solvents in a, in particular closed and/or gastight, vessel comprising the solvent, wherein an agitator for stirring the suspension or solution is provided. The agitator may be connected to said vessel and/or it may be disposed in said vessel. It is in some embodiments possible to dispose the agitator within the vessel without connection to the vessel, e.g. by hanging the agitator into the vessel from above. However, often the agitator is connected to the, in particular closed and/or gastight, vessel. The suspension or solution is preferably stirred for at least 15 min, in particular for at least 30 min.

Preferably, the suspension or solution is stirred for less than 6 h, in particular for less than 2 h (120 min). It was found that stirring expedites dissolving the thermoplastic target polymer in the solvent.

In some embodiments the thermoplastic target polymer is selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). A particularly suitable thermoplastic target polymer is polyethylene (PE), in particular low-density polyethylene (LDPE) and/or high-density polyethylene (HDPE).

In some embodiments the thermoplastic target polymer has an average molecular mass of 50 to 20.000 kDa, in particular of 100 to 4.000 kDa, in particular preferred of 200 to 2.000 kDa. In some embodiments the thermoplastic target polymer has a number average molecular weight of 50 to 20.000 kDa, in particular of 100 to 4.000 kDa, in particular preferred of 200 to 2.000 kDa.

In some embodiments the thermoplastic target polymer is dissolved in said solvent or said mixture of solvents in an amount not less than 5 wt%, more preferably not less than 7 wt%, in particular not less than 10 wt%, with respect to the total weight of said solvent or mixture of solvents and the polymer that is dissolved.

Besides the target polymer other non-target polymers may be present. Preferably non-target polymers do not dissolve in the solvent under the conditions of step i-3) or have a lower solubility under said conditions than the target polymer. If for example plastic waste is recycled the non-target polymers are preferably present to a lesser degree than the target polymer. Preferably non-target polymers are dissolved in an amount of less than 1 wt%, in particular less than 0.5 wt%, with respect to the total weight of the solvent and the polymer that is dissolved.

It is preferred if the suspension or solution is heated in step i-3) to an average temperature above 20°C, in particular to an average temperature above room temperature of 25°C, in particular preferred to an average temperature of more than 40°C. In some embodiments the suspension or solution has an average temperature of at least 50°C, in particular of at least 80°C. In some embodiments during dissolving of the thermoplastic target polymer in the solvent, the solvent is heated in step i-3) to an average temperature of 20 to 160°C, in particular of 40 to 140°C, preferably of 50 to 100°C. In some embodiments the suspension or solution is heated to an average temperature of 60 to 180°C. For low-density polyethylene (LDPE) as a thermoplastic target polymer an average temperature of 80 to 120°C was found to be particularly suitable for dissolving said polymer. For high-density polyethylene (HDPE) as a thermoplastic target polymer an average temperature of 100 to 140°C was found to be particularly suitable for dissolving said polymer. For polypropylene (PP) as a thermoplastic target polymer an average temperature of 120 to 160°C was found to be particularly suitable for dissolving said polymer. In some embodiments the average temperature in the above described vessel of the suspension or solution during step i-3), in particular when dissolving the thermoplastic target polymer, is above 20°C, preferably above 40°C, in particular above 60°C, in particular preferred above 80°C. This may also be the average temperature of the suspension or solution in said vessel comprising said solvent or suspension. In some embodiments step i-3) is conducted under temperature which is lower by more than 5 K, in particular by more than 10 K than the boiling point of said solvent.

In some embodiments the peak temperature of the suspension or solution during step i-3), in particular when dissolving the target polymer, is above 20°C, preferably above 40°C, in particular above 60°C, in particular preferred above 80°C. This may also be the peak temperature of the solvent and/or suspension or solution in said vessel comprising said solvent or suspension. It is to be understood that the average temperature is preferably selected in such a way that a most - if not all - of the thermoplastic target polymer is dissolved and/or remains dissolved in said solvent.

In some embodiments purifying said suspension or solution comprises removing undissolved components of said suspension or solution by mechanical solid-liquid separation. In some embodiments the mechanical solid-liquid separation is achieved by a centrifuge. In some embodiments a sieve, in particular a metal sieve, may be used alternatively or additionally for mechanical solid-liquid separation.

In some embodiments said solid-liquid separation removes any particles that weigh more than 1000 mg, in particular more than 100 mg, preferably more than 10 mg. In some embodiments the solid-liquid separation removes any particles that weigh more than 50 mg, in particular more than 5 mg, preferably more than 1 mg. After solid-liquid separation the suspension preferably separates into a solution comprising the thermoplastic target polymer and solid particles.

In some embodiments the latter step ii-3) comprises removing at least 50 % by weight, in particular at least 90 % by weight, preferably 99 % by weight, of any substances that have not been dissolved, preferably by centrifugation.

The suspension or solution obtained in step i-3) preferably comprises one or more at least partially dissolved thermoplastic target polymers selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). Polyethylene (PE) is preferably selected from high-density polyethylene (HDPE) and low-density polyethylene (LDPE) or contains both. The method was found to be particularly suitable for recycling polyethylene (PE), in particular low-density polyethylene (LDPE).

In some embodiments the solvent used to dissolve the thermoplastic target polymer is a single organic solvent or a mixture comprising at least one organic solvent, preferably a mixture of two or more organic solvents. In some embodiments said organic solvents are aliphatic or aromatic hydrocarbons. They may be saturated or unsaturated. In some embodiments they comprise cyclic organic compounds. Also formic acid, acetic acid, ketones such as acetone or propanone and alcohols such as methanol or ethanol or polyols such as glycol or 2-propanol or mixtures thereof may be suitable. The solvent is selected in such a way that the thermoplastic target polymer is dissolved. For polyethylene (PE), in particular low-density polyethylene (LDPE), heptane was found to be a particularly suitable solvent, in particular at 85 to 95°C and/or at a pressure of 0,8 to 1,2 bar. For polyethylene (PE), in particular high-density polyethylene (HDPE), heptane was found to be a particularly suitable solvent, in particular at 105 to 115°C and/or at a pressure of 1 to 2 bar. For polypropylene (PP) octane was found to be particularly suitable solvent, in particular at an average temperature of 125 to 135°C. For PVC acetone was found to be a particularly suitable solvent, in particular at an average temperature of 80 to 160°C. For polyamide (PA), in particular polyamide-6, propylene glycol was found to be a particularly suitable solvent, preferably at an average temperature of 80 to 160°C.

In some embodiments the solution or suspension in step i-3) contains 10 or more weight per cent of said thermoplastic target polymer with respect to the total weight of said solvent or mixture of solvents and the polymer that is dissolved.

In some embodiments step i-3) is conducted at a pressure which is lower than 6 bar, in particular less than 2 bar. In some embodiments step i-3) is conducted at a pressure of 1 bar to 1.2 bar, in particular at atmospheric pressure (no extra pressure has to be applied in this case).

In some embodiments only a single thermoplastic target polymer is present. In other embodiments a blend of target polymers is produced and may be used for production of pellets.

In some embodiments said thermoplastic target polymer is selected from the group comprising polyolefins, polyamide (PA) and combinations thereof.

In some embodiments said thermoplastic target polymer is low-density polyethylene (LDPE).

In some embodiments said thermoplastic target polymer is low-density polyethylene (LDPE) and said solvent is selected from the group comprising alkanes, iso-alkanes and cyclic alkanes.

In some embodiments said thermoplastic target polymer is low-density polyethylene (LDPE) or polypropylene and said solvent is n-heptane or n-nonane.

In some embodiments said thermoplastic target polymer is low-density polyethylene (LDPE) and said solvent is n-heptane.

In some embodiments said thermoplastic target polymer is polypropylene (PP) and said solvent is n-nonane.

In some embodiments said thermoplastic target polymer is polyamide (PA) and said solvent is propylene glycol.

Preferably the solvent for the thermoplastic target polymer comprises at least 60 % by weight of organic solvent, in particular at least 80% by weight of organic solvent, in particular preferred at least 90% by weight of organic solvent. The content of water in said solvent - if any - is preferably below 20% by weight, in particular below 10% by weight. In some embodiments the suspension or solution may also comprise a solvent with the above described composition.

In some embodiments said additive is selected from the group comprising thermal stabilizers, light stabilizers, flame retardants, antistatic agents, lubricants, slip agents, biocides.

In some embodiments thermal stabilizers are selected from the group comprising sterically hindered phenols, phosphites, and hydroxylamines, in particular pentaerythritol tetrakis(3,5-di-tert-butyl-4-hydroxyhydrocinnamate) and tris(2,4-di-tert-butylphenyl)phosphite.

In some embodiments light stabilizers are selected from the group comprising triazines, benzotriazoles and hindered amines,
In some embodiments slip agents are selected from the group comprising amides of fatty acids, in particular, oleamide.

In some embodiments lubricants are selected from the group comprising higher alkanes and saturated fatty acids. In particular, higher alkanes are non-branched hydrocarbons comprising from 20 to 40 carbon atoms. In particular, saturated fatty acids are represented by the formula CH₃(CH₂)ₙCOOH, wherein n is an integer from 10 to 20.

In some embodiments antistatic agents are selected from the group comprising disubstituted aliphatic amines, trisubstituted aliphatic amines or quaternary aliphatic ammonium salts.

In some embodiments step iii-3) is performed using an agitator, wherein said solid additive is completely dispersed within no more than 5 minutes, in particular within no more than 2 minutes after the agitation is started.

In some embodiments the amount of said thermal stabilizers is from 0,05 % to 0,5 % by weight, preferably from 0,05 % to 0,2 % by weight, in particular from 0,1 % to 0,2 % by weight, with respect to the weight of the polymer.

In some embodiments the amount of said light stabilizers is from 0,05 % to 2 % by weight, preferably from 1 % to 2 % by weight, with respect to the weight of the polymer.

In some embodiments the amount of said lubricants is from 0,1 % to 10 % by weight, preferably from 1 % to 5 % by weight, with respect to the weight of the polymer.

In some embodiments the amount of slip agents is from 0,05 % to 0,2 % by weight, in particular from 0,05 % to 0,1 % by weight, with respect to the weight of the polymer.

In some embodiments the amount of said antistatic agents is from 1 % to 2 % by weight, with respect to the weight of the polymer.

In some embodiments steps i-3) and/or ii-3) and/or iii-3) and/or iv-3) and/or v-3) are conducted in an environment containing less than 15 % by weight of oxygen, in particular less than 5 % by weight of oxygen, preferably less than 1 % by weight of oxygen, in particular within the liquid and/or gaseous phase. Not all steps have to contain a gaseous and a liquid phase environment.

In some embodiments the solvent is at least partially recycled for dissolving the thermoplastic target polymer to provide more suspension or solution comprising the dissolved thermoplastic target polymer in accordance with step i-3). In some embodiments the solvent for reuse is purified by evaporation of the solvent and condensation and/or by distillation, wherein impurities are removed by evaporation and the solvent remains. Often the best approach depends on the boiling point of the solvent. However, in some embodiments purification is not necessary and the solvent may be reused directly.

In some embodiments the concentrated target polymer obtained in the latter step iv-3) has the consistency of a gel. It may be then called a target polymer gel.

In some embodiments polymer pellets are formed in the latter step v-3). In some embodiments products such as foils, pipes, bottels, pallets, lawn grids or building materials for houses are formed from said pellets or directly from concentrated target polymer obtained in step iv-3) by blow moulding, extrusion, pressing and/or injection moulding. In some embodiments said polymer pellets are received from the outlet opening of an extruder.

In some embodiments the latter step v-3) comprises forming a polymer melt prior to extrusion and/or forming pellets or products using a pellet cutter after extrusion. Residual solvent is more efficiently removed from such a polymer melt.

In some embodiments of the method for recycling plastic waste at least 50 % by weight, preferably at least 80 %, by weight in particular 90 % by weight, of the plastic waste is plastic, wherein said plastic also includes the target polymer. In some embodiments at least 50 % by weight, preferably at least 80 %, by weight in particular 90 % by weight, of the plastic waste is the target polymer. In some embodiments at least 10 % by weight, preferably at least 20 % by weight, in particular 50 % by weight, of the plastic waste is non-plastic.

In a preferred embodiment the plastic waste is made to at least 80 % by weight, preferably to at least 90% by weight, of said target polymer, in particular a single polymer or a mixture of two or three polymers.

Providing said plastic material for implementing step i-3) may comprise sorting said plastic material. However, in some embodiments mixed plastic waste is used and little or no sorting is done.

Alternatively or additionally according to some embodiments providing a target polymer may comprise washing of plastic waste prior to insertion of the plastic waste into the solvent, e.g. washing with water. Washing removes some impurities. In some embodiments washing is performed by means of contacting of said material with a liquid to produce a suspension with subsequent purifying the obtained suspension, in particular by means of mechanical solid-liquid separation. In some embodiments said liquid is water. In some embodiments washing may comprise washing with water at an average temperature of more than 40°C, in particular more than 80°C. Also washing with water may be a conducted using a friction washer, in particular wherein a rotor transports plastic waste and/or water is transported in opposite direction to the plastic waste. Friction by rotors and water remove impurities. In some embodiments there is no such step with a friction washer and the shredded plastic waste is used directly. This may be the case if plastic waste from post-industrial residues is recycled. With plastic waste from consumer products often said washing step is advantageous.

According to some embodiments providing said plastic material is achieved by shredding plastic waste comprising the target polymer prior to insertion of said plastic material into said solvent or said mixture of solvents. Shredding improves speed and/or completeness of dissolving of the target polymer, if the target polymer is obtained from plastic waste.

In some embodiments said plastic waste contains polyethylene (PE) and aluminium, preferably polyethylene, aluminium and paper. In some embodiments at least 60 % by weight, in particular at least 80 % by weight, preferably at least 90 % by weight, of the plastic waste consists of said materials.

In some embodiments the plastic waste is at least partially obtained from packaging materials and/or foils. In some embodiments at least 60 % by weight, in particular at least 80 % by weight, preferably at least 90 % by weight, of the plastic waste consists of packaging materials and/or foils.

In some embodiments said plastic waste is at least partially obtained from car parts. In some of said embodiments at least 60 % by weight, in particular at least 80 % by weight, preferably at least 90 % by weight, of the plastic waste consists of car parts.

In some further embodiments the plastic waste comprises at least one type of object selected from a group consisting of cans, cups, foils, collapsible tubes, plastic bags. In some embodiments the plastic waste is mixed waste comprising at least two or three types of objects selected from a group consisting of cans, cups, foils, collapsible tubes, plastic bags. Said types of objects preferably constitute at least 20% by weight, in particular at least 40% by weight, preferably at least 60% by weight, of the total weight of said plastic waste.

The invention also relates to the polymer material obtained in a method for solvent-based recycling described in this disclosure.

The invention also relates to the use of a method for solvent-based recycling plastic material comprising at least one target polymer described in this disclosure, preferably for recycling of plastic waste, in particular municipal solid waste, preferably for the type and/or composition of plastic waste that is described in this disclosure.

The invention also relates to a plastic waste recycling system comprising the following items:
1) preferably a station that comprises a downsizing device for plastic waste, in particular a shredder;
2) preferably a station for washing the downsized plastic waste;
3) a station that comprises a vessel, wherein the vessel comprises an agitator and/or a heating system, in particular for implementing step i-3) as described above;
4) preferably a station that comprises a centrifuge for solid-liquid separation, in particular for implementing step ii-3) as described above;
5) a station that comprises a flash evaporation unit, in particular for implementing step iv-3) as described above;
7) preferably a station that comprises a plastic extruder for the production of polymer pellets, in particular wherein the plastic extruder has a heating unit or is connected to a heating unit, for heating the thermoplastic target polymer, in particular for implementing step v-3) as described above;
wherein the plastic waste recycling system has a transfer system that transfers materials from each station to the next in the above listed order.

Optional stations are not implemented in some embodiments and if it is not the transfer system transfers to the next station that is implemented. Also additional stations that are not described explicitly may be implemented.

The vessel comprises a solvent and/or an agitator for stirring the waste. The agitator may be connected to said vessel and/or it may be disposed in said vessel. The vessel may in some embodiments be a tank, in particular a closed tank. The vessel may be a tank with a volume of 1 m³ to 100 m³, in particular of 5 m³ to 50 m³, in particular preferred of 20 m³ to 40 m³.

Preferably, the plastic waste recycling system is adapted for implementing the method as described above.

Preferably, the vessel comprises an organic solvent for dissolving plastic waste at least partially.

Any devices that are used for the method as described above may preferably be also part of the plastic waste recycling system.

The invention also relates to the use of the above described plastic waste recycling system for for implementing the method as described above.

With the above context, the following consecutively numbered embodiments provide other specific aspects of the invention:
1. Method for recycling plastic material comprising at least one thermoplastic target polymer, wherein the method comprises the following steps:
   i-3) providing a suspension or a solution comprising said thermoplastic target polymer, in particular by adding a solvent or a mixture of solvents to said plastic material, in particular plastic waste or pre-treated plastic waste, preferably using a heating system, wherein said thermoplastic target polymer is essentially soluble in said solvent or said mixture of solvents;
   ii-3) preferably purifying said solution or suspension, preferably by means of mechanical solid-liquid separation;
   iii-3) adding a solid additive to said solution or suspension under stirring, in particular using an agitator, preferably using a heating system, wherein said solid additive is essentially insoluble in said solvent or said mixture of solvents.
2. Method according to embodiment 1 further comprising the following steps:
   iv-3) separating said thermoplastic target polymer comprising said additive by flash evaporation of the mixture obtained in step iii-3),
   v-3) preferably degassing and/or extrusion of said thermoplastic target polymer.
3. Method according to any one of embodiments 1 or 2, wherein said suspension or solution comprising said dissolved thermoplastic target polymer is obtained by adding a solvent or a mixture of solvents to said plastic material, in particular plastic waste or pre-treated plastic waste, preferably using a heating system, wherein said thermoplastic target polymer is essentially soluble in said solvent or said mixture of solvents.
4. Method according to any one of embodiments 1 to 3, wherein said additive is selected from the group comprising thermal stabilizers, light stabilizers, flame retardants, antistatic agents, slip agents, lubricants, biocides.
5. Method according to any one of embodiments 1 to 4, wherein said additive is a thermal stabilizer.
6. Method according to any one of embodiments 1 to 4, wherein said additive is a light stabilizer.
7. Method according to any one of embodiments 1 to 4, wherein said additive is a slip agent.
8. Method according to any one of embodiments 1 to 7 wherein step iii-3) is performed using an agitator, wherein said solid additive is completely dispersed within no more than 5 minutes, in particular within no more than 2 minutes after the agitation is started.
9. Method according to any one of embodiments 1 to 8, wherein said plastic material is selected from the group comprising post-consumer use polymers, post-industrial use polymers and combinations thereof.
10. Method according to any one of embodiments 1 to 9, wherein said thermoplastic target polymer is selected from the group comprising polyolefins, polyamide (PA) and combinations thereof.
11. Method according to any one of embodiments 1 to 10, wherein said thermoplastic target polymer is low-density polyethylene (LDPE).
12. Method according to any one of embodiments 1 to 11, wherein said thermoplastic target polymer is low-density polyethylene (LDPE) and said solvent is selected from the group comprising alkanes, iso-alkanes and cyclic alkanes.
13. Method according to any one of embodiments 1 to 10, wherein said thermoplastic target polymer is low-density polyethylene (LDPE) or polypropylene (PP) and said solvent is n-heptane or n-nonane.
14. Method according to any one of embodiments 1 to 11, wherein said thermoplastic target polymer is low-density polyethylene (LDPE) and said solvent is n-heptane.
15. Method according to any one of embodiments 1 to 10, wherein said thermoplastic target polymer is polypropylene (PP) and said solvent is n-nonane.
16. Method according to any one of embodiments 1 to 10, wherein said thermoplastic target polymer is polyamide (PA) and said solvent is propylene glycol.
17. Method according to any one of embodiments 1 to 16, wherein said solution or suspension in step i-3) contains 10 or more weight per cent of said thermoplastic target polymer with respect to the total weight of said solvent or mixture of solvents and the polymer that is dissolved.
18. Method according to any one of embodiments 1 to 17, wherein step i-3) is conducted at pressure which is less than 6 bar, more preferably less than 2 bar, in particular at atmospheric pressure.
19. Method according to any one of embodiments 1 to 18, wherein purifying said suspension or solution according to step ii-3) comprises removing undissolved components of said suspension or solution by mechanical solid-liquid separation, in particular using a centrifuge.
20. Method according to any of embodiments 1 to 19, wherein step v-3) comprises forming a polymer melt prior to extrusion and/or forming pellets using a pellet cutter after extrusion.
21. Polymer material obtained by a method as defined in any one of embodiments 1 to 20.
22. Plastic waste recycling system, in particular for implementing the method according to any one of embodiments 1 to 21, comprising the following items:
   1) preferably a station that comprises a downsizing device for plastic waste, in particular a shredder;
   2) preferably a station for washing the downsized plastic waste;
   3) a station that comprises a vessel, wherein the vessel comprises an agitator and/or a heating system, in particular for implementing step i-3) as described above;
   4) preferably a station that comprises a centrifuge for solid-liquid separation, in particular for implementing step ii-3) as described above;
   5) a station that comprises a flash evaporation unit, in particular for implementing step iv-3) as described above;
   6) preferably a station that comprises a plastic extruder for the production of polymer pellets, in particular wherein the plastic extruder has a heating unit or is connected to a heating unit, for heating the thermoplastic target polymer, in particular for implementing step v-3) as described above;
   wherein the plastic waste recycling system has a transfer system that transfers materials from each station to the next in the above listed order.

In one embodiment, the subject-matter of the present invention relates to a method for removing solvents from a fluidized form, in particular a suspension or solution, comprising a dissolved thermoplastic target polymer. It also relates to a plastic waste recycling system for recycling a thermoplastic target polymer. Furthermore, the invention relates to a use of a cross-flow filtration system for the removal of solvent from thermoplastic target polymer.

It is also an object of the present invention to provide an improved method for removing a solvent from a fluidized form comprising a dissolved thermoplastic target polymer that overcomes the problems associated with the above described prior art and/or requires less energy than previous techniques. It is also an object of the present invention to provide a plastic waste recycling system for recycling plastic waste comprising a thermoplastic target polymer.

Hence a method for removing a solvent from a fluidized form comprising a thermoplastic target polymer, wherein the method comprises the following steps:
i-4) providing said fluidized form;
ii-4) preferably purifying said fluidized form, in particular by means of mechanical solid-liquid separation;
iii-4) concentrating said fluidized form using a cross-flow filtration unit having a membrane, permeable for the solvent and impermeable for the thermoplastic target polymer.

In one embodiment a method for removing a solvent from a fluidized form comprising a dissolved thermoplastic target polymer, in particular for recycling plastic waste comprising a thermoplastic target polymer further comprises the following additional steps:
iv-4) degassing and/or extrusion of said thermoplastic target polymer.

In one embodiment said fluidized form comprising said thermoplastic target polymer is selected from the group comprising a solution, a suspension, a polymer gel, and polymer melt.

In one embodiment wherein said suspension or solution comprising said thermoplastic target polymer is obtained by adding a solvent or a mixture of solvents to said plastic material, in particular plastic waste or pre-treated plastic waste, preferably using a heating system, wherein said thermoplastic target polymer is essentially soluble in said solvent or said mixture of solvents.

It was surprisingly found that with the above described combination of steps solvent and particles may be removed in a particularly energy efficient manner. Also small molecule impurities may be removed.

The above steps i-4) to iv-4) do not necessarily signify a specific sequence or number of steps. However, preferably the steps of the method are implemented with ascending numbers, i.e. in the order as shown above. Some of said steps may be optional and in some embodiments optional steps are not implemented. For example in one embodiment step i-4) may directly be followed by step iii-4) without implementation of step ii-4) It cannot be derived alone from the numbers i-4) and iii-4) that a step ii-4) has to be implemented. Also the above shown steps do not exclude additional steps that are not explicitly mentioned. For example plastic waste comprising the thermoplastic target polymer may in some embodiments be sorted prior to step i-4).

According to some embodiments providing the suspension or solution comprising the dissolved thermoplastic target polymer in accordance with step i-4) is achieved by dissolving the thermoplastic target polymer in the solvent at an elevated temperature.

According to some embodiments providing the suspension or solution in accordance with step i-4) comprises dissolving said thermoplastic target polymer at least partially in said solvent in a, in particular closed and/or gastight, vessel comprising the solvent, wherein an agitator for stirring the suspension or solution is provided. The agitator may be connected to said vessel and/or it may be disposed in said vessel. It is in some embodiments possible to dispose the agitator within the vessel without connection to the vessel, e.g. by hanging the agitator into the vessel from above. However, often the agitator is connected to the, in particular closed and/or gastight, vessel. The suspension or solution is preferably stirred for at least 15 min, in particular for at least 30 min. Preferably, the suspension or solution is stirred for less than 6 h, in particular for less than 2 h (120 min). It was found that stirring expedites dissolving the thermoplastic target polymer in the solvent.

In some embodiments the thermoplastic target polymer has an average molecular mass of 50 to 20.000 kDa, in particular of 100 to 4.000 kDa, in particular preferred of 200 to 2.000 kDa. In some embodiments the thermoplastic target polymer has a number average molecular weight of 50 to 20.000 kDa, in particular of 100 to 4.000 kDa, in particular preferred of 200 to 2.000 kDa. Preferably the membrane is designed to retain the thermoplastic target polymer. Preferably the membrane is designed to retain any molecules, in particular of the thermoplastic target polymer, having a molecular mass higher than 200 kDa, preferably higher than 100 kDa. In some embodiments the membrane is designed to be impermeable for molecules with a molecular weight of 1000 kDa or more, in particular of 500 kDa or more, in particular preferred of 200 kDa or more.

It is preferred if the suspension or solution is heated in the above mentioned step i-4) to an average temperature above 20°C, in particular to an average temperature above room temperature of 25°C, in particular preferred to an average temperature of more than 40°C. In some embodiments the suspension or solution has an average temperature of at least 50°C, in particular of at least 80°C. In some embodiments during dissolving of the thermoplastic target polymer in the solvent, the solvent is heated in step i-4) to an average temperature of 20 to 160°C, in particular of 40 to 140°C, preferably of 50 to 100°C. In some embodiments the suspension or solution is heated to an average temperature of 60 to 180°C. For low-density polyethylene (LDPE) as a thermoplastic target polymer an average temperature of 80 to 120°C was found to be particularly suitable for dissolving said polymer. For high-density polyethylene (HDPE) as a thermoplastic target polymer an average temperature of 100 to 140°C was found to be particularly suitable for dissolving said polymer. For polypropylene (PP) as a thermoplastic target polymer an average temperature of 120 to 160°C was found to be particularly suitable for dissolving said polymer. In some embodiments the average temperature in the above described vessel of the suspension or solution during step i-4), in particular when dissolving the thermoplastic target polymer, is above 20°C, preferably above 40°C, in particular above 60°C, in particular preferred above 80°C. This may also be the average temperature of the suspension or solution in said vessel comprising said solvent or suspension.

In some embodiments the peak temperature of the suspension or solution during the above mentioned step i-4), in particular when dissolving the thermoplastic target polymer, is above 20°C, preferably above 40°C, in particular above 60°C, in particular preferred above 80°C. This may also be the peak temperature of the solvent and/or suspension or solution in said vessel comprising said solvent or suspension. It is to be understood that the average temperature is preferably selected in such a way that a most - if not all - of the thermoplastic target polymer is dissolved and/or remains dissolved in said solvent.

In some embodiments the average temperature in step i-4) does not differ by more than 20 °C, in particular by not more than 10 °C, from the average temperature in step iii-4) In some embodiments at least at one point of time the solvent has an average temperature that does not differ by more than 20 °C, in particular by not more than 10 °C, from an average temperature of the solvent during the above mentioned step iii-4) at another point of time.

In some embodiments purifying said suspension or solution comprises removing undissolved components of said suspension or solution by mechanical solid-liquid separation. In some embodiments the mechanical solid-liquid separation is achieved by a centrifuge. In some embodiments a sieve, in particular a metal sieve, may be used alternatively or additionally for mechanical solid-liquid separation.

In some embodiments said solid-liquid separation removes any particles that weigh more than 1000 mg, in particular more than 100 mg, preferably more than 10 mg. In some embodiments the solid-liquid separation removes any particles that have a size of more than 50 mg, in particular more than 5 mg, preferably more than 1 µm . After solid-liquid separation the suspension preferably separates into a solution comprising the thermoplastic target polymer and solid particles.

In some embodiments the above mentioned step ii-4) comprises removing at least 50 % by weight, in particular at least 90 % by weight, preferably 99 % by weight, of any substances that have not been dissolved, preferably by centrifugation.

In some embodiments the centrifuge is a gastight centrifuge, in particular wherein the suspension may be centrifuged under gastight conditions.

In some embodiments the oxygen content within the centrifuge is below 15% by weight, in particular below 10% by weight, preferably below 7% by weight, in particular preferred with respect to the total weight of the suspension within the centrifuge and/or with respect to the gas composition within the centrifuge.

The suspension or solution provided in the above mentioned step i-4) preferably comprises one or more at least partially dissolved thermoplastic target polymers selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). Polyethylene (PE) is preferably selected from high-density polyethylene (HDPE) and low-density polyethylene (LDPE) or contains both. The method was found to be particularly suitable for recycling polyethylene (PE), in particular low-density polyethylene (LDPE).

In some embodiments the solvent used in the method is a single organic solvent or a mixture comprising at least one organic solvent, preferably a mixture of two or more organic solvents. In some embodiments said organic solvents are aliphatic or aromatic hydrocarbons. They may be saturated or unsaturated. In some embodiments they comprise cyclic organic compounds. Also formic acid, acetic acid, ketones such as acetone or propanone and alcohols such as methanol or ethanol or polyols such as glycol or 2-propanol or mixtures thereof may be suitable. The solvent is selected in such a way that the thermoplastic target polymer is dissolved. For polyethylene (PE), in particular low-density polyethylene (LDPE), heptane was found to be a particularly suitable solvent, in particular at 85 to 95°C and/or at a pressure of 0,8 to 1,2 bar. For polyethylene (PE), in particular high-density polyethylene (HDPE), heptane was found to be a particularly suitable solvent, in particular at 105 to 115°C and/or at a pressure of 1 to 2 bar. For polypropylene (PP) octane was found to be particularly suitable solvent, in particular at an average temperature of 125 to 135°C. For PVC acetone was found to be a particularly suitable solvent, in particular at an average temperature of 80 to 160°C. For polyamide (PA), in particular polyamide-6, propylene glycol was found to be a particularly suitable solvent, preferably at an average temperature of 80 to 160°C.

In some embodiments the above mentioned step i-4) is conducted at a pressure of 0,5 bar to 5 bar, in particular 0,8 bar to 2 bar. In some embodiments step i-4) is conducted at a pressure of 1 bar to 1.2 bar, in particular at atmospheric pressure (no extra pressure has to be applied in this case).

Preferably, the cross-flow filtration uses micro-, ultra- and/or nanofiltration, in particular ultrafiltration. Preferably the pore size of cross-flow filtration corresponds to a molecular weight cut-off in a range of 10 kDa to 2000 kDa, in particular 100 kDa to 1000 kDa, in particular for the used solvent. Also combinations are preferred in some embodiments, e.g. a pre-treatment by a first filter having a first pore size and a subsequent a second filter having a second pore size was found to be suitable.

In some embodiments for cross-flow filtration a cross-flow filtration unit is used that comprises a least one tube of a length of at least 20 cm, in particular at least 40 cm. In some embodiments the length may in the range of 20 cm to 300 cm, in particular 60 cm to 200 cm. The at least one tube may have a mean diameter of at least 5 mm, in particular at least 10 mm, in particular preferred of at least 20 mm. In some embodiments the mean diameter is less than 100 mm, in particular less than 50 mm.

In some embodiments the cross-flow filtration comprises a multitude of tubes, in particular tubes that are installed in parallel.

In some embodiments a cross-flow filtration comprises an inlet opening and an outlet opening for the thermoplastic target polymer.

In some embodiments cross-flow filtration is conducted at a pressure of more than 1 bar, in particular of more than 2 bar.

The cross-flow filtration may have a membrane that forms a tube. In some embodiments the membrane is coiled to form a tube.

In some embodiments the cross-flow filtration ha a multi-layered membrane wall, in particular with at least two, at least three or at least four layers of membrane.

It is preferred if the suspension or solution is heated in the above mentioned step iii-4) to an average temperature above 20°C, in particular to an average temperature above room temperature of 25°C, in particular preferred to an average temperature of more than 40°C, and/or maintained at said average temperature. In some embodiments in step iii-4) the suspension or solution has an average temperature of at least 50°C, in particular of at least 80°C. In some embodiments cross-flow filtration is conducted at an average temperature of 20 to 160°C, in particular of 40 to 140°C, preferably of 50 to 100°C. In some embodiments in step iii-4) the suspension or solution is heated to an average temperature of 60 to 180°C. For low-density polyethylene (LDPE) as a thermoplastic target polymer an average temperature of 80 to 120°C in step iii-4) was found to be particularly suitable. For high-density polyethylene (HDPE) as a thermoplastic target polymer an average temperature of 100 to 140°C in step iii-4) was found to be particularly suitable. For polypropylene (PP) as a thermoplastic target polymer an average temperature of 120 to 160°C was found to be particularly suitable in step iii-4).

This may also be the average temperature of the suspension or solution in a cross-filtration unit comprising said solvent or suspension.

In some embodiments the peak temperature of the suspension or solution during the above mentioned step iii-4) is above 20°C, preferably above 40°C, in particular above 60°C, in particular preferred above 80°C. This may also be the peak temperature of the solvent and/or suspension or solution in a cross-filtration unit comprising said solvent or suspension. In some embodiments in step iii-4) the suspension or solution has a peak temperature of at least 50°C, in particular of at least 80°C. In some embodiments cross-flow filtration is conducted at a peak temperature of 20 to 160°C, in particular of 40 to 140°C, preferably of 50 to 100°C. In some embodiments in the above mentioned step iii-4) the suspension or solution is heated to a peak temperature of 60 to 180°C.

In some embodiments the thermoplastic target polymer precipitates during cross-filtration.

In some embodiments the membrane is an inorganic membrane, in particular a ceramic membrane.

In some embodiments the membrane is an organic membrane, in particular an organic membrane that is selected from a group consisting of polyamide membrane, polyvinylidene difluoride membrane, polyethersulfone membrane, polysulfone membrane, polydimethylsiloxane membrane, polypropylene membrane. The organic membrane should be made from or comprise a polymer that does not dissolve in the solvent that is selected to implement the method, i.e. the choice of membrane depends on the selected solvent. If the thermoplastic target polymer is low-density polyethylene (LDPE) and/or the solvent is heptane, polyvinylidene difluoride membranes were found to be particularly suitable. If the thermoplastic target polymer is low-density polyethylene (LDPE) and/or the solvent is heptane, polyamide membranes were also found to be particularly suitable. Also mixtures of polyamide and polyvinylidene difluoride may be used for membranes for low-density polyethylene (LDPE) with heptane as a solvent. If the thermoplastic target polymer is polypropylene and/or the solvent is octane, polysulfone membranes were found to be particularly suitable. If the thermoplastic target polymer is polyamide (PA), in particular polycaprolactam (PA6), and/or the solvent is propylene glycol, polypropylene membranes were found to be particularly suitable. If the thermoplastic target polymer is polyvinyl chloride (PVC) and/or the solvent is acetone, polypropylene membranes were again found to be particularly suitable.

In some embodiments the membrane, in particular one of the above named membranes, is chemically modified to have an increased polarity.

The membrane is preferably a solvent permeable porous membrane with respect to said solvent for the thermoplastic target polymer. Preferably the pore sizes are in the range of 0.1 to 0.001 micron.

In some embodiments only a single thermoplastic target polymer is present. In other embodiments a blend of thermoplastic target polymers is produced and may be used for production of pellets.

In some embodiments during cross-flow filtration a gravitational field that is essentially perpendicular to the direction of flow is applied. This may be done by orientating the flow essentially perpendicular to the gravitational field of the earth. In other embodiments during cross-flow filtration a gravitational field that is essentially parallel to the direction of flow is applied. Also both is possible for meandering tubes. However, often linear tubes are preferred.

In some embodiments the flow has a speed during cross-flow filtration of 0.5 to 50 m/s, preferably 1 to 10 m/s, in particular 2 to 5 m/s.

In some embodiments the pressure difference during cross-flow filtration is at least 0,1 to 5 bar, preferably 1 to 4 bar, in particularly preferred 2 to 3 bar.

In some embodiments the membrane is designed for retaining a thermoplastic target polymer with a molecular weight cut-off selected from a range of 10 kDa to 2000 KDa, in particular of 100 kDa to 1000 kDa, wherein molecules with a weight that is higher than a selected weight from said ranges do not pass the membrane, in particular when said molecule is within the solvent, preferably dissolved in said solvent.

In some embodiments the membrane is permeable for molecules with a molecular weight of 0,1 kDa. In some embodiments the membrane is permeable for molecules with a molecular weight of 1 kDa. Although solvents usually have a much lower molecular weight, it was surprisingly found that it is advantageous, when the membrane has pores that are significantly larger than the solvent molecules.

Preferably cross-flow filtration is conducted at an average temperature of less than 180°C. In some embodiments said cross-flow filtration is conducted at an average temperature of 20 to 180°C, in particular of 60 to 160°C, in particular preferred of 80 to 120°C.

In some embodiments the cross-flow filtration is a batch filtration using progressively more retentive membranes, in particular a microfiltration membrane and an ultrafiltration membrane.

Preferably the solvent for the thermoplastic target polymer comprises at least 60 % by weight of organic solvent, in particular at least 80% by weight of organic solvent, in particular preferred at least 90% by weight of organic solvent. The content of water in said solvent - if any - is preferably below 20% by weight, in particular below 10% by weight. In some embodiments the suspension or solution may also comprise a solvent with the above described composition.

In some further embodiments the cross-flow filtration is a continuous filtration, preferably by using several membranes in series, in particular a microfiltration membrane and an ultrafiltration membrane.

In some further embodiments the cross-flow filtration is a variable pressure filtration by using a single membrane or several membranes and varying the applied pressures, in particular by using a single membrane, preferably a an ultrafiltration membrane.

These techniques sometimes also can be combined, e.g. a cross-flow filtration technique that is a continuous filtration by using several membranes in series and with variable pressures.

In some embodiments the above mentioned steps i-4) and/or ii-4) and/or iii-4) and/or iv-4) are conducted in an environment containing less than 15 % by weight of oxygen, in particular less than 5 % by weight of oxygen, preferably less than 1 % by weight of oxygen, in particular within the liquid and/or gaseous phase. Not all steps have to contain a gaseous and a liquid phase environment.

In some embodiments the solvent is at least partially recycled for dissolving thermoplastic target polymer to provide more suspension or solution comprising the dissolved thermoplastic target polymer in accordance with step i-4) In some embodiments the solvent for reuse is purified by evaporation of the solvent and condensation and/or by distillation, wherein impurities are removed by evaporation and the solvent remains. Often the best approach depends on the boiling point of the solvent. However, in some embodiments purification is not necessary and the solvent obtained by cross-flow filtration may be reused directly.

On some embodiments the concentrated thermoplastic target polymer obtained in the above mentioned step iii-4) has the consistency of a gel. It may be then called a thermoplastic target polymer gel.

In some embodiments polymer pellets are formed in the above mentioned step iv-4). In some embodiments products such as foils, pipes, bottels, pallets, lawn grids or building materials for houses are formed from said pellets or directly from concentrated thermoplastic target polymer obtained in step iii-4) by blow moulding, extrusion, pressing and/or injection moulding. In some embodiments said polymer pellets are received from the outlet opening of an extruder.

In some embodiments the above mentioned step iv-4) comprises forming a polymer melt prior to extrusion and/or forming pellets or products using a pellet cutter after extrusion. Residual solvent is more efficiently removed from such a polymer melt.

In some embodiments at least partially removing solvent means that at least 50 % by weight, in particular at least 75 % by weight, preferably at least 90 % by weight of the solvent is removed. In some embodiments at least 99 % by weight of the solvent is removed by the method in accordance with the invention.

The method may be used for removing of solvent from any kind of solution comprising the thermoplastic target polymer. However, it was found that the method is very robust with respect to impurities and may be adapted to isolate a thermoplastic target polymer from plastic waste, i.e. for recycling plastic waste comprising thermoplastic target polymer. Therefore, in some embodiments the method for removing a solvent is part of a method for recycling plastic waste comprising a thermoplastic target polymer and in step i-4) plastic waste comprising the thermoplastic target polymer is at least partially dissolved in the solvent, in particular using an agitator and/or a heating system. The plastic waste may be immersed in the solvent dissolving the thermoplastic target polymer in said solvent. Surprisingly impurities that are present in said plastic waste do not prevent that a cross-flow filtration can be efficiently conducted. Said method for recycling plastic waste is suitable for any kind of plastic waste comprising a thermoplastic target polymer.

In some embodiments of the method for recycling plastic waste at least 50 % by weight, preferably at least 80 %, by weight in particular 90 % by weight, of the plastic waste is plastic, wherein said plastic also includes the thermoplastic target polymer. In some embodiments at least 50 % by weight, preferably at least 80 %, by weight in particular 90 % by weight, of the plastic waste is the thermoplastic target polymer. In some embodiments at least 10 % by weight, preferably at least 20 % by weight, in particular 50 % by weight, of the plastic waste is non-plastic.

In a preferred embodiment the plastic waste is made to at least 80 % by weight, preferably to at least 90% by weight, of said thermoplastic target polymer, in particular a single polymer or a mixture of two or three polymers.

It is possible that the plastic waste is sorted before insertion in accordance with the above mentioned step ii-4) and providing a thermoplastic target polymer in accordance with the above mentioned step i-4) may comprise sorting said plastic waste. However, in some embodiments mixed plastic waste is used and little or no sorting is done.

Alternatively or additionally according to some embodiments providing a thermoplastic target polymer in accordance with the above mentioned step i-4) may comprise washing of plastic waste prior to insertion of the plastic waste into the solvent, e.g. washing with water. Washing removes some impurities. In some embodiments washing may comprise washing with water at an average temperature of more than 40°C, in particular more than 80°C. Also washing with water may be a conducted using a friction washer, in particular wherein a rotor transports plastic waste and/or water is transported in opposite direction to the plastic waste. Friction by rotors and water remove impurities. In some embodiments there is no such step with a friction washer and the shredded plastic waste is used directly. This may be the case if plastic waste from post-industrial residues is recycled. With plastic waste from consumer products often said washing step is advantageous.

Preferably providing the suspension or solution comprising the dissolved thermoplastic target polymer is achieved by dissolving a thermoplastic target polymer that is comprised in plastic waste. According to some embodiments providing the suspension or solution comprising the dissolved thermoplastic target polymer in accordance with step i-4) is achieved by shredding plastic waste comprising the thermoplastic target polymer prior to insertion of said plastic waste into the solvent. Shredding improves speed and/or completeness of dissolving of the thermoplastic target polymer, if the thermoplastic target polymer is obtained from plastic waste.

In some embodiments said plastic waste contains polyethylene (PE) and aluminium, preferably polyethylene, aluminium and paper. In some embodiments at least 60 % by weight, in particular at least 80 % by weight, preferably at least 90 % by weight, of the plastic waste consists of said materials.

In some embodiments the plastic waste is at least partially obtained from packaging materials and/or foils. In some embodiments at least 60 % by weight, in particular at least 80 % by weight, preferably at least 90 % by weight, of the plastic waste consists of packaging materials and/or foils.

In some embodiments said plastic waste is at least partially obtained from car parts. In some of said embodiments at least 60 % by weight, in particular at least 80 % by weight, preferably at least 90 % by weight, of the plastic waste consists of car parts.

In some further embodiments the plastic waste comprises at least one type of object selected from a group consisting of cans, cups, foils, collapsible tubes, plastic bags. In some embodiments the plastic waste is mixed waste comprising at least two or three types of objects selected from a group consisting of cans, cups, foils, collapsible tubes, plastic bags. Said types of objects preferably constitute at least 20% by weight, in particular at least 40% by weight, preferably at least 60% by weight, of the total weight of said plastic waste.

The invention also relates to a plastic waste recycling system comprising the following items:
1) preferably a station that comprises a downsizing device for plastic waste, in particular a shredder;
2) preferably a station for washing the downsized plastic waste;
3) a station that comprises a vessel, wherein the vessel comprises an agitator and/or a heating system, in particular for implementing step i-4) as described above;
4) preferably a station that comprises a centrifuge for solid-liquid separation, in particular for implementing step ii-4) as described above;
5) a station that comprises a cross-flow filtration unit, in particular for implementing step iii-4) as described above;
6) preferably a station that comprises a plastic extruder for the production of polymer pellets, in particular wherein the plastic extruder has a heating unit or is connected to a heating unit, for heating the thermoplastic target polymer, in particular for implementing step iv-4) as described above;
wherein the plastic waste recycling system has a transfer system that transfers materials from each station to the next in the above listed order.

Optional stations are not implemented in some embodiments and if it is not the transfer system transfers to the next station that is implemented. Also additional stations that are not described explicitly may be implemented.

Removing solvent in step iv-4) does not preclude small residues of solvent. However, most of the remaining solvent is removed, in particular at least 70 % by weight, preferably at least 85 % by weight, in particular preferred at least 95% by weight of any remaining solvent.

The vessel comprises a solvent and/or an agitator for stirring the waste. The agitator may be connected to said vessel and/or it may be disposed in said vessel. The vessel may in some embodiments be a tank, in particular a closed tank. The vessel may be a tank with a volume of 1 m³ to 100 m³, in particular of 5 m³ to 50 m³, in particular preferred of 20 m³ to 40 m³.

Preferably the plastic waste recycling system is adapted for implementing the method as described above.

Preferably the vessel comprises an organic solvent for dissolving plastic waste at least partially.

Any devices that are used for the method as described above may preferably be also part of the plastic waste recycling system, e.g. the vessel as described for the method of the specifics of the membrane.

The invention also relates to the use of the above described plastic waste recycling system for recycling a thermoplastic target polymer from plastic waste by dissolving said thermoplastic target polymer in an organic solvent and re-extraction said thermoplastic target polymer from the organic solvent.

The invention also relates to the use of a cross-flow filtration unit for at least partially removing solvent from a suspension or solution comprising dissolved polymer, preferably using the type of membrane that is described in this disclosure.

The invention also relates to the use of a cross-flow filtration unit and/or cross-flow filtration for recycling of plastic waste, in particular municipal solid waste, preferably using the type of membrane that is described in this disclosure and/or for the type and/or composition of plastic waste that is described in this disclosure.

With the above context, the following consecutively numbered embodiments provide further specific aspects of the invention:
1. Method for removing a solvent from a fluidized form comprising a thermoplastic target polymer, wherein the method comprises the following steps:
   i-4) providing said fluidized form;
   ii-4) preferably purifying said fluidized form, in particular by means of mechanical solid-liquid separation;
   iii-4) concentrating said fluidized form using a cross-flow filtration unit having a membrane, permeable for the solvent and impermeable for the thermoplastic target polymer.
2. Method according to embodiment 1, further comprising the following steps:
   iv-4) degassing and/or extrusion of said thermoplastic target polymer.
3. Method according to any one of embodiments 1 or 2, wherein said fluidized form comprising said thermoplastic target polymer is selected from the group comprising a solution, a suspension, a polymer gel, and polymer melt.
4. Method according to any one of embodiments 1 to 4, wherein said fluidized form comprising said thermoplastic target polymer is a solution or a suspension comprising said target polymer.
5. Method according to embodiment 4 wherein said suspension or solution comprising said thermoplastic target polymer is obtained by adding a solvent or a mixture of solvents to said plastic material, in particular plastic waste or pre-treated plastic waste, preferably using a heating system, wherein said thermoplastic target polymer is essentially soluble in said solvent or said mixture of solvents.
6. Method according to any one of embodiments 1 to 5, wherein the membrane is designed to be impermeable for thermoplastic target polymers with an average molecular mass of 1000 kDa or more, in particular thermoplastic target polymers with an average molecular mass of 500 kDa or more, in particular preferred thermoplastic target polymers with an average molecular mass of 200 kDa or more.
7. Method according to any one of embodiment 1 to 6, wherein purifying said suspension or solution comprises removing undissolved components of said suspension or solution by mechanical solid-liquid separation, in particular using a centrifuge.
8. Method according to one of embodiments 1 to 7, wherein step iv-4) comprises forming a polymer melt prior to extrusion and/or forming pellets using a pellet cutter after extrusion.
9. Method according to any one of embodiments 1 to 8, wherein the method for removing a solvent is for recycling plastic waste comprising a thermoplastic target polymer and/or in step i-4) plastic waste comprising the thermoplastic target polymer is at least partially dissolved in the solvent, in particular using an agitator and/or a heating system.
10. Method according to any one of embodiments 1 to 9, wherein during step i-4) and/or iii-4) the suspension or solution has an average temperature of at least 50°C, in particular of at least 80°C, and/or
   wherein in step i-4) the average temperature does not differ by more than 20°C, in particular by not more than 10°C, from the average temperature in step iii-4)
11. Method according to any one of embodiments 1 to 10, wherein the solvent is a single organic solvent or a mixture of solvents comprising at least one organic solvent.
12. Method according to any one of embodiments 1 to 11, wherein said cross-flow filtration is conducted at an average temperature of 20 to 160°C, in particular of 40 to 140°C, preferably of 50 to 100°C.
13. Method according to any one of embodiments 1 to 12, wherein the cross-flow filtration is
   a) a batch filtration using progressively more retentive membranes; or
   b) a continuous filtration by using several membranes in series; or
   c) a variable pressure filtration by using a single membrane or several membranes and varying the applied pressures.
14. Method according to any one of embodiments 1 to 13, wherein the method is for recycling plastic waste and carried out in a plastic waste recycling system according to embodiment 13.
15. Method according to any one of embodiments 1 to 14, wherein the thermoplastic polymer is a polyolefin, in particular low-density polyethylene (LDPE).
16. Method according to any one of embodiments 1 to 15, wherein the membrane is selected from a group consisting of polyamide membrane, polyvinylidene difluoride membrane, polyethersulfone membrane, polysulfone membrane, polydimethylsiloxane membrane, polypropylene membrane.
17. Plastic waste recycling system, in particular for implementing the method according to any one of embodiments 1 to 16, comprising the following items
   1) preferably a station that comprises a downsizing device for plastic waste, in particular a shredder;
   2) preferably a station for washing the downsized plastic waste;
   3) a station that comprises a vessel, wherein the vessel comprises an agitator and/or a heating system, in particular for implementing step i-4) as described above;
   4) preferably a station that comprises a centrifuge for solid-liquid separation, in particular for implementing step ii-4) as described above;
   5) a station that comprises a cross-flow filtration unit, in particular for implementing step iii-4) as described above;
   6) preferably a station that comprises a plastic extruder for the production of polymer pellets, in particular wherein the plastic extruder has a heating unit or is connected to a heating unit, for heating the thermoplastic target polymer, in particular for implementing step iv-4) as described above;
   wherein the plastic waste recycling system has a transfer system that transfers materials from each station to the next in the above listed order.
18. Use of a cross-flow filtration unit for removing solvent from a suspension or solution comprising dissolved thermoplastic polymer.
19. Use of embodiment 18, wherein said cross-flow filtration unit is used for recycling plastic waste.

In one embodiment the subject-matter of the present invention relates to a method for removing additives and/or impurities from a fluidized form comprising a thermoplastic target polymer while being processed in an extruder, wherein the fluidized form comprising a thermoplastic target polymer is subjected to a counter-stream of at least one extractant, wherein the method comprises the following steps:
i-5) providing said fluidized form:
ii-5) delivering said fluidized form to an extruder, wherein said extruder comprises a membrane or sieve, wherein the membrane or sieve is permeable for the extractant, solvent and/or lubricant and impermeable for the thermoplastic target polymer;
iii-5) purifying said fluidized form by means of extraction using a counter-stream of at least one extractant and/or a process aid in said extruder,
iv-5) degassing and/or extrusion of said thermoplastic target polymer.

As used herein, the terms "fluidized form" or "fluidized polymer comprising said polymer" relates to a material comprising said polymer which is in a fluid form. The fluidity of polymers is affected by many parameters and by the flow properties of polymers. In particular, fluidity is achieved by heating or melting said target polymer. In some embodiments the fluidity is achieved by adding a solvent or mixture or solvents to said polymer in order to at least partially dissolve said polymer. The fluidity of said polymer may be impacted by the amount of the solvent added. For example, with a relatively low amount of solvent a polymer gel may be obtained, wherein the polymer networks are swollen in the added solvent or mixture of solvent. With a relatively high amount of solvent a nearly complete dissolution of said polymer may be achieved to obtain a solution or a suspension comprising said polymer.

In one embodiment the present invention relates to a method, wherein said fluidized form comprising said thermoplastic target polymer in step i-5) is selected from the group comprising a solution, a suspension, a polymer gel and polymer melt.

In another embodiment the present invention relates to a method, wherein said fluidized form comprising said thermoplastic target polymer in step i-5) is a suspension or solution comprising said dissolved target polymer.

In another specific embodiment the present invention relates to a method, wherein said suspension or solution comprising said dissolved thermoplastic target polymer is obtained by adding a solvent or a mixture of solvents to said plastic material, in particular plastic waste or pre-treated plastic waste, preferably using a heating system, wherein said thermoplastic target polymer is essentially soluble in said solvent or said mixture of solvents and wherein the solvent is different to the extractant used in the counter-stream for extraction.

It was surprisingly found that by applying an extractant to the fluidized form comprising said thermoplastic target polymer according to the method of the present application, the level of additives and degradation by-products is reduced in the resulting purified polymeric mass.

In one embodiment of the present application, the extruder is supplied with a membrane or sieve which is permeable for the solvent and small molecules, but not permeable for the polymer particles.

In the context of the present application, small molecules refer to every component that is not polymer. In another embodiment of the present application, small molecules refer to components <200kDa.

In another embodiment the present invention relates to a method, wherein the membrane or sieve is designed to be impermeable for with an average molecular mass of 1000 kDa or more, in particular thermoplastic target polymers with an average molecular mass of 500 kDa or more, in particular preferred thermoplastic target polymers with an average molecular mass of 200 kDa or more.

In another embodiment of the present application, the resulting extract escapes the extruder via the membrane or sieve so that the extruder is basically also used as an extractor.

Depending whether the thermoplastic target polymers in the extruder melts completely or not, liquid-liquid or solid-liquid exractions are possible.

In another embodiment of the present application, extrusion is a continuous process, wherein the extractant is applied while extrusion.

In another preferred embodiment of the present application, the term extruder is selected from the group comprising Single-Screw extruder, twin-screw extruder, planetary extruder, ring extruder.

In another embodiment of the present application, a twin-screw extruder is used, wherein said twin-screw extruder enables an ideal mixing of extractant and fluidized polymer (melt, suspension or solution)

In one further embodiment the present application relates to a method, wherein the resulting extract which is enriched with impurities escapes the extruder via the membrane or the sieve, wherein the resulting purified polymer mass is subjected to a standard extrusion procedure.

In another embodiment the present application relates to a method, wherein during degassing and/or extrusion of said thermoplastic target polymer in step iv-5), the additives oxidize and thus the polymer remains intact.

In another embodiment the present application relates to a method, wherein at least 2 streams are coming out from the extruder, one stream is the extractant and the other one is the polymer.

In another embodiment the present application relates to a method, wherein said extruder comprises an inlet opening and an outlet opening for the thermoplastic target polymer.

As used herein, the term counter-stream relates to an extractant, wherein said extractant is not a solvent for the polymer, but a solvent for impurities (insolubility definition). Pressure of the extractant stream is above 50 bar, rather above 100 bar. Pressure difference of counter stream and regular stream is less than 10 bar, rather less than 5 bar.

In another specific embodiment the present application relates to a method, wherein the counter-stream is generated by pumping a fluid into the extruder, wherein the polymer melt/solution/mass comes out of the extruder. Therefore pressure needs to be higher than the pressure of the melt/solution/mass.

In one embodiment the present application relates to a method, wherein said additives are selected from the group comprising antioxidants, light stabilizers, UV-absorbers, processing aids and lubricants, antistatic agents, biocides, metal deactivators, slipping agents , anti- slipping agents, antiblocking agents and/or nucleating agents.

In another embodiment the present application relates to a method, wherein said additives are selected from the group comprising antioxidants as "free-radical scavengers, thermostabilizer as stabilizer for processes or as long-term stabilizers, light stabilizers against photo-oxidation, UV-Absorber for conversion of radiation into heat, processing aids and lubricants for reduction of shearing, antistatic agents to decrease surface resistance, biocides for inhibition of accumulation of microorganisms, metal deactivators for inhibtion of metal catalyzed polymer degradation, slipping agents for lubrication effect on surfacee, anti- slipping agents, antiblocking agent for preventing sticking under heat/pressure of foils/films
and/or nucleating agents for increasing crystallization temperature.

In the context of the present invention, the concentration of these additives is as follows:

| Antioxidants: Free-radical scavengers | | | | | | |
|---|---|---|---|---|---|---|
| Type | Primary Stabilizer | Dosing amount (Primary Stabilizer) in % | Figure | Co-Stabilizer | Dosing amount (Co-Stabilizer) in % | Figure |
| Thermostabilizer: Stabilizer for processes | sterically hindered phenols | 0,1-0,2 | 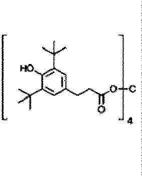 | Phosphite | 0,1-0,2 | 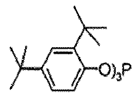 |
| | | | | Hydroxylamine | 0,1-0,2 | 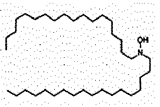 |
| Thermostabilizer: long-term stabilizers | sterically hindered phenols | 0,01-0,15 | | Thiosynergists | 0,15-0,45 | 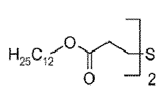 |
| | | | | sterically hindered Amine (HAS) | 0,1-0,2 | 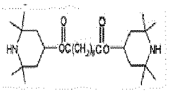 |

| **Light stabilizers: Inhibition of photo-oxidation** | | | |
|---|---|---|---|
| **Type** | **Chemical Compound** | **Dosing amount in%** | **Figure** |
| UV-Absorber Conversion of radiation into heat | Triazine | 0,05 - 2 | 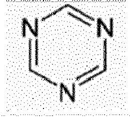 |
| | Benzotriazole | 0,05 - 2 | 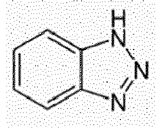 |
| Impaired Amine Stabilizers (HALS) stop reaction of more aggressive photoxidation products | | 0,15 - 0,3 | 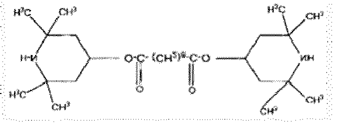 |

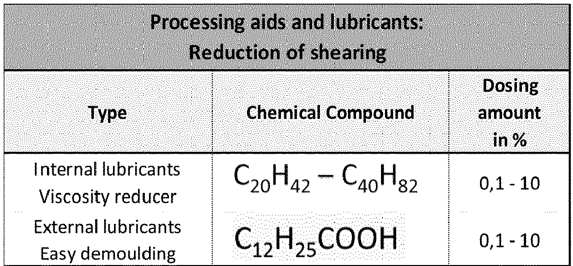

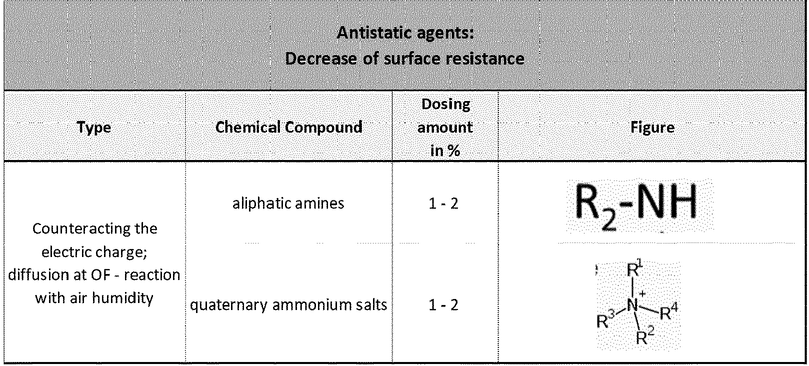

| **Biocides: Inhibition of accumulation of microorganisms** | | | |
|---|---|---|---|
| **Type** | **Chemical Compound** | **Dosing amount in %** | **Figure** |
| With LDPE only conditionally necessary (application area) | DCOIT | 0,1-2 | 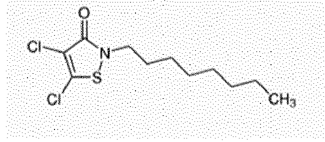 |
| | Silver | 0,1-2 | |

| **Metal Deactivators: Inhibition of metal ctalyzed Polymer degration** | | | |
|---|---|---|---|
| **Type** | **Chemical Compound** | **Dosing amount in %** | **Figure** |
| Catalysts from the synthesis are complexed = deactivated | Hydrazinphenol | 0,05 - 0,5 | 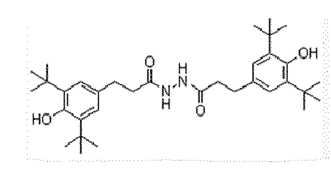 |

| **Slipping agent: Permanent lubrication effect on the surface** | | | |
|---|---|---|---|
| **Type** | **Chemical Compound** | **Dosing amount in %** | **Figure** |
| Foils do not stick to each other- Sliding possible | Oleic acid amide | 0,05 | 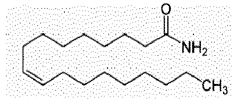 |

| **Anti-slipping agent** | | | |
|---|---|---|---|
| **Type** | **Chemical compound** | **Dosing amount in%** | **Figure** |
| Prevent the material sacks, for example, from sliding against each other | PVAc | 0,05 - 0,1 | 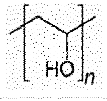 |
| | Addition of amorphous PP dissolved in petrol + wax | 0,05 - 0,1 | |

In another embodiment the present invention relates to a method, wherein said impurities are selected from the group comprising printing dye, adhesives, degraded polymer chains, colorants.

In another specific embodiment the present invention relates to a method, wherein said fluidized form comprising a thermoplastic target polymer is subjected to a counter-stream further comprising a process aid.

Surprisingly, it was found that extrusion process consumes less energy when a process aid is added. By the addition of the process aid, the friction is reduced when the mass is moving across a die.

Furthermore, in a standard process polymer heats up while moving across a die. When the friction inside the die is released, the polymeric mass heats up to a lower extent. This, in turn, suppresses depolymerization and further side-reactions as well as helps to manage the temperature of the process.

In one embodiment the present invention relates to a method, wherein said process aid is selected from the group comprising lubricants and slipping agents.

In another embodiment the present invention relates to a method, wherein said lubricant is selected from the group comprising metal salts of fatty acids like zinc stearate.

In another embodiment the present invention relates to a method, wherein said lubricant is soluble in the extracting solvent and is extracted by the solvent.

The processing aid is thereby removed from the resulting purified polymeric mass.

In another specific embodiment the present invention relates to a method, wherein said extractant is selected from the group comprising ketones, esters, alcohols, organic acids and water.

In a further embodiment the present invention relates to a method, wherein said extractant is selected from the group comprising acetone, ethyl acetate, ethanol.

In another embodiment the present invention relates to a method, wherein said extractant is a non-solvent for the thermoplastic target polymer in the fluidized form.

In another embodiment the present application relates to a method for removing additives and/or impurities from a fluidized form comprising a thermoplastic target polymer, wherein the method is for recycling plastic waste comprising a thermoplastic target polymer and/or in step i-5) plastic waste comprising the thermoplastic target polymer is at least partially dissolved in the solvent, in particular using an agitator and/or a heating system.

In another embodiment the present application relates to a method, wherein during dissolving the thermoplastic target polymer in a solvent (step i-5), the suspension or solution/mass/ melt has an average temperature of at least 50°C, in particular of at least 80°C.

In another embodiment the present application relates to a method, wherein during dissolving the thermoplastic target polymer and delivering said suspension or solution/mass/melt comprising said dissolved thermoplastic target polymer to an extruder (step ii-5) the suspension or solution/mass/ melt has an average temperature of at least 50°C, in particular of at least 80°C.

In another embodiment the present application relates to a method, wherein during extrusion of said thermoplastic target polymer (step iv-5) the suspension or solution/mass/ melt has an average temperature of at least 150°C, in particular of at least 180°C, more preferred in particular of at least 200°C. In another embodiment the present application relates to a method, wherein during extrusion of said thermoplastic target polymer (step iv-5) the suspension or solution/mass/melt has a delivery temperature which corresponds at least to the temperature of the solvent separation.

In a specific embodiment of the application, wherein the dissolving temperature for PE is at least 95 °C and the extrusion temperature is at least 220 °C.

Another embodiment of the present application relates to a method, wherein the thermoplastic polymer is a polyolefin, in particular low-density polyethylene (LDPE).

Another embodiment of the present application relates to a method, wherein the membrane is selected from a group comprising of polyamide membrane, polyvinylidene difluoride membrane, polyethersulfone membrane, polysulfone membrane, polydimethylsiloxane membrane, polypropylene membrane.

Another embodiment of the present application relates to a method, wherein the sieve is selected from a group comprising of metal, ceramic.

In another embodiment the present application relates to a method, wherein the mesh size of said sieve is < 50 µm to create high pressure loss, so that only liquid media passes the sieve, but not the polymer melt/solution/mass.

In another embodiment the present application relates to a method, wherein the latter steps ii-5) and iii-5) are performed in a carrousel extractor.

In another embodiment the present application relates to a method, wherein the latter steps ii-5) and iii-5) are performed in a mixer-settler extractor.

In another embodiment the present application relates to a method, wherein said plastic material is selected from the group comprising post-consumer use polymers, post-industrial use polymers and combinations thereof.

In another embodiment the present application relates to a method, wherein said thermoplastic target polymer is a thermoplastic polymer.

In another embodiment the present application relates to a method, wherein said thermoplastic target polymer is selected from the group comprising polyolefins, polyamide (PA) and combinations thereof.

In another embodiment the present application relates to a method, wherein said thermoplastic target polymer is low-density polyethylene (LDPE).

In another embodiment the present application relates to a method, wherein said thermoplastic target polymer is polypropylene (PP).

In another embodiment the present application relates to a method, wherein said thermoplastic target polymer is polyamide (PA).

In another embodiment the present application relates to a method, wherein the solvent used in the latter step (i-5) is a single organic solvent or a mixture of solvents comprising at least one organic solvent.

In another embodiment the present application relates to a method, wherein said solvent is selected from the group comprising n-alkanes with a length/number of C-atoms up to C 12, iso-alkanes with a length/number of C-atoms up to C12, cyclic-saturated hydrocarbons with a length/number of C-atoms up to C12 for Polyolefines, organic acids, inorganic acids, polyole, water for Polyamides.

In a preferred embodiment the present application relates to a method, wherein said solvent is a saturated hydrocarbon.

In another embodiment the present application relates to a method, wherein said thermoplastic target polymer is low-density polyethylene (LDPE) and said solvent is n-heptane.

In another embodiment the present application relates to a method, wherein said thermoplastic target polymer is polypropylene (PP) and said solvent is n-octane.

In another embodiment the present application relates to a method, wherein said thermoplastic target polymer is polyamide (PA) and said solvent is propylenglycol.

In another embodiment the present application relates to a method, wherein step iii-5) is conducted under temperature which is lower by more than 10, in particular by more than 5 than the boiling point of said solvent.

In another embodiment the present application relates to a method, wherein step iii-5) is conducted under pressure which is lower than 6 bar, more preferably less than 2 bar, in particular at atmospheric pressure.

In another embodiment, the disclosed method is for recycling plastic waste and is carried out in a plastic waste recycling plant.

The invention also relates to a plastic waste recycling system comprising the following items:
1) preferably a station that comprises a downsizing device for plastic waste, in particular a shredder;
2) preferably a station for washing the downsized plastic waste;
3) preferably a station that comprises a vessel, wherein the vessel comprises an agitator and/or a heating system;
4) preferably a station that comprises a centrifuge for solid-liquid separation;
5) preferably a station that comprises a filtration unit or evaporation unit;
6) a station that comprises a plastic extruder for the production of polymer pellets, wherein the fluidized form comprising a thermoplastic target polymer is subjected to a counter-stream of at least one extractant in said extruder, wherein said extruder comprises a membrane or sieve, wherein the membrane or sieve is designed to be permeable for the extractant, solvent and/or lubricant and impermeable for the thermoplastic target polymer; in particular wherein the plastic extruder has a heating unit or is connected to a heating unit, for heating the thermoplastic target polymer, in particular for implementing steps iii-5) and iv-5) as described above;
wherein the plastic waste recycling system has a transfer system that transfers materials from each station to the next in the above listed order.

Optional stations are not implemented in some embodiments and if it is not the transfer system transfers to the next station that is implemented. Also additional stations that are not described explicitly may be implemented.

Preferably, the plastic waste recycling system is adapted for implementing the method as described above.

Any devices that are used for the method as described above may preferably be also part of the plastic waste recycling system.

The invention also relates to the use of the above described plastic waste recycling system for for implementing the method as described above.

It was surprisingly found that with the above described combination of steps additives and/or impurities may be removed in a particularly energy efficient manner. Also small molecule impurities may be removed.

With the above context, the following consecutively numbered embodiments provide other specific aspects of the invention:
1. Method for removing additives and/or impurities from a fluidized form comprising a thermoplastic target polymer while being processed in an extruder, wherein the fluidized form comprising a thermoplastic target polymer is subjected to a counter-stream of at least one extractant, wherein the method comprises the following steps:
   i-5) providing said fluidized form;
   ii-5) delivering said fluidized form to an extruder, wherein said extruder comprises a membrane or sieve, wherein the membrane or sieve is permeable for the extractant, solvent and/or lubricant and impermeable for the thermoplastic target polymer;
   iii-5) purifying said fluidized form by means of extraction using a counter-stream of at least one extractant and/or a process aid in said extruder,
   iv-5) degassing and/or extrusion of said thermoplastic target polymer.
2. Method according to embodiment 1, wherein said fluidized form comprising said thermoplastic target polymer in step i-5) is selected from the group comprising a solution, a suspension, a polymer gel, and polymer melt.
3. Method according to any one of embodiments 1 or 2, wherein said fluidized form comprising said thermoplastic target polymer in step i-5) is a suspension or solution comprising said dissolved target polymer.
4. Method according to embodiment 3 wherein said suspension or solution comprising said dissolved thermoplastic target polymer is obtained by adding a solvent or a mixture of solvents to said plastic material, in particular plastic waste or pre-treated plastic waste, preferably using a heating system, wherein said thermoplastic target polymer is essentially soluble in said solvent or said mixture of solvents and wherein the solvent is different to the extractant used in the counter-stream for extraction.
5. Method according to any one of embodiments 1 to 4, wherein said extruder comprises an inlet opening and an outlet opening for the thermoplastic target polymer.
6. Method according to embodiment 1, wherein the membrane or sieve is designed to be impermeable for thermoplastic target polymers with an average molecular mass of 1000 kDa or more, in particular thermoplastic target polymers with an average molecular mass of 500 kDa or more, in particular preferred thermoplastic target polymers with an average molecular mass of 200 kDa or more.
7. Method according to embodiment 1 or 2, wherein the counter-stream generated by pumping a fluid into the extruder, wherein the polymer melt/solution comes out of the extruder. Therefore pressure needs to be higher than the pressure of the melt/solution/mass.
8. Method according to any of the embodiments 1 to 7 wherein said additives are selected from the group comprising antioxidants, light stabilizers, UV-absorbers, processing aids and lubricants, antistatic agents, biocides, metal deactivators, slipping agents, anti-slipping agents, antiblocking agents and/or nucleating agents.
9. Method according to any of the embodiments 1 to 7, wherein said impurities are selected from the group comprising printing dye, adhesives, degraded polymer chains.
10. Method according to any of the embodiments 1 to 7, wherein said polymer solution/polymer melt is subjected to a counter-stream further comprising a process aid.
11. Method according to any of the embodiments 1 to 8, wherein said process aid is selected from the group comprising lubricants and slipping agents.
12. Method according to any of the embodiments 1 to 11, wherein said lubricant is selected from the group comprising metal salts of fatty acids like zinc stearate.
13. Method according to any of the embodiments 1 to 12, wherein said lubricant is soluble in the solvent and is extracted by the solvent.
14. Method according to any one of embodiments 1 to 13, wherein said extractant is selected from the group comprising ketones, esters, alcohols, organic acids and water.
15. Method according to any one of embodiments 1 to 14, wherein said extractant is selected from the group comprising acetone, ethyl acetate, ethanol.
16. Method according to any one of embodiments 1 to 15, wherein said extractant is a non-solvent for the target polymer
17. Method according to any of the embodiments 1 to 16, wherein the method for removing additives and/or impurities is for recycling plastic waste comprising a thermoplastic target polymer and/or in step i-5) plastic waste comprising the thermoplastic target polymer is at least partially dissolved in the solvent, in particular using an agitator and/or a heating system.
18. Method according to any of the embodiments 1 to 17, wherein during dissolving the thermoplastic target polymer in a solvent (step i-5), the suspension or solution/ melt has an average temperature of at least 50°C, in particular of at least 80°C.
19. Method according to any of the embodiments 1 to 18, wherein during delivering said suspension or solution/mass/melt comprising said dissolved thermoplastic target polymer to an extruder (step ii-5) the suspension or solution/ melt has a delivery temperature which corresponds at least to the temperature of the solvent separation.
20. Method according to any of the embodiments 1 to 19, wherein during extrusion of said thermoplastic target polymer (step iv-5) the suspension or solution/ melt has an average temperature of at least 150°C, in particular of at least 180°C, more preferred in particular of at least 200°C.
21. Method according to any of the embodiments 1 to 20, wherein the thermoplastic polymer is a polyolefin, in particular low-density polyethylene (LDPE).
22. Method according to any of the embodiments 1 to 21, wherein the membrane is selected from a group comprising of polyamide membrane, polyvinylidene difluoride membrane, polyethersulfone membrane, polysulfone membrane, polydimethylsiloxane membrane, polypropylene membrane.
23. Method according to any of the embodiments 1 to 22, wherein the sieve is selected from a group comprising of metal, ceramic.
24. Method according to any of the embodiments 1 to 23, wherein the mesh size of said sieve is < 50 µm to create high pressure loss, so that only liquid media passes the sieve, but not the polymer melt/solution/mass.
25. Method according to any one of embodiments 1 to 24, wherein steps ii-5) and iii-5) are performed in a carrousel extractor.
26. Method according to any one of embodiments 1 to 25, wherein steps ii-5) and iii-5) are performed in a mixer-settler extractor.
27. Method according to any one of embodiments 1 to 26, wherein said plastic material is selected from the group comprising post-consumer use polymers, post-industrial use polymers and combinations thereof.
28. Method according to any one of embodiments 1 to 27, wherein said thermoplastic target polymer is a thermoplastic polymer.
29. Method according to any one of embodiments 1 to 28, wherein said thermoplastic target polymer is selected from the group comprising polyolefins, polyamide (PA) and combinations thereof.
30. Method according to any one of embodiments 1 to 29, wherein said thermoplastic target polymer is low-density polyethylene (LDPE).
31. Method according to any one of embodiments 1 to 30, wherein said thermoplastic target polymer is polypropylene (PP).
32. Method according to any one of embodiments 1 to 31, wherein said thermoplastic target polymer is polyamide (PA).
33. Method according to any of the embodiments 1 to 32, wherein the solvent used in step i-5) is a single organic solvent or a mixture of solvents comprising at least one organic solvent.
34. Method according to any one of embodiments 1 to 33, wheren said solvent is selected from the group comprising n-alkanes with a length/number of C-atoms up to C12, iso-alkanes with a length/number of C-atoms up to C12, cyclic-saturated hydrocarbons with a length/number of C-atoms up to C12 for polyolefins, organic acids, inorganic acids, polyole, water for polyamides.
35. Method according to any one of embodiments 1 to 34, wherein said thermoplastic target polymer is low-density polyethylene (LDPE) and said solvent is n-heptane.
36. Method according to any one of embodiments 1 to 35, wherein said thermoplastic target polymer is polypropylene (PP) and said solvent is n-octane.
37. Method according to any one of embodiments 1 to 36, wherein said thermoplastic target polymer is polyamide (PA) and said solvent is propylenglycol.
38. Method according to any one of embodiments 1 to 37, wherein step iii-5) is conducted under temperature which is lower by more than 10, in particular by more than 5 than the boiling point of said solvent.
39. Method according to any one of embodiments 1 to 38, wherein step iii-5) is conducted under pressure which is lower than 6 bar, more preferably less than 2 bar, in particular at atmospheric pressure.
40. Method according to any of the embodiments 1 to 39, wherein the method is for recycling plastic waste and is carried out in a plastic waste recycling system according to embodiment 41.
41. Plastic waste recycling system, in particular for implementing the method according to any of the embodiments 1 to 40, comprising the following items:
   1) preferably a station that comprises a downsizing device for plastic waste, in particular a shredder;
   2) preferably a station for washing the downsized plastic waste;
   3) preferably a station that comprises a vessel, wherein the vessel comprises an agitator and/or a heating system;
   4) preferably a station that comprises a centrifuge for solid-liquid separation;
   5) preferably a station that comprises a filtration unit or evaporation unit;
   6) a station that comprises a plastic extruder for the production of polymer pellets, in particular wherein the plastic extruder has a heating unit or is connected to a heating unit, for heating the thermoplastic target polymer, in particular for implementing steps iii-5) and iv-5) as described above;
   wherein the plastic waste recycling system has a transfer system that transfers materials from each station to the next in the above listed order.

Within the scope of the invention, providing a plastic material or providing a fluidized form comprising said thermoplastic target polymer, in particular a solution, a suspension, a polymer gel, and polymer melt comprising said target polymer can be performed by a method comprising any one of the previous embodiments.

With the above context, the following consecutively numbered embodiments provide other specific aspects of the invention:
1. Method for recycling plastic material comprising at least one target polymer, wherein the method comprises the following dedusting steps:
   i-1) providing said plastic material, in particular plastic waste;
   ii-1) downsizing said plastic material;
   iii-1) classification of the downsized material obtained after step ii-1) by particle size and/or particle weight, in particular by sieving, or contacting of said downsized plastic material with airstream, preferably by means of passing said downsized plastic material through air counter-flow, or a combination thereof;
   wherein the downsized plastic material obtained after step iii-1) is essentially free of particulate matter, and wherein essentially free of particulate matter means that at least 99 weight% of particles < 300µm, in particular < 100 µm have been removed from the downsized plastic material.
2. Method according to embodiment 1 further comprising the following additional steps:
   iv-1) adding a solvent or a mixture of solvents to the material obtained after step iii-1) to obtain a solution or suspension comprising said target polymer, preferably using a heating system, wherein said target polymer is essentially soluble in said solvent or mixture of solvents.
3. Method according to embodiment 2 further comprising the following additional steps:
   v-1) preferably purifying said solution or suspension obtained after step iv-1), in particular by means of mechanical solid-liquid separation;
   vi-1) optionally, if the solution comprises at least one polymer originating from post-consumer plastic waste, adding a solution cleaning step for decolorization and an additional odor treatment step;
   vii-1) separating of said target polymer from said solution or suspension;
   viii-1) preferably degassing and/or extrusion of said target polymer.
4. Method for recycling plastic material comprising at least one thermoplastic target polymer, wherein the method comprises the following steps:
   i-2) providing a suspension or a solution comprising said thermoplastic target polymer, in particular by adding a solvent or a mixture of solvents to said plastic material, in particular plastic waste or pre-treated plastic waste, preferably using a heating system, wherein said thermoplastic target polymer is essentially soluble in said solvent or said mixture of solvents;
   ii-2) preferably purifying said solution or suspension, preferably by means of mechanical solid-liquid separation;
   iii-2) mixing a liquid extractant with said solution or suspension, preferably using a heating system, to produce a multiphasic system, preferably biphasic system, wherein said extractant is a non-solvent for the target polymer, wherein said solvent or said mixture of solvents is essentially immiscible with said extractant, and wherein said exctractant and said solvent or said mixture of solvents have essentially different densities;
   iv-2) separating the fraction comprising the thermoplastic target polymer from the fraction comprising the extractant.
5. Method according to embodiment 4, wherein the suspension or solution in step i-2) is the suspension or solution obtained by the method according to embodiment 2.
6. Method according to any one of embodiments 4 or 5 further comprising the following steps:
   v-2) separating said thermoplastic target polymer from the solution obtained after step iv-2);
   vi-2) preferably degassing and/or extrusion of said thermoplastic target polymer.
7. Method for recycling plastic material comprising at least one thermoplastic target polymer, wherein the method comprises the following steps:
   i-3) providing a suspension or a solution comprising said thermoplastic target polymer, in particular by adding a solvent or a mixture of solvents to said plastic material, in particular plastic waste or pre-treated plastic waste, preferably using a heating system, wherein said thermoplastic target polymer is essentially soluble in said solvent or said mixture of solvents;
   ii-3) preferably purifying said solution or suspension, preferably by means of mechanical solid-liquid separation;
   iii-3) adding a solid additive to said solution or suspension under stirring, in particular using an agitator, preferably using a heating system, wherein said solid additive is essentially insoluble in said solvent or said mixture of solvents.
8. Method according to embodiment 7, wherein the suspension or solution in step i-3) is the suspension or solution obtained by the method according to embodiment 2.
9. Method according to embodiment 7, wherein the suspension or solution in step i-3) is the suspension or solution obtained by the method according to any one of embodiments 4 or 5.
10. Method according to any one of embodiments 7 to 9 further comprising the following steps:
   iv-3) separating said thermoplastic target polymer comprising said additive by flash-evaporation of the mixture obtained in step iii-3);
   v-3) preferably degassing and/or extrusion of said target polymer.
11. Method for removing a solvent from a fluidized form comprising a thermoplastic target polymer, wherein the method comprises the following steps:
   i-4) providing said fluidized form;
   ii-4) preferably purifying said fluidized form, in particular by means of mechanical solid-liquid separation;
   iii-4) concentrating said fluidized form using a cross-flow filtration unit having a membrane, permeable for the solvent and impermeable for the thermoplastic target polymer.
12. Method according to embodiment 11, wherein said fluidized form in step i-4) is selected from the group comprising a solution, a suspension, a polymer gel, and polymer melt.
13. Method according to any one of embodiments 11 or 12, wherein said fluidized form in step i-4) is a suspension or solution comprising said target polymer.
14. Method according to embodiment 13, wherein said suspension or solution is the suspension or solution obtained by the method according to any one of embodiments 2, 7 or 8.
15. Method according to embodiment 13, wherein said suspension or solution is the suspension or solution obtained by the method according to any one of embodiments 4, 5 or 9.
16. Method according to any one of embodiments 11 to 15, further comprising the following steps:
   iv-4) degassing and/or extrusion of said thermoplastic target polymer.
17. Method for removing additives and/or impurities from a fluidized form comprising a thermoplastic target polymer while being processed in an extruder, wherein the fluidized form comprising a thermoplastic target polymer is subjected to a counter-stream of at least one extractant, wherein the method comprises the following steps:
   i-5) providing said fluidized form;
   ii-5) delivering said fluidized form to an extruder; wherein said extruder comprises a membrane or sieve, wherein the membrane or sieve is permeable for the extractant, solvent and/or lubricant and impermeable for the thermoplastic target polymer;
   iii-5) purifying said fluidized form by means of extraction using a counter-stream of at least one extractant and/or a process aid in said extruder,
   iv-5) degassing and/or extrusion of said thermoplastic target polymer.
18. Method according to embodiment 17, wherein said fluidized form in step i-5) is selected from the group comprising a solution, a suspension, a polymer gel, and polymer melt.
19. Method according to any one of embodiments 17 or 18, wherein said fluidized form in step i-5) is a suspension or solution comprising said target polymer.
20. Method according to embodiment 19, wherein said suspension or solution is the suspension or solution obtained by the method according to any one of embodiments 2, 7 or 8.
21. Method according to embodiment 17, wherein said fluidized form in step i-5) is the fluidized form obtained by the method according to any one of embodiments 11 to 14.
22. Plastic waste recycling system, in particular for implementing the method according to any one of embodiments 1 to 3, comprising the following items:
   1) a station that comprises a downsizing device for plastic waste, in particular a shredder, in particular for implementing step ii-1) as described above;
   2) a station that comprises an air classifier, in particular for implementing step iii-1) as described above;
   3) preferably a station for washing the downsized plastic waste;
   4) a station that comprises a vessel, wherein the vessel comprises an agitator and/or a heating system, in particular for implementing step iv-1) as described above;
   5) preferably a station that comprises a centrifuge for solid-liquid separation, in particular for implementing step v-1) as described above;
   6) a station that comprises a filtration unit or evaporation unit, in particular for implementing step vii-1) as described above;
   7) preferably a station that comprises a plastic extruder for the production of polymer pellets, in particular wherein the plastic extruder has a heating unit or is connected to a heating unit, for heating the thermoplastic target polymer, in particular for implementing step viii-1) as described above,
   wherein the plastic waste recycling system has a transfer system that transfers materials from each station to the next in the above listed order.
23. Plastic waste recycling system, in particular for implementing the method according to any one of embodiments 4 to 6, comprising the following items:
   1) preferably a station that comprises a downsizing device for plastic waste, in particular a shredder;
   2) preferably a station for washing the downsized plastic waste;
   3) a station that comprises a vessel, wherein the vessel comprises an agitator and/or a heating system, in particular for implementing step i-2) as described above;
   4) preferably a station that comprises a centrifuge for solid-liquid separation, in particular for implementing step ii-2) as described above;
   5) a station that comprises a mixer-settler unit or a carousel extractor, in particular for implementing steps iii-2) and iv-2) as described above;
   6) a station that comprises a filtration unit or evaporation unit, in particular for implementing step v-2) as described above;
   7) referably a station that comprises a plastic extruder for the production of polymer pellets, in particular wherein the plastic extruder has a heating unit or is connected to a heating unit, for heating the thermoplastic target polymer, in particular for implementing step vi-2) as described above;
   wherein the plastic waste recycling system has a transfer system that transfers materials from each station to the next in the above listed order.
24. Plastic waste recycling system, in particular for implementing the method according to any one of embodiments 7 to 10, comprising the following items:
   1) preferably a station that comprises a downsizing device for plastic waste, in particular a shredder;
   2) preferably a station for washing the downsized plastic waste;
   3) a station that comprises a vessel, wherein the vessel comprises an agitator and/or a heating system, in particular for implementing step i-3) as described above;
   4) preferably a station that comprises a centrifuge for solid-liquid separation, in particular for implementing step ii-3) as described above;
   5) a station that comprises a flash evaporation unit, in particular for implementing step iv-3) as described above;
   6) preferably a station that comprises a plastic extruder for the production of polymer pellets, in particular wherein the plastic extruder has a heating unit or is connected to a heating unit, for heating the thermoplastic target polymer, in particular for implementing step v-3) as described above;
   wherein the plastic waste recycling system has a transfer system that transfers materials from each station to the next in the above listed order.
25. Plastic waste recycling system, in particular for implementing the method according to any one of embodiments 11 to 16, comprising the following items:
   1) preferably a station that comprises a downsizing device for plastic waste, in particular a shredder;
   2) preferably a station for washing the downsized plastic waste;
   3) a station that comprises a vessel, wherein the vessel comprises an agitator and/or a heating system, in particular for implementing step i-4) as described above;
   4) preferably a station that comprises a centrifuge for solid-liquid separation, in particular for implementing step ii-4) as described above;
   5) a station that comprises a cross-flow filtration unit, in particular for implementing step iii-4) as described above;
   6) preferably a station that comprises a plastic extruder for the production of polymer pellets, in particular wherein the plastic extruder has a heating unit or is connected to a heating unit, for heating the thermoplastic target polymer, in particular for implementing step iv-4) as described above;
   wherein the plastic waste recycling system has a transfer system that transfers materials from each station to the next in the above listed order.
26. Plastic waste recycling system, in particular for implementing the method according to any one of embodiments 17 to 21, comprising the following items:
   1) preferably a station that comprises a downsizing device for plastic waste, in particular a shredder;
   2) preferably a station for washing the downsized plastic waste;
   3) preferably a station that comprises a vessel, wherein the vessel comprises an agitator and/or a heating system;
   4) preferably a station that comprises a centrifuge for solid-liquid separation;
   5) preferably a station that comprises a filtration unit or evaporation unit;
   6) a station that comprises a plastic extruder for the production of polymer pellets, wherein the fluidized form comprising a thermoplastic target polymer is subjected to a counter-stream of at least one extractant in said extruder, wherein said extruder comprises a membrane or sieve, wherein the membrane or sieve is designed to be permeable for the extractant, solvent and/or lubricant and impermeable for the thermoplastic target polymer; in particular wherein the plastic extruder has a heating unit or is connected to a heating unit, for heating the thermoplastic target polymer, in particular for implementing steps iii-5) and iv-5) as described above;
   wherein the plastic waste recycling system has a transfer system that transfers materials from each station to the next in the above listed order.
27. A product obtained by any of the methods according to any one of embodiments 1 to 21.

### Definitions

Listed below are definitions of various terms used to describe this invention. These definitions apply to the terms as they are used throughout this specification and claims unless otherwise limited in specific instances either individually or as part of a larger group. Unless defined otherwise all technical and scientific terms used herein generally have the same meaning as commonly understood by one of ordinary skill in the art to which this invention belongs.

As used herein the articles "a" and "an" refer to one or to more than one (i.e. to at least one) of the grammatical object of the article. By way of example, "an element" means at least one element, i.e. an element or more than one element. This applies in particular also for "a target polymer" and "a solvent" as discussed below.

As used herein the term "average temperature" refers to a temperature that is averaged over time, preferably over the duration of the corresponding step. In a continuous system the duration of a step refers to the average time of the waste material under the conditions as described for said step. There may be location dependent variations within the solvent that can be reduced by stirring. In said case the temperature should also be averaged over said locations to determine the average temperature. With sufficient stirring the average temperature usually is only location dependent to a small degree and the average temperature can be determined by measuring in one spot for the duration of a step.

As used herein the term "peak temperature" refers to a maximum temperature that is achieved during a step. It may be determined by continuously monitoring the temperature and selecting the maximum temperature. For example with a batchwise implementation of steps the temperature may drop, e.g. when cold plastic waste is inserted into the solvent. A heating system may heat the vessel to achieve said peak temperature before the solvent is lead to the next step. In a continuous system the temperature may be constant and there often is no difference between "average temperature" and "peak temperature". There also may be location dependent variations within the solvent and in said case the temperature may be averaged over said locations (not over time) to determine the peak temperature.

As used herein the term "elevated temperature" refers to a temperature which is higher than room temperature. A heating system may be used to achieve elevated temperatures.

As used herein the term "solvent" refers to a single solvent or a mixture of different solvents. A single solvent may facilitate recovery whereas a mixture may reduce the use of toxic solvents or accelerate dissolution of a polymer.

As used herein the term "target polymer" refers to a single polymer or a mixture of different polymers. Polymers also include copolymers and tblock polymers. Often a mixture of polymers cannot be avoided completely. Preferably the term "target polymer" refers to a single polymer or a mixture of different polymers that are dissolvable in a solvent and may be used for producing polymer pellets. In some instances "target polymer" refers to a mixture of one, two or three polymers as a major component, wherein impurities are possible that have a weight of less than 5 % by weight compared to the total weight of the target polymer. Furthermore, use of the term "target polymer" is to be understood in the above way also when "a target polymer", "the target polymer" or "said target polymer" is mentioned unless it is explicitly stated that it is only a single polymer or a mixture of different polymers, i.e. "a target polymer" is "at least one target polymer"; "the target polymer" is "the at least one target polymer" and "said target polymer" is "said at least one target polymer" unless stated otherwise. A non-target polymer may also be a polymer that is not dissolvable in the used solvent and it may be removed by solid-liquid separation.

As used herein the term "several" refers to two, three, four or more entities, preferably two or three entities.

As used herein the term "plastic waste" refers to waste comprising plastic. Preferably plastic waste is any substance that is discarded after primary use, and/or has been discarded, e.g. because it is defective. In some embodiments the "plastic waste" is solid. In some embodiments "plastic waste" refers to municipal solid waste, in particular comprising everyday items that are discarded by the public. In some embodiments "plastic waste" refers to post-consumer use polymers, post-industrial use polymers or combinations thereof.

As used herein the term "mixed plastic waste" refers to plastic waste containing different kinds of plastic objects. Often plastic is sorted before it is used, e.g. only plastic bags are provided or only plastic foils. This usually requires a sorting of plastic. In some instances mixed plastic waste is municipal plastic waste as obtained from households, i.e. plastic bags, plastic packaging, plastic tubes and such can be mixed. It was found that mixed plastic waste can be used to produce polymer in accordance with the invention without need of collection in groups of identical materials and/or objects.

As used herein the term "pre-treated plastic waste" refers to a plastic waste which has been treated by means of sorting, washing, downsizing and/or dedusting said plastic waste.

As used herein the term "downsizing" refers to shredding, cutting, slicing, ripping, shaving, tearing, slashing, carving, cleaving, dissevering, hacking, incising, bsevering, shearing, fragmenting, fraying, lacerating and grinding of said plastic material.

As used herein the term "particulate matter" refers to the dust released by downsizing said plastic waste, in particular by shredding of said plastic material. Said particulate matter comprises the particles with the particle size < 300µm, in particular the particles with the particle size < 100 µm. The wording "particulate matter" herein used is synonymous with the wording "dust" and is be used interchangeably. The wording "essentially free of particulate matter" is synonymous with the "dust-free" and is used interchangeably.

As used herein the term "essentially soluble" with respect to the target polymer refers to the solubility of said target polymer in said solvent or said mixture of solvents in an amount not less than 5 wt%, more preferably not less than 7 wt%, in particular not less than 10 wt%, with respect to the total weight of said solvent or mixture of solvents and the of polymer that is dissolved.

As used herein the term "essentially insoluble" with respect to the additive refers to the solubility of said additive in said solvent or said mixture of solvents an amount of less than 1 wt%, preferably less than 0,5 wt%, in particular less than 0,1 wt%, with respect to the total weight of said solvent or mixture of solvents and the of polymer that is dissolved.

As used herein the term "extractant" refers to a liquid which is a non-solvent for the target polymer and in which the undesired impurities have a substantially higher solubility than in said solvent. In some embodiments, the undesired impurities have at least 5 times, more preferably at least 10 times better solubility in said extractant than in said solvent.

As used herein the term "non-solvent" with respect to said extractant refers to the solubility of said target polymer in said extractant an amount of less than 1 wt%, in particular less than 0.5 wt%, with respect to the total weight of the extractant and the polymer that is dissolved.

As used herein the term "essentially immiscible" refers to the liquids that are substantially incapable of dissolving into each other and form a multiphasic system, in particular biphasic system, wherein each phase contains at least 90%, preferably at least 95%, more preferably at least 99.0%, in particular at least 99.5% of a single fluid The boundary between the phases is determined in particular by a visual inspection.

As used herein the term "essentially different densities" refers to liquids, wherein the densities of said liquids differ by more than 0,05 g/cm³, in particular by more than 0, 10 g/cm³.

As used herein the term "thermal stabilizers" refers to agents that are used to reduce the degrading effects of heat generated during processing of polymeric materials under severe conditions such as shearing, processing at higher temperatures or oxidation. Non-limiting examples of thermal stabilizers include sterically hindered phenols, phosphites, and hydroxylamines, in particular pentaerythritol tetrakis(3,5-di-tert-butyl-4-hydroxyhydrocinnamate) and tris(2,4-di-tert-butylphenyl)phosphite.

As used herein the term "light stabilizers" refers to agents that are used to reduce the degrading effects caused by exposure of polymeric materials to visible irradiation or UV-irradiation. Non-limiting examples of light stabilizers include triazines, benzotriazoles and hindered amines.

As used herein the term "flame returdants" refers to agents that are used to prevent or slow down flammability of polymeric materials.

As used herein the term "antistatic agents" refers to compounds which are used to reduce or eliminate buildup of static electricity of polymeric materials or their surfaces. Non-limiting examples of antistatic agents include disubstituted aliphatic amines, trisubstituted aliphatic amines or quaternary aliphatic ammonium salts.

As used herein the term "lubricants" refers to agents that are used to reduce friction between surfaces while processing polymeric materials. Non-limiting examples of lubricants comprise higher alkanes and saturated fatty acids. In particular, higher alkanes are non-branched hydrocarbons comprising from 20 to 40 carbon atoms. In particular, saturated fatty acids are represented by the formula CH₃(CH₂)ₙCOOH, wherein n is an integer from 10 to 20.

As used herein the term "slip agents" refers to agents that are used to reduce film's resistance to sliding over itself or parts of converting equipment. Non-limiting examples of slip agents include amides of fatty acids, in particular, oleamide.

As used herein the term "biocides" refers to agent which are used to kill or reduce the number of microorganisms and protect polymeric materials from infestation.

As used herein the term "polymer comprising said additive" refers to a polymer, wherein the additives are distributed within the polymer matrix. In particular said additives can be nearly equally dispersed throughout the polymer matrix.

As used herein the term "fluidized polymer comprising said polymer" relates to a material comprising said polymer which is in a fluid form. A fluid form is characterized by a viscosity of up to 50000 Pa · s. The fluidity of polymers is affected by many parameters and by the flow properties of polymers. In particular, fluidity is achieved by heating or melting said target polymer. In the context of the present invention the term "polymer melt" is used to refer to a molten polymer without any solvents. In some embodiments the fluidity is achieved by adding a solvent or mixture or solvents to said polymer in order to at least partially dissolve said polymer. The fluidity of said polymer may be impacted by the amount of the solvent added. For example, with a relatively low amount of solvent a polymer gel may be obtained, wherein the polymer networks are swollen in the added solvent or mixture of solvents. With a relatively high amount of solvent a nearly complete dissolution of said polymer may be achieved to obtain a solution or a suspension comprising said polymer. As used herein, the term "solution" refers to a clear liquid in which a polymer or a mixture of polymers is uniformly dispersed. As used herein the term "suspension" refers to a mixture of a liquid and a polymer or a mixture of polymers that contains insoluble or sparingly soluble particles that are larger than colloidal size.

As used herein the term "alkanes" refers to straight chain hydrocarbons having from 5 to 20 carbon atoms, typically from 5 to 12 carbon atoms. Examples include, but not limited to n-hexane, n-heptane, n-octane and n-nonane.

As used herein the term "iso-alkanes" refers to branched chain hydrocarbons having from 5 to 20 carbon atoms, typically from 5 to 12 carbon atoms. Examples include, but not limited to isooctane.

As used herein the term "cyclic alkanes" refers to cyclic, saturated hydrocarbons wherein each of the atoms forming the ring (i.e. skeletal atoms) is a carbon atom. Cyclic alkanes may be optionally substituted by an alkyl group having from 1 to 4 carbon atoms. Examples include, but not limited to cyclohexane, methylcyclohexane.

As used herein the term "ketones" refers to organic compounds having a carbonyl group linked to a carbon atom. Examples include, but not limited to acetone, butanone.

As used herein the term "organic acids" refers to organic compounds having a functional group of formula C(=O)OH. Examples include, but not limited to formic acid, acetic acid,.

As used herein the term "ester" refers to organic compounds having a functional group of formula C(=O)OR, wherein R represents an alkyl group. Examples include, but not limited to ethyl acetate, benzy lacetate.

The "number average molecular weight" is preferably the total weight of the respective polymer sample, e.g. the target polymer, divided by the number of polymer molecules in the sample. The "average molecular mass" may be determined according to ISO 16014-1:2012 and/or ISO 16014-2:2012, preferably by ISO 16014-1:2012.

As used herein the term "essentially perpendicular orientation" refers to an orientation that differs no more than 20°, in particular no more than 10°, preferably no more than 5°, from an exactly perpendicular orientation. As used herein the term "essentially parallel orientation" refers to an orientation that differs no more than 20°, in particular no more than 10°, preferably no more than 5°, from an exactly parallel orientation.

### Examples

### Example 1: Process for extraction of PE from plastic film waste comprising PE

i) Preparation of PE film waste by mechanical pretreatment including a washing step with water at room temperature
ii) Dissolultion of PE at 90°C in n-heptane in 60 min in stirred tank. For this step, the plastic film waste is treated in a stirred tank with the solvent n-heptane for 60 min.
iii) Pumping through a filter to separate non-dissolved parts. In this step, the solution which has been generated in step ii) comprising solvent, dissolved PE and (Other, please define) is pumped though a filter (which kind of filter, please define), wherein the dissolved parts are cut-off.
iv) Adding pre-heated ethylacetate as extractant, that no polymer will be precipitated. For this step pre-heated ethylacetate is added in order to extract PE from the filtered solution resulting from step iii) at a temperature of at least 95°C, better 110°C, ideally 125°C.
iii) If extracting agent is used in the extruder, at least one degassing zone must follow to separate it.

### Example 2

According to this example plastic waste is provided that comprises 98 wt% transparent foil, 2 wt% colored foil, 4 wt% HDPE-Foil, and less than 0,2 wt% of metal and wood (based on total weight of solid content). The transparent foil and colored foil largely comprises LDPE. It is shredded and optionally washed and then inserted into a solvent of heptane at an average temperature of 85 to 95 °C for 60 min resulting in a suspension or solution comprising dissolved LDPE. Afterwards undissolved components of said suspension are removed by mechanical solid-liquid separation in a centrifuge. Cross-flow filtration using a membrane with a pore size of 180 kDa made out of polysulfone forms a feedstock comprising LDPE. Said feedstock may have a gel-like consistency. It is degassed and extruded resulting in LDPE polymer pellets.

### Example 3

Example for a method for recycling plastic material comprising/ combining dust-free size reduction of plastic waste and a solvent-based extraction of a thermoplastic target polymer from a suspension or a solution, wherein a cross-flow filtration unit having a membrane is used. The following steps are performed:
- Shredding of a PE/PA-multilayer (20-90 wt% PE, mean value 70%) material from post-industrial source with a sieve size of 20 mm
- Using air classifier to classify the downsized material stream into coarse product (>25 mm), aimed product and fine product (<100µm) to have a aimed product rate of 95wt% and a quality rate of 99,9%, so less than 0, 1wt% coarse and fine material in
- Dosing flakes into a n-heptane solvent bath to achieve a 5wt% solution knowing rate of PE in input, where the solvent bath is under temperature at 90 °C
- Separating dissolved polymer and non-dissolved PA-flakes with a decanter centrifuge
- Adding Ethyl Acetate as polar extractant, that isn't solvent for PE with 50wt% to achieve a 10wt% polymer solution counting solvent/non-solvent system together
- To reduce solvent content increase pressure of the solution up to 10 bar and press it through a membrane unit, applying a Polyethersulfone-membrane with a pore size >0,1 µm to enable micro filtration
- Solution with reduced solvent content (50wt%) is extrudes in a twin-screw de-gassing extruder with a melt filtration unit. At the end of the extruder there is a underwater pelletizing system to achieve polymer pellets as a final product
- Polyamide-flakes are directly extrudes in a twin-screw degassing extruder with melt filtration and underwater pelletizing system,

### Example 4

Example for a method for recycling plastic material comprising/ combining dust-free size reduction of plastic waste and a solvent-based extraction of a thermoplastic target polymer from a suspension or a solution, wherein a cross-flow filtration unit having a membrane is used, wherein a fluidized form comprising a thermoplastic target polymer is subjected to a counter-stream of at least one extractant. The following steps are performed:
• Shredding of a PE/PA-multilayer (20-90 wt% PE, mean value 70%) material from post-industrial source with a sieve size of 20 mm
• Using air classifier to classify the downsized material stream into coarse product (>25 mm), aimed product and fine product (<100µm) to have a aimed product rate of 95wt% and a quality rate of 99,9%, so less than 0, 1wt% coarse and fine material in
• Dosing flakes into a n-heptane solvent bath to achieve a 10wt% solution knowing rate of PE in input, where the solvent bath is under temperature at 90 °C
• Separating dissolved polymer and non-dissolved PA-flakes with a decanter centrifuge
• To reduce solvent content increase pressure of the solution up to 10 bar and press it through a membrane unit, applying a Polyethersulfone-membrane with a pore size >0,1 µm to enable micro filtration
• Solution with reduced solvent content (50wt%) is extrudes in a twin-screw de-gassing extruder with a melt filtration unit. At the end of the extruder there is a underwater pelletizing system to achieve polymer pellets as a final product
• To extract impurities and strip solvent, ethyl acetat as a polar is dosed in counter-stream from the outlet of PE. Dosing of extractant is in a range of 05wt% regarding polymer content.
▪ Polyamide-flakes are directly extrudes in a twin-screw degassing extruder with melt filtration and underwater pelletizing system

### Example 5

Example for a method for recycling plastic material comprising/ combining dust-free size reduction of plastic waste and a solvent-based extraction of a thermoplastic target polymer from a suspension or a solution, wherein an additive is added to said solution or suspension under stirring, in particular using an agitator, preferably using a heating system.

The following steps are performed:
• Shredding of a PE/PA-multilayer (20-90 wt% PE, mean value PE 70%) material from post-industrial source with a sieve size of 20 mm
• Using air classifier to classify the downsized material stream into coarse product (>25 mm), aimed product and fine product (<100µm) to have a aimed product rate of 95wt% and a quality rate of 99,9%, so less than 0, 1wt% coarse and fine material in
• Dosing flakes into a n-heptane solvent bath to achieve a5wt% solution knowing rate of PE in input, where the solvent bath is under temperature at 90 °C
• Separating dissolved polymer and non-dissolved PA-flakes with a decanter centrifuge
• Adding Ethyl Acetate as polar extractant, that isn't solvent for PE with 50wt% to achieve a 10wt% polymer solution counting solvent/non-solvent system together
• Buffer polymer solution under temperature in stirred tank and add 100 ppm primary and 100 ppm secondary thermal stabilizer under intensive stirring for 5 min to disperse the non- dissolvable additives by 99%, that means in 99% of the vessel increment the same concentration could be found.
• Applying a 2-staged flashing-process with 1. Stage 200°C and 20bar and 160°C and 15 bar
▪ Solution with reduced solvent content (50wt%)is extrudes in a twin-screw de-gassing extruder with a melt filtration unit. At the end of the extruder there is a underwater pelletizing system to achieve polymer pellets as a final productPolyamide-flakes are directly extrudes in a twin-screw degassing extruder with melt filtration and underwater pelletizing system

### Example 6

Example for a method for recycling plastic material comprising/ combining dust-free size reduction of plastic waste and a solvent-based extraction of a thermoplastic target polymer from a suspension or a solution, wherein a fluidized form comprising a thermoplastic target polymer is subjected to a counter-stream of at least one extractant, wherein an additive is added to said solution or suspension under stirring, in particular using an agitator, preferably using a heating system, wherein a cross-flow filtration unit having a membrane is used.

The following steps are performed:
- Shredding of a PE/PA-multilayer (20-90 wt% PE, mean value PE 70%) material from post-industrial source with a sieve size of 20 mm
- Using air classifier to classify the downsized material stream into coarse product (>25 mm), aimed product and fine product (<100µm) to have a aimed product rate of 95wt% and a quality rate of 99,9%, so less than 0, 1wt% coarse and fine material in
- Dosing flakes into a n-heptane solvent bath to achieve a 10wt% solution knowing rate of PE in input, where the solvent bath is under temperature at 90 °C
- Separating dissolved polymer and non-dissolved PA-flakes with a decanter centrifuge
- Buffer polymer solution under temperature in stirred tank and add 100 ppm primary and 100 ppm secondary thermal stabilizer under intensive stirring for 5 min to disperse the non- dissolvable additives by 99%, that means in 99% of the vessels increment the same concentration could be found
- To reduce solvent content increase pressure of the solution up to 10 bar and press it through a membrane unit, applying a Polyethersulfone-membrane with a pore size >0,1 µm to enable micro filtration
- Solution with reduced solvent content (50wt%)is extrudes in a twin-screw de-gassing extruder with a melt filtration unit. At the end of the extruder there is a underwater pelletizing system to achieve polymer pellets as a final product
- To extract impurities and strip solvent, ethyl acetat as a polar is dosed in counter-stream from the outlet of PE. Dosing of extractant is in a range of 05wt% regarding polymer content.
- Polyamide-flakes are directly extrudes in a twin-screw degassing extruder with melt filtration and underwater pelletizing system

### Example 7

### Tested membranes

The polyvinylidene difluoride (PVDF) membrane from Carl Roth, the polyethersulfone (PES) MF membrane from Millipore, and the polyamide (PA) membrane from Whatman were used.

### Concentrating the LDPE solution

The LDPE solutions in methylcyclohexane (2 mL) were filtered in various membrane reactors with the selected membranes. The temperature control (95 ° C.) was carried out by means of a suitably heated water bath into which the reactor was immersed. The filtration time was 1 hour and the pressure (nitrogen) applied was 5 bar. After one hour, the residual concentration of the solvent in the retentate was determined and the concentration of the solution was calculated. The results for to wt% LDPE solutions are shown in Table 1.

**Table 1. Results of concentrating the 10 wt% LDPE solutions**

| Membrane (+ modification) | Final concentration of the LDPE solution in the retentate [% by weight] |
|---|---|
| PA | 26 ± 2 |
| PVDF | 27 ± 3 |
| PES | 38 ± 1 |

The results show that a starting 10% LDPE solution can be concentrated to a final concentration of up to 38%.

In addition, the filtration experiments with LDPE solutions with a lower concentration (2 or 5% by weight) were carried out using the membranes. The results are summarized in Table 2.

**Table 2. Results of concentrating the 10 wt%, 5 wt% and 2wt% LDPE solutions**

| Membrane | Final concentration of the LDPE solution in the retentate [% by weight] | | |
|---|---|---|---|
| | Start conc. 10% by weight | Start conc. 5% by weight | Start conc. 2% by weight |
| PA | 26 | 13 | 11 |
| PVDF | 27 | 24 | 28 |
| PES | 38 | 39 | 20 |

The molar mass distributions of the retentates and the filtrates of the starting 5 wt% LDPE solutions were determined by high-temperature gel permeation chromatography (Agilent Technologies, USA). The system was equipped with two PLgel 10 µm Mixed B and one PLgel 10 µm Mixed B LS columns. Detection was carried out using an RI or light scatter detector (15° and 90° relative to the incident light). Trichlorobenzene was used as the solvent. The temperature of the measuring system was 120 °C. The results are summarized in Table 3.

**Table 3. GPC results of the concentrated 5% LDPE solutions.**

| | Signal ratio of the LDPE fractions | | | |
|---|---|---|---|---|
| Membrane | 1800 kDa | 1000 kDa | 400 kDa | < 100 kDa |
| PA - retentate | 1 | 3 | 11 | 0 |
| PA - filtrate | 0 | 1 | 5 | 2 |
| PVDF - retentate | 1 | 3 | 9 | 0 |
| PVDF - filtrate | 0 | 1 | 3 | 1 |
| PES - retentate | 1 | 4 | 15 | 0 |
| PES - filtrate | 0 | 1 | 2 | 1 |

### Brief Description of the Drawings

Figure 1 schematically shows the stages of the method of pre-treatment and solvent-based recycling of plastic material according to the invention.
Figure 2 shows separation of the fraction comprising the target polymer from the fraction comprising the extractant in a settler 203. The mixture is transferred from a mixer 201 to a settler 203 in the form of emulsion 202. The heavy phase comprising the target polymer 205 and light phase liquids 204 are separated by gravity. At the end of the settler two individual weirs are located to separately collect the fraction comprising the target polymer and the fraction comprising the extractant.
Figure 3 shows separation of the fraction comprising the target polymer from the fraction comprising the extractant in a mixer-settler 301. The heavy phase comprising the target polymer 303 and light phase liquids 302 are separated by gravity. At the end of the settler two individual weirs are located to separately collect the fraction comprising the target polymer and the fraction comprising the extractant.
Figure 4 shows separation of the fraction comprising the target polymer from the fraction comprising the extractant in a carrousel extractor. The carousel extractor consists of a rotating sectioned cylinder 401 and rotary feeder 407. The solution comprising target polymer 402 is admitted through an inlet 403 into a chamber 410 and an extractant 404 is admitted into a chamber at one or several locations. The material is transported continuously and the extractant flows through the chambers. The extractant passes through the material in the chamber removing impurities from the material and then runs off through the bottom wall 405 underneath the rotor into a collecting chamber from where it is removed. The fraction comprising the target polymer 408 runs off through the outlet 406 into a collecting chamber 409.

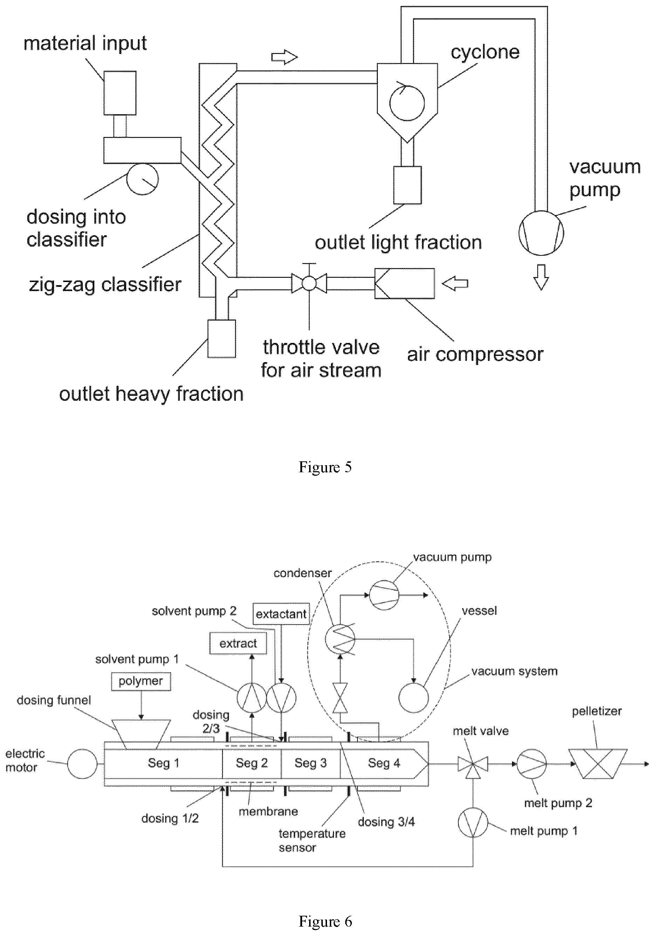

Figure 5 shows an air classifier in detail.
Figure 6 shows an extruder with an integrated membrane, which can be used for removing additives and/or impurities from a fluidized form comprising a thermoplastic target polymer. The vacuum pump is used to establish a reduced pressure in Segment 4. Granulates comprising the thermoplastic target polymer or a solution or a suspension comprising the thermoplastic target polymer is transferred to the extruder via the dosing funnel. Extrusion is started and the thermoplastic target polymer is melted within Segment 1. When the melt reaches Segment 2, solvent pump 2 is switched on to transfer an extractant or a mixture of an extractant and a solvent to the extruder. The melt and the extractant are mixed in Segment 3. The 3-way melt valve is opened to the position which enables transporting the mixture to melt pump 1. Melt pump 1 is switched on to transfer the mixture into Segment 2. Solvent pump 1 is switched on to transport the extract via the membrane out of the extruder. The valve of the vacuum system is opened to enable degassing the melt in Segment 4. The 3-way-melt valve is switched to the position which enables transporting the melt to melt pump 2. Melt pump 2 is switched on to transport the melt to the pelletizing unit.

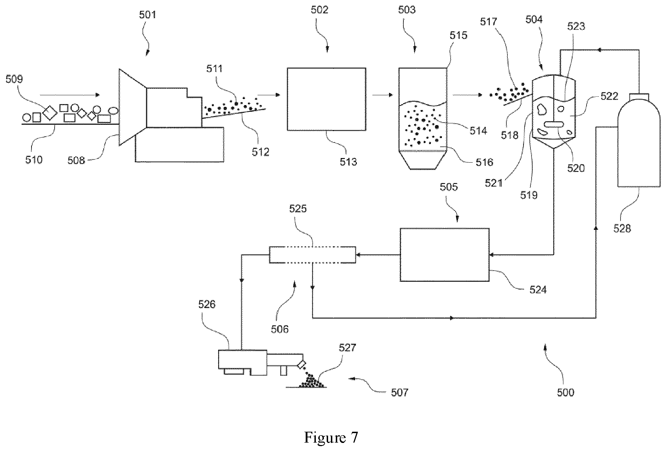

Figure 7 shows a plastic waste recycling plant 500 comprising several stations. The plastic waste recycling plant is only a possible implementation for the method. Also plastic production plants for producing polymers by polymerization may use the described method for solvent-based recycling a plastic material comprising at least one target polymer with an integrated extraction step. A shredding device 508 for plastic waste 509 is comprised in a first station 501. Said plastic waste may be transported by a first conveyor belt 510 into the shredding device 508 and by a second conveyor belt 512 shredded plastic wastes 511 may be transported out of the shredding device 508. An air classifier 513 is comprised in a second station 502. The shredded plastic waste 511 is transported into the air classifier 513. Preferably in some embodiments the plastic waste recycling plant 500 comprises a third station 503 for washing the air-classified plastic waste 514. Said third station 503 may comprise a container 515 with a washing liquid 516 such as water, wherein air-classified plastic waste 514 is purified. The purified shredded plastic waste 517 may be transported, e.g. by another conveyor belt 518, to a forth station 504 comprising a vessel 519, wherein the vessel 519 comprises an agitator 520 and/or a heating system 521, e.g. as part of the vessel 519. In some embodiments the air-classified plastic waste 514 is directly transported from the second station 502 to the forth station 504. The forth station preferably contains a solvent 522, wherein the target polymer is dissolved in said solvent thus forming a solution or a suspension 523. A fifth station 505 may comprise a centrifuge 524 for solid-liquid separation. A sixth station 506 comprises a filtration or evaporation unit 525. In some embodiments a seventh station 507 that comprises a plastic extruder 526 for the production of polymer pellets 527. As discussed above the plastic waste recycling plant has a transfer system that transfers materials from each station to the next in the above listed order. Often said transfer system is a combination of conveyor belts and fluid pipes depending on the consistency of the transported material. In some embodiments the solvent from the sixth station 506 is recycled for providing a suspension for reuse using a recycling system 528.

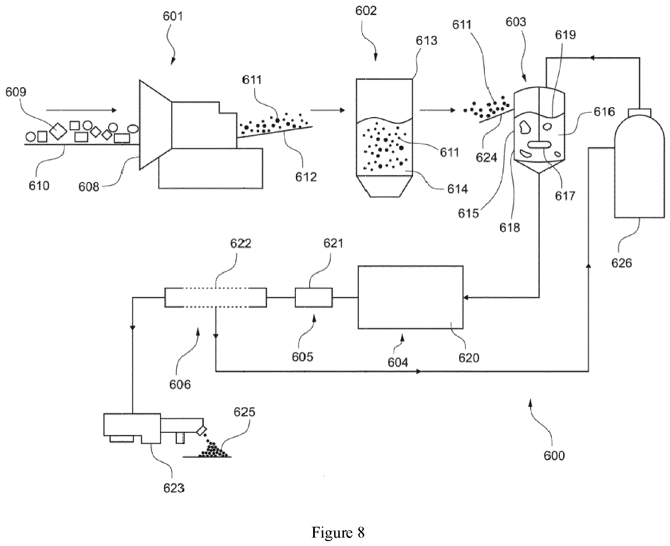

Figure 8 shows a plastic waste recycling plant 600 comprising several stations. The plastic waste recycling plant is only a possible implementation for the method. Also plastic production plants for producing polymers by polymerization may use the described method for solvent-based recycling a plastic material comprising at least one target polymer with an integrated extraction step. Preferably a shredding device 608 for plastic waste 609 is comprised in a first station 601. Said plastic waste may be transported by a first conveyor belt 610 into the shredding device 608 and by a second conveyor belt 612 shredded plastic wastes 611 may be transported out of the shredding device 608. Preferably in some embodiments the plastic waste recycling plant 600 comprises a second station 602 for washing the shredded plastic waste 611. Said second station 602 may comprise a container 613 with a washing liquid 614 such as water, wherein shredded plastic waste 611 is purified. The purified shredded plastic waste 611 may be transported, e.g. by another conveyor belt 624, to a third station 603 comprising a vessel 618, wherein the vessel 618 comprises an agitator 617 and/or a heating system 615, e.g. as part of the vessel 618. In some embodiments the shredded plastic waste 611 is directly transported from the first station 601 to the third station 603. The third station preferably contains a solvent 616, wherein the target polymer is dissolved in said solvent thus forming a solution or a suspension 619. A fourth station 604 may comprise a centrifuge 620 for solid-liquid separation. A fifth station 505 comprises a mixer-settler unit or a carousel extractor 621. A sixth station 606 comprises a filtration or evaporation unit 622. In some embodiments a seventh station 607 that comprises a plastic extruder 623 for the production of polymer pellets 625. As discussed above the plastic waste recycling plant has a transfer system that transfers materials from each station to the next in the above listed order. Often said transfer system is a combination of conveyor belts and fluid pipes depending on the consistency of the transported material. In some embodiments the solvent from the sixth station 606 is recycled for providing a suspension for reuse using a recycling system 626.

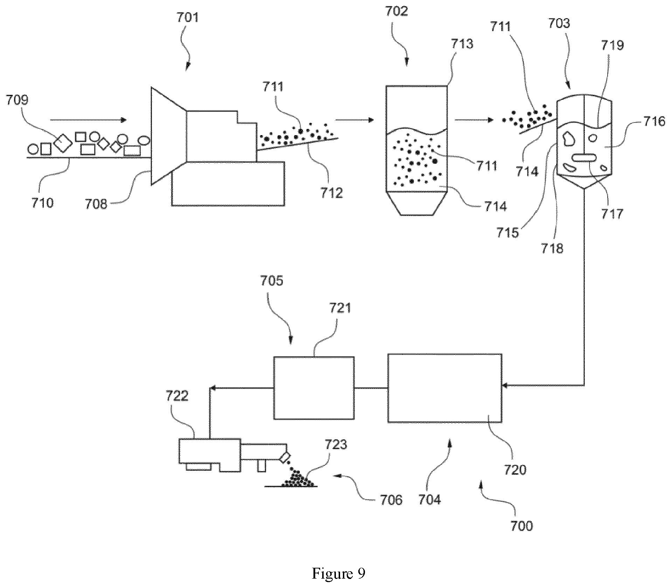

Figure 9 shows a plastic waste recycling plant 700 comprising several stations. The plastic waste recycling plant is only a possible implementation for the method. Also plastic production plants for producing polymers by polymerization may use the described method for solvent-based recycling a plastic material comprising at least one target polymer with an integrated extraction step. Preferably a shredding device 708 for plastic waste 709 is comprised in a first station 701. Said plastic waste may be transported by a first conveyor belt 710 into the shredding device 708 and by a second conveyor belt 712 shredded plastic wastes 711 may be transported out of the shredding device 708. Preferably in some embodiments the plastic waste recycling plant 700 comprises a second station 702 for washing the shredded plastic waste 711. Said second station 702 may comprise a container 713 with a washing liquid 714 such as water, wherein shredded plastic waste 711 is purified. The purified shredded plastic waste 711 may be transported, e.g. by another conveyor belt 724, to a third station 703 comprising a vessel 718, wherein the vessel 718 comprises an agitator 717 and/or a heating system 715, e.g. as part of the vessel 718. In some embodiments the shredded plastic waste 711 is directly transported from the first station 701 to the third station 703. The third station preferably contains a solvent 716, wherein the target polymer is dissolved in said solvent thus forming a solution or a suspension 719. A fourth station 704 may comprise a centrifuge 720 for solid-liquid separation. A fifth station 705 comprises a flash evaporation unit 721. In some embodiments a sixth station 706 that comprises a plastic extruder 722 for the production of polymer pellets 723. As discussed above the plastic waste recycling plant has a transfer system that transfers materials from each station to the next in the above listed order. Often said transfer system is a combination of conveyor belts and fluid pipes depending on the consistency of the transported material.

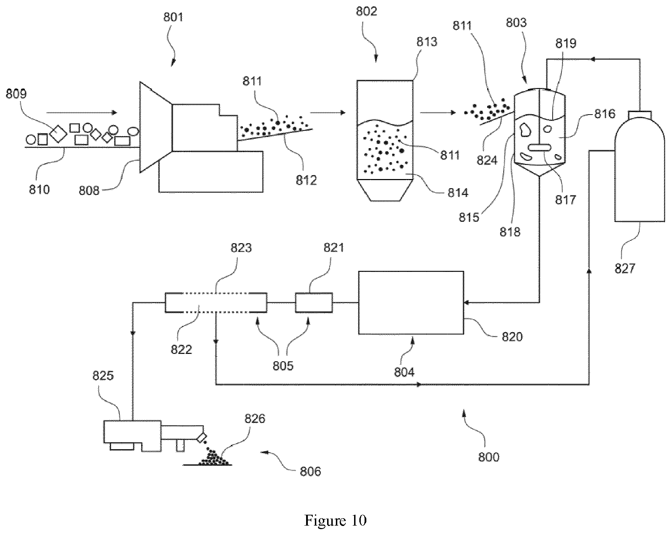

Figure 10 shows a plastic waste recycling plant 800 comprising several stations. The plastic waste recycling plant is only a possible implementation for the method. Also plastic production plants for producing polymers by polymerization may use the described method for solvent-based recycling a plastic material comprising at least one target polymer with an integrated extraction step. Preferably a shredding device 808 for plastic waste 809 is comprised in a first station 801. Said plastic waste may be transported by a first conveyor belt 810 into the shredding device 808 and by a second conveyor belt 812 shredded plastic wastes 811 may be transported out of the shredding device 808. Preferably in some embodiments the plastic waste recycling plant 800 comprises a second station 802 for washing the shredded plastic waste 811. Said second station 802 may comprise a container 813 with a washing liquid 814 such as water, wherein shredded plastic waste 811 is purified. The purified shredded plastic waste 811 may be transported, e.g. by another conveyor belt 824, to a third station 803 comprising a vessel 818, wherein the vessel 818 comprises an agitator 817 and/or a heating system 815, e.g. as part of the vessel 818. In some embodiments the shredded plastic waste 811 is directly transported from the first station 101 to the third station 803. The third station preferably contains a solvent 816, wherein the target polymer is dissolved in said solvent thus forming a solution or a suspension 819. A fourth station 804 may comprise a centrifuge 820 for solid-liquid separation. A fifth station 805 comprises a cross-flow filtration unit 822 having a membrane 823. There may also be a pre-treatment unit 821, which often also is a cross-flow filtration unit, however with a larger pore size. In some embodiments a sixth station 806 that comprises a plastic extruder 825 for the production of polymer pellets 826. As discussed above the plastic waste recycling plant has a transfer system that transfers materials from each station to the next in the above listed order. Often said transfer system is a combination of conveyor belts and fluid pipes depending on the consistency of the transported material. In some embodiments the solvent from the fifth station 805 is recycled for providing a suspension for reuse using a recycling system 827.

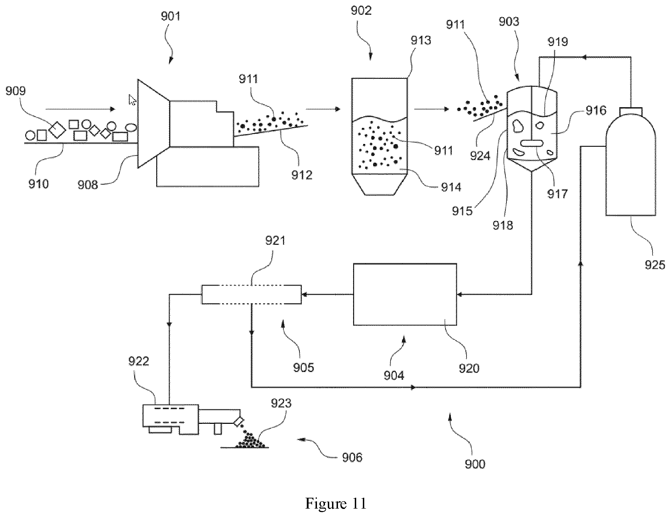

Figure 11 shows a plastic waste recycling plant 900 comprising several stations. The plastic waste recycling plant is only a possible implementation for the method. Also plastic production plants for producing polymers by polymerization may use the described method for solvent-based recycling a plastic material comprising at least one target polymer with an integrated extraction step. Preferably a shredding device 908 for plastic waste 909 is comprised in a first station 901. Said plastic waste may be transported by a first conveyor belt 910 into the shredding device 908 and by a second conveyor belt 912 shredded plastic wastes 911 may be transported out of the shredding device 908. Preferably in some embodiments the plastic waste recycling plant 900 comprises a second station 902 for washing the shredded plastic waste 911. Said second station 902 may comprise a container 913 with a washing liquid 914 such as water, wherein shredded plastic waste 911 is purified. The purified shredded plastic waste 911 may be transported, e.g. by another conveyor belt 924, to a third station 903 comprising a vessel 918, wherein the vessel 918 comprises an agitator 917 and/or a heating system 915, e.g. as part of the vessel 918. In some embodiments the shredded plastic waste 911 is directly transported from the first station 901 to the third station 903. The third station preferably contains a solvent 916, wherein the target polymer is dissolved in said solvent thus forming a solution or a suspension 919. A fourth station 904 may comprise a centrifuge 920 for solid-liquid separation. A fifth station 905 comprises a filtration or evaporation unit 921. In some embodiments a sixth station 906 that comprises a plastic extruder with an integrated membrane 922 for the production of polymer pellets 923. As discussed above the plastic waste recycling plant has a transfer system that transfers materials from each station to the next in the above listed order. Often said transfer system is a combination of conveyor belts and fluid pipes depending on the consistency of the transported material. In some embodiments the solvent from the fifth station 905 is recycled for providing a suspension for reuse using a recycling system 925.

The features of the invention disclosed in the above description, the claims and the drawing can be essential, both individually and in any combination, to implement the invention in its various embodiments.

## Claims

1. Method for recycling plastic material comprising at least one target polymer, wherein the method comprises the following dedusting steps:
i-1) providing said plastic material, in particular plastic waste;
ii-1) downsizing said plastic material;
iii-1) classification of the downsized material obtained after step ii-1) by particle size and/or particle weight by contacting of said downsized plastic material with airstream or by a combination of sieving and contacting of said downsized plastic material with airstream.

2. Method according to claim 1, wherein said contacting of said downsized plastic material with airstream in step iii-1) is conducted by means of passing said downsized plastic material through air counter-flow.

3. Method according to claim 2, wherein the direction of the air counter-flow is counter-current to the direction of the flow of the downsized plastic material that is provided to the air classifier.

4. Method according to claim 2 or 3, wherein the duration of said contacting is up to 60 seconds, preferably up to 30 seconds.

5. Method according to any one of claims 1 to 4, wherein the downsized plastic material obtained after step iii-1) is essentially free of particulate matter, and wherein essentially free of particulate matter means that at least 99 weight% of particles < 300µm, in particular < 100 µm have been removed from the downsized plastic material.

6. Method according to any one of claims 1 to 5, wherein said obtained material has particle size distribution from 1 mm to 25 mm, preferably 100 µm to 25 mm, in particular 10 µm to 25 mm.

7. Method according to any one of claims 1 to 6, further comprising the following steps:
iv-1) adding a solvent or a mixture of solvents to the material obtained after step iii-1) to obtain a solution or suspension comprising said target polymer, preferably using a heating system, wherein said target polymer is essentially soluble in said solvent or mixture of solvents.

8. Method according to claim 7, further comprising the following steps:
v-1) preferably purifying said solution or suspension obtained after step iv-1), in particular by means of mechanical solid-liquid separation;
vi-1) optionally, if the solution comprises at least one polymer originating from post-consumer plastic waste, adding a solution cleaning step for decolorization and an additional odor treatment step;
vii-1) separating of said target polymer from said solution or suspension;
viii-1) preferably degassing and/or extrusion of said target polymer.

9. Method according to any one of claims 1 to 8, wherein said target polymer is a thermoplastic polymer.

10. Method according to any one of claims 1 to 9, wherein said target polymer is selected from the group comprising polyolefins, polyamides and combinations thereof.

11. Method according to any one of claims 1 to 10, wherein said target polymer is selected from the group consisting of low-density polyethylene (LDPE), Polypropylene (PP), high-density polyethylene (HDPE), linear-low-density polyethylene (LLDPE) and polyvinyl chloride (PVC) or combinations thereof.

12. Method according to any one of claims 1 to 11, wherein step ii-1) is performed by a downsizing device selected from shredders, grinders, chippers, granulators, hammer mills, shear shredders and all-purpose shredders, preferably in a single-shaft shredder, in particular in a cooled single-shaft shredder.

13. Method according to any one of claims 1 to 12 wherein step iii-1) is performed in an air classifier, in particular in a zigzag air classifier.

14. Polymer material obtained by a method as defined in any one of claims 1 to 13.

15. Plastic waste recycling system, in particular for implementing the method according to any one of claims 1 to 13, comprising the following items:
1) a station that comprises a downsizing device for plastic waste, in particular a shredder, in particular for implementing step ii-1) as described above;
2) a station that comprises an air classifier, in particular for implementing step iii-1) as described above;
3) preferably a station for washing the downsized plastic waste;
4) a station that comprises a vessel, wherein the vessel comprises an agitator and/or a heating system, in particular for implementing step iv-1) as described above;
5) preferably a station that comprises a centrifuge for solid-liquid separation, in particular for implementing step v-1) as described above;
6) a station that comprises a filtration unit or evaporation unit, in particular for implementing step vii-1) as described above;
7) preferably a station that comprises a plastic extruder for the production of polymer pellets, in particular wherein the plastic extruder has a heating unit or is connected to a heating unit, for heating the thermoplastic target polymer, in particular for implementing step viii-1) as described above,
wherein the plastic waste recycling system has a transfer system that transfers materials from each station to the next in the above listed order.
